(19) Europäisches Patentamt
European Patent Office
Office européen des brevets

(11) Publication number : **0 580 397 A2**

# (12) EUROPEAN PATENT APPLICATION

(21) Application number : **93305681.4**

(51) Int. Cl.$^5$ : **H04M 3/56,** H04M 11/06

(22) Date of filing : **20.07.93**

(30) Priority : **23.07.92 GB 9215662**

(43) Date of publication of application :
**26.01.94 Bulletin 94/04**

(84) Designated Contracting States :
**DE ES FR GB IE IT NL**

(71) Applicant : **WORKSPACE TECHNOLOGIES LIMITED**
**Middlestead, Green Trees**
**Peppard, Oxon RG9 5EN (GB)**

(72) Inventor : **Thomas, Jeremy Peter Merion**
**Middlestead, Green Trees**
**Peppard, Oxon RG9 5EN (GB)**
Inventor : **Sanders, Ray**
**P.O. Box 24726**
**Los Angeles, California 90024 (US)**
Inventor : **Krechmer, Kenneth Robert**
**757 Green Road**
**Palo Alto, California 94303-3024 (US)**

(74) Representative : **Cross, Rupert Edward Blount et al**
**BOULT, WADE & TENNANT 27 Furnival Street**
**London EC4A 1PQ (GB)**

(54) **Conferencing apparatus.**

(57) Conferencing apparatus (1) comprises a display (7) to display conference parameters to conference participants and discrete input means (8) operable by respect of conference participants to modify variable conference parameters displayed on the display (8). Input means (8) includes means to input a signal which controls a displayed conference parameter which is indicative of a reaction of the respective conference participant to a conference event and/or the displayed conference parameters. The conferencing apparatus (1) is preferably used where conference participants are located remotely and connected together by at least one analogue telephone channel (6). In this arrangement modem means (2) is provided for each remote conference participant to provide data over voice modulation for the transmission and reception of data between conference participants.

EP 0 580 397 A2

The present invention generally relates to conferencing apparatus, and in particular to conferencing apparatus for use during a conference that makes use of electronic communication means.

The face to face meeting has historically been the primary mechanism used in all cultures to achieve consensus and to initiate and direct action. In such meetings, a number of practices are typically adopted to improve communication. Usually, an individual is selected to chair the meeting, managing its progress and, where the meeting is formal, determining who can speak. An individual may also be identified as the record keeper or secretary. The rules used to govern the conduct of the meeting may be formal or informal and include meeting management protocols, rules of interpersonal behavior and rules of verbal interaction. They govern communication between conference participants not only by speech, but also through facial expressions, body language and gestures and shared text and images.

Because of the cost and disruption of travel, many geographically distributed companies now use telephone voice conferencing. In this case, participants only have available the audio component of the meeting. They cannot see who is in the conference or benefit from the information available from the study of facial expression, body language and gestures. Unless the participants know each other, the identity of each speaker cannot be established unless each speaker identifies themselves before each utterance. Further, it is difficult for participants to decide when to start speaking, since there are no visual cues from the current speaker and they cannot signal their desire to speak. The result is often long periods of silence, or monopolization by the more forceful, or several people talking at once. The latter problem is complicated by the common use of speaker telephones which, to avoid acoustic feedback, usually cut out the loudspeaker when the participant is talking. In consequence, the participant may not be aware that they are "talking over" another participant. A further complication is that it is not possible to determine at any time who is in the conference. After an initial roll call, people may join the conference late, leave it, their connections may fail, or they may temporarily put the conference "on hold". Background noise is also a problem: unless participants mute their telephones when they are not speaking, the conference can be "flooded' with background sounds, including in some cases the music that is played when some telephones are put on hold. The conference service provider Darome Inc attempts to address this problem by having a trusted human operator monitor the voice conference equipped with the facility to mute disruptive connections. This service is labour intensive and so costly, and raises security issues. Finally, in the voice conference it is impossible to use the powerful tools of the shared whiteboard, blackboard, overhead transparencies or slides containing text and graphics, shared computer displays and other presentation material. Any such material to be studied must be communicated to participants prior to joining the conference and cannot be jointly revised during the meeting. In spite of these many difficulties, many US and multinational organizations use voice conferencing as an acceptable alternative to costly and inconvenient travel to face to face meetings.

Video conferencing represents an improvement over voice conferencing, at higher cost. It uses special high speed digital connections. Currently, participants travel to special rooms and sit in a line facing a TV camera and monitors, sometimes with some means to create text on screen for joint review. Because of the linear layout, participants in the same room are forced to view each other through the TV system rather than directly. This artificial mode of interaction is not satisfactory for many meetings and participants. Also, without much confusing zooming of the camera, it is difficult to move rapidly from a review of participants' overall posture to a close study of their faces. In consequence, important information is lost. Video conferencing nevertheless represents an improvement on voice conferencing albeit at considerably higher cost.

Face to face meetings and video conferences have further disadvantages when participants come from different cultural backgrounds. Unless each and every conference participant is familiar with the culture of every other conference participant, the information available from the study of facial expressions, body language and gestures may be at best missed or at worst misinterpreted. For example, in some cultures, agreement is signified by a shake of the head. In some languages the meaning of a sentence is not apparent until its final word is uttered, and so interruption is considered most impolite. In addition, some conference participants may experience difficulties in reading any shared text in that language if it is not their native language. The result is failure in communication and loss of the feedback as to whether the listeners understand or approve of the presentation being given by the conference participant or wish to speak. So, face to face meetings, voice conferences and video conferences have many operational problems and can be unproductive when used by groups drawn from a mixture of cultures.

Any teleconferencing system which is to effectively address these many problems must contain five components:

1. A meeting planning and scheduling capability to set up meetings, to transfer necessary files, documents and graphic images and to review and report on the results of meetings.
2. A meeting metaphor that allows the non-verbal components of the meeting to be clearly and accurately represented.

3. A meeting support capability to carry out the basic functions of the meeting such as making minutes or writing on a whiteboard.

4. A special conferencing communications protocol that allows every participant in the conference to interact with all other participants in "real time" (i.e., within 1 second or less).

5. A conferenced data exchange capability that allows sharing of all necessary text, data and graphics without disrupting the human interaction of the conference.

Some of these components are available in limited form in currently available teleconferencing systems. However, none provides a complete solution.

Meeting planning and scheduling. Meeting scheduling is facilitated by several existing products. Meeting Maker on the Apple (Trade Mark) personal computer (PC) operates over a local area network and provides a degree of automatic scheduling. Microsoft Windows (Trade Mark) for Workgroups allows users to manually schedule meetings using electronic mail over local and wide area networks.

Meeting metaphor. There is no known system that simulates a complete meeting metaphor including nonverbal components such as indications of comprehension, agreement with others in the meeting, requests to speak, or (current) presence or absence from the meeting.

Meeting support. Several systems provide text sharing and limited application sharing between connected PCs, but without integrated voice or meeting support:

- Sun Solutions ShowMe (Trade Mark) allows several users on a Local Area Network concurrently to mark up a shared whiteboard image, using different color inks to identify the different participants;
- Databeam (Trade Mark) supplies a range of data sharing products that allow users in different locations to share text and graphics in real time;
- GroupWare's Authors Face to Face and ArtiSoft's KIVA (Trade Marks) both allow documents to be shared over a Local Area Network in real time with voice carried over a separate phone connection. KIVA allows participants to signal a desire to speak and also to vote.

Two known systems combine some degree of integrated voice and shared text:

- the EEC MIAS research project, which uses a high speed digital network to transmit images and text between conferenced PCs;
- InSoft's Communique (Trade Mark). This runs on Sun workstations and shares audio, video, text and graphics between a group of people connected by a Local Area Network.

Conferenced Data Over Voice. An important aspect of conferencing is to provide text and image information for participants while participants are speaking. An efficient way to be able to simultaneously transmit voice and non-voice information among the participants is to transmit both kinds of information over the same communication links. Existing systems partially satisfy this need. In particular, the Optel Communications, Inc. modem, broadcasts data over a conferenced voice communication bridge.

The present invention provides conferencing apparatus comprising display means visible to at least one conference participant, display driving means adapted to display conference parameters on said display means, and discrete input means operable by respective conference participants to modify variable said conference parameters displayed on said display means, said input means including reaction input means to input a signal that controls a displayed conference parameter that is indicative of a reaction of the respective conference participant to a conference event and for the displayed conference parameters.

The term "conference parameter" is used in the specification to describe features of a conference which are openly true for all conference participants, and includes a) constant conference parameters that are constant for a particular conference, such as names of conference members, and b) variable conference parameters that can change during a conference such as reactions of conference participants to a conference event.

Preferably the said display means comprises discrete displays for respective conference participants.

The present invention also provides conferencing apparatus wherein at least one conference participant is located remotely and connected to the or each other conference participant by at least one communication channel, comprising display means including a discrete display for the or each remote conference participant; an associated respective display driver adapted to display conference parameters on a said display; discrete input means operable by respective conference participants to modify variable said conference parameters displayed on each said discrete display; modem means for the or each remote conference participant to provide data over voice modulation for the transmission and reception of data between the or each remote conference participant and other conference participants, said data defining at least modifications of said variable conference parameters.

In embodiments of the present invention said input means can include one or more of

a) reaction input means to input a signal that controls a displayed conference parameter which is indicative of a reaction of the respective conference participant to a conference event and/or display conference parameter. Such reaction input means preferably includes:

i) approval input means operative to input a signal that controls a displayed conference parameter indicative of the level of approval of the respective conference participant to a conference event, and
ii) comprehension input means operable to input a signal that controls a displayed conference parameter indicative of the level of understanding of the respective conference participant during a conference.

b) identification means to input a signal to identify the respective conference participant for display as a conference parameter.

c) speaker identification means to input a signal to control a displayed conference parameter to identify the conference participant speaking.

d) attendance input means to input a signal that controls a displayed conference parameter to indicate that the respective conference participant is temporarily absent.

e) request to speak input means to input a signal that controls a displayed conference parameter to identify that the respective conference participant wishes to speak.

f) voting input means operative by respective conference participants to inputting a voting decision. In this embodiment the display driving means is operative in response to said voting input means to display results of the ballot on said display means.

Preferably, said conferencing apparatus includes automatic identification means to identify conference participants automatically and to control said display driving means to indicate said identities as conference parameters on said display means.

In one embodiment of the present invention the apparatus includes a respective voice detector for each conference participant, and automatic speaker identification means responsive to said voice detector to identify automatically the conference participant who is speaking and control said display driving means to identify said conference participant on said display means.

In order to enable use of a standard Public Switched Telephone Network (PSTN) telephone system for a telephone conference, in one embodiment of the present invention the or each remote conference participant is connected by a single analogue telephone voice channel that is conveniently in turn connected to a multistation conference bridge. The or each modem means is arranged to provide data over voice modulation on said single analogue telephone voice channel. Such data over voice modulation can be achieved by using a pre-selected band of the analogue telephone voice channel for data, whilst the rest of the bandwidth is used for speech. This can readily be achieved according to one embodiment of the present invention when the or each modem means includes filter means operative to filter out the spectral portion of the voice signal to enable data transmission in said spectral portion, and to filter out received data in said spectral portion to enable clear voice reception at a receiving loudspeaker in a telephone handset for example.

In order to enable a preselected conference chairman to control the progress of a telephone conference, according to one embodiment of the present invention the remote conferencing apparatus includes discrete voice circuitry for the or each remote conference participant that includes a microphone. Dialogue control means is provided which is operable by a predetermined conference participant designated as a chairman to selectively disconnect the microphones of the conference participants. This allows a conference chairman to ensure that only a designated speaker is allowed to speak. This feature also reduces the level of background noise transmitted into the conference. Many conference participants who desire to speak can do so according to one embodiment of the present invention by using signaling means provided for the or each conference participant to enable the generation of a "request to speak" signal for transmission to the chairman. In one embodiment of the present invention the remote conferencing apparatus includes control circuitry provided at the chairman's location that is operative to generate an acknowledgment signal for transmission to a conference participant from whom said request to speak signal is received. The display driver at the chairman's location then being operative in response to reception of the request to speak signal to display the identity of the conference participant from whom the request to speak signal originated. In another embodiment, this queuing is carried out automatically, without the intervention of the chair. In still another embodiment, any participant can speak at any time and the system is restricted to displaying the identities of all current speakers.

In one embodiment of the present invention, participants are identified on the display as iconic representations of faces. In another embodiment, richer communication is provided between participants by identifying some or all participants by the display of previously input scanned photographs.

In order to provide richer communication between conference participants, according to one embodiment of the present invention the or each remote conference participant is further connected by a second communication channel for the transmission and reception of video images. In this embodiment the apparatus includes at each remote location video means to provide a video image of at least a speaking conference participant and video modem means to transmit and receive a video image to and from the or each remote conference participants. The display drivers in such an embodiment are adapted to display said video image on associated displays. Thus in this embodiment conference participants are able to listen to and to see a conference participant speaking and are able to communicate for instance their reactions to the presentation and also to indicate a desire to speak as a result of information imparted in the presentation.

Conveniently where there are two or more participants the system includes one or more conference bridges: devices which allow all stations to intercommunicate. For telephone conferences, conference participants dial into (or are dialed by) a conference bridge or by conferencing service using such a bridge.

In order to ensure good time-keeping and time-tabling of motions during the conference, the remote conferencing apparatus preferably includes clock means associated with the display means such that each discrete display has an associated discrete clock. The clock means is operative to count down from a preset conference time length and the display driving means is operative to display the count down on the display means. This gives a clear indication of the time left available on the telephone conferencing network for the present conference. Preferably, the apparatus includes warning means operative in response to said clock means to cause said display driving means to display a warning when said count down reaches a preset value. This feature allows for a conference chairman to program the warning means to indicate when for instance the time allocated for discussing a particular motion has run out.

To allow conference participants to share applications, for example for all participants to be able to see and update the same spreadsheet, the remote conferencing apparatus preferably includes keystroke and mouse movement means operative to capture and transmit a message in response to inputs from said input means. The display driving means is then operative to update on the display means both locally and for the other participants. This allows conference participants to use what can be termed a shared application.

During a telephone conference, it is also desirable for conference participants to be able to send one another confidential notes. This equates with the passage of a piece of paper from one conference participant to one or more others in a conference where all conference participants are at one location. To enable this, one embodiment of the present invention includes generating means operative to generate a text message in response to inputs from respective discrete input means operative by a conference participant. The text message is displayed by a respective display driver on an associated display. Message transmission means are provided that are operative to transmit said text message to one or more selected conference participants for display by a respective display driver on their associated displays only. In this arrangement means can also be provided to indicate to all other conference participants that a message has been transmitted from one conference participant to one or more others. This equates with conference participants present at a single location observing the passage of a piece of paper from one conference participant to one or more others. In one embodiment of the invention, a means of ensuring message security is provided whereby encryption means are included within the system so that a select number of (one or more) conference participants can pass messages between or among themselves without other participants being able to read the messages.

Another aspect of the present invention remote conferencing apparatus is provided for use where at least one conference participant is located remotely and is connected to the or each other conference participant by a single analogue telephone voice channel. At each remote conference participant's location there is provided modem means arranged to provide data over voice modulation on said voice channel for transmitting or receiving data to or from other conference participants, a display, input means operative to generate data for display, processing means to control said modem means to transmit said generated data and to receive data for display generated remotely, and a display driver arranged to display said generated data and/or said receive data on said display.

In embodiments of the present invention the processing means is responsive to control data to enable the input means to generate the data for display, or the processing means is responsive to a disabling signal to disable the input means from generating the data for display. Alternatively, the processing means is operative in response to an access demand signal from the input means to generate and transmit via said modem means a said disabling signal to the or each other conference participant and to enable said input means to generate said data for display.

Preferably the data for display is text and cursor generating means that is provided to enable conference participants to indicate positions in the display text.

Where conference participants require translations of the text, a translator can be provided at a location to receive the text, translate it and re-transmit it to selected conference participants.

In a further aspect of the present invention, remote conferencing apparatus comprises telephone apparatus for use when a plurality of telephone apparatuses are connected to each other by a single analogue telephone voice channels, said telephone apparatus comprising a microphone and remote mute means operable by a conference participant to selectively mute microphones of other telephone apparatuses being operated by the conference participants. Such muting can be provided by the transmission of a disabling signal that is responded to by respective microphones. In such an arrangement conference participants can have a unique identification code. The machine used by the conference chairman is designated as the "Master Station" for the conference. The Master Station preferably contains circuitry to determine and or control the identification codes of the conference participants. Control circuitry at the location of each of the conference participants then being operative to compare a stored identification code with the identification code transmitted from the Master Station in order to generate a signal to identify that the conference participant is present. Conveniently, such a present signal is transmitted in a time slot or poll sequence where the poll sequence corresponds to the sequence of the identification codes determined by the Master Station.

Preferably the apparatus includes input means at each remote location operable by a conference participant to generate a request to speak signal to be transmitted to the Master Station. The control circuitry of the Master Station is able to identify from whom the request to speak signal originated and generate an acknowledgment signal. The identity of the speaker requesting to speak can be added to a queue and the position in the queue of that person can be displayed to conference participants.

In a further aspect of the present invention remote conferencing apparatus is provided for use during the organizing of a conference between respective conference participants at remote locations connected together by a telephone channel, said apparatus comprising at each remote location a network connection to a public or private electronic mail network in the form of a local area network connection or a modem, memory means containing a diary for a prospective conference participant, input means for inputting information into said diary in said memory means and network connection control means responsive to said input means, network connection control means at a location being operative in response to a respective input means operable by a conference organizer to send mail to each prospective conference participant in turn to access respective diaries to determine a common date and time available for each prospective conference participant, and to make an entry temporarily in respective diaries if a common date and time is available, said input means at a prospective conference participant's location being operable by a prospective conference participant to generate an acceptance signal for transmission to the conference organizer; said network connection control means at the location of the conference organizer being operative to make a permanent entry in respective diaries if an acceptance signal is received from all said prospective conference participants.

Preferably the network connection control means at the conference organizer's location is operative in response to respective input means to transmit an agenda for the proposed conference to each prospective conference participant when a temporary entry is made in each diary.

The present invention also provides a method of improving communication between conference participants during a conference where at least one conference participant is at a remote location and is in audio or audio and video communication with the other conference participants using at least one common analogue telephone channel. The method comprises the repeated steps for the or each conference participant at a remote location, generating data representing conference parameters, said data being modifiable by a respective conference participant, transmitting said data using a telephone channel to the or each other conference participant, and receiving said data from the or each other conference participant, the transmitted and received conference parameters being displayed during transmission and reception.

The present invention provides a low cost conferencing apparatus that allows conference participants to have available comprehensive information on the other conference participants and their interaction within the conference.

The embodiments of the invention provide conferencing apparatus that allows for a designated chairman to be able to monitor and control the progress of a conference to more efficiently utilize conference time.

Further the conferencing apparatus according to embodiments of the invention allows for richer communication between conference participants who are communicating by telephone.

Embodiments of the present invention overcome the limitations of previous systems that attempt to facilitate conferences using communications instead of physical meetings. A number of novel capabilities not previously known are included and a range of capabilities that have been provided previously in isolation are integrated. The apparatus conveniently provides an ability for individuals who may be located at diverse locations to interact more effectively than they would if they were meeting face to face at a single location.

Broadly, the embodiment of the present invention described hereinafter is a unique combination of special software and communications hardware that integrates a standard personal computer with a single standard telephone line and standard conference bridges. The invention also optionally uses local area network or other communication facilities with suitable bridging capability. The embodiment of the invention includes a voice (and optionally video) conferencing capability that is enhanced by a unique data conferencing capability wherein each conference participant can be guaranteed that the participant can send data to and receive data from every other participant, at will, within one second.

Each station within a conference consists of a conventional telephone (with or without a video camera) and a standard personal computer that are connected together using the hardware of this invention. The connections use conventional telephone (or video) conferencing techniques or services. To this arrangement is added the capability of sending data simultaneously with the voice (or video) transmissions. The data transmission(s) are controlled in a unique manner using a "round-robin" concept whereby each participant is allowed to send data to every other participant in turn. Such data can range from brief reactions to conference speakers by participants, to factual (textual or graphical) information which one participant makes available to one or more other participants (a "caucus" feature).

In addition to enabling and controlling the basic conferencing capability, the software of the embodiment of the invention provides a "meeting metaphor". This capability includes alternate graphical representations of a meeting room in which conference participants are assigned physical locations and unique identities. Users employ this display for a number of useful purposes. For example, it clearly identifies the current speaker. It further allows participants to signify their desire to speak. Non-verbal feedback is made available to the current speaker (including the degree of comprehension and agreement of both individuals and the group as a whole.) Using the metaphor, the system shows when a specific individual leaves or joins the conference.

A number of options are included by which participants may signal their desire to speak. These range from a "free for all" where participants contend for recognition by the others to a "first come first served" protocol. Alternatively, a conference can be controlled by a conference chairman so that a participant can only speak when he is recognized by the chairman. Participants can at any time interrupt the current speaker on a point of order or point of information or for any other reason.

As a part of the meeting metaphor, the participants are shown grouped around a common work area on which such items as the meeting agenda and specific items of information can be posted. This area can be used as a conventional whiteboard to which any participant can write textual and graphical information using their computer keyboard and pointing device. The area can also be used to run applications such as spreadsheets jointly on the machines of all participants.

The embodiment of the invention includes a number of features that enhance the management of a conference. For example, the software allows for allocating specific amounts of time to each agenda item, tracking the amount of time actually taken on each item, and allowing participants to observe the expected time at which the current agenda item or the conference will conclude. The software allows either the chairman, or a designated conference secretary, to keep minutes of the meeting as it progresses and to allow participants to review them as they are generated. A chairman can call for votes on specific decision items. The system records the votes and makes the results available to the participants.

The software allows individual participants to pass notes and other information to one or more specifically designated recipients. Recipients can be designated during the conference by the person generating the note, or they can be identified as a group prior to convening the conference. In this manner, the system supports the idea of forming one or more "caucuses", sub-groups of the entire meeting. This capability allows, for example, members of one organization involved in a negotiation with another organization to reach a consensus position privately that can then be presented to the other organization.

The software also includes meeting planning and scheduling capability. This allows coordination of the schedules of proposed meeting participants, who may be in different time zones, and the distribution (electronically) of relevant material (including material generated at prior conferences) before convening the conference itself. The system simplifies the following up of action items that result from a conference. This meeting set-up and follow-up capability uses available private or public electronic mail services for data transfer.

The system is designed to enable users who are not "computer literate" to use it effectively without a long learning period. A user can exploit most features of the system using only a pointing device such as a computer mouse or pen. In addition, the system supports use of a keyboard as an input device for composing and sending notes, writing on the whiteboard and so on in a manner that requires only limited keyboard skills.

Examples of the present invention will now be described with reference to the drawings, in which:-

Fig. 1A is an illustration of remote conferencing apparatus connected to an internal modem board suitably modified to include a connection for an external telephone instrument for use during a telephone conference according to one embodiment of the present invention;

Fig. 1B is an alternative realization in which the remote conferencing apparatus includes a video conferencing means in addition to the voice/data conference capability of Fig. 1A;

Fig. 2 is a block diagram of the embodiment illustrated in Fig. 1A;

Fig. 3 is a block diagram of a realization of a voice/data modem using a Digital Signal Processor;

Figs. 4A, 4B and 4C show schematically the connection of several stations in a conferencing arrangement according to different physical configurations;

Fig. 5A and 5B are timing diagrams of the two fundamental modes of operation of the data portion of one embodiment of the invention;

Fig. 6 illustrates the display the user sees when logging on to the system's software;

Fig. 7 illustrates the basic display in Out of Meeting mode;
Fig. 8 illustrates the Admin display;
Fig. 9 illustrates the display for updating the user Directory;
Fig. 10 illustrates the display for updating City and Country information;
Fig. 11 illustrates the display for the Group features;
Fig. 12 illustrates the display for the Calendar features;
Fig. 13 illustrates the display for the Actions features;
Fig. 14 illustrates the display to draft a meeting in the Set feature;
Fig. 15 illustrates the display to tentatively schedule a meeting in the Set feature;
Fig. 16 illustrates the display seen by a meeting invitee in the Set feature;
Fig. 17 illustrates the display to finally register a meeting in the Set feature;
Fig. 18 illustrates the display for the Papers feature;
Fig. 19 illustrates the display for defining an Agenda in the Papers or Set features;
Fig. 20 illustrates the display for defining documents for distribution in the Papers or Set features;
Fig. 21 illustrates the display at meeting Start for a meeting with 3 participants;
Fig. 22 illustrates the display for a meeting with 8 participants, after Start and before Order;
Fig. 23 illustrates the display for a meeting with 3 participants after the chair has called the meeting to Order;
Fig. 24 illustrates the display for a meeting with 5 participants after the chair has called the meeting to Order;
Fig. 25 illustrates the display showing feedback, queuing to speak, and timer options;
Fig. 26 illustrates the display for the Agenda feature;
Fig. 27 illustrates the display for the Minutes feature;
Fig. 28 illustrates the display for recording topic completion in the Agenda feature;
Fig. 29 illustrates the display for the Vote feature during the setting up of a ballot;
Fig. 30 illustrates the display for the Vote feature after a ballot;
Fig. 31 illustrates the display for the Note feature;
Fig. 32 illustrates the display for the Theatre feature;
Fig. 33 illustrates the display for the Import/Share feature.

## The Hardware

Referring to the drawings, Figs. 1A and 1B illustrate remote conferencing apparatus for use during a voice/data conference (Fig. 1A) or a video/voice/data conference (Fig. 1B) wherein at least one conference participant is located at a remote location and is in communication with the other conference participants by a single telephone voice channel, i.e. a single Public Switched Telephone Network (PSTN) line, or communication media suitable for voice or voice and video transmission. In the current embodiment of the present invention the apparatus comprises a computer 1 such as an IBM (Trade Mark) compatible personal computer. For the voice version of the invention as shown in Fig. 1A, a Voice/Data Modem card 2 is fitted inside the computer 1 within a standard expansion slot for connection to a single PSTN line 6 and, in turn to a standard termination 3. The apparatus also includes a telephone handset 4 that is connected to the Voice/Data Modem 2 by line 5 and thereby also connected through the Voice/Data Modem to line 6 and thence to termination 3 of the single PSTN line. The computer 1 includes a display 7 and a keyboard 8. Also a mouse pointing device, or equivalent, (not shown) is included. The telephone handset 4 is provided with the normal features of a such a device and might include a "speaker-phone" capability so that a conferee is able to participate in a voice/data conference without holding a telephone handset to his ear. Using this arrangement, data can be transmitted over the PSTN line during simultaneous speech transmission by an operator. The computer 1 is also able to transmit data over the PSTN line in a conventional mode where the Voice/Data Modem 2 takes control of the PSTN line and uses the full bandwidth of the single telephone voice channel. When data transmission takes place simultaneously with speech transmission, the data must occupy a much smaller bandwidth in order to share the total bandwidth of the single telephone channel with voice transmission.

Fig. 1B shows components added to provide video as well as voice/data conferencing. A camera 9 is shown that will capture a conferee's image for transmission to remote members of a conference. Although a telephone handset could be used, Fig. 1B shows as an alternative a microphone 10 and a loudspeaker 11. A second card 13 is included along with an Voice/Data Modem card 2. This second card is a video modem. It is shown connected to a second PSTN line 13 in addition to a line for voice transmission 12. Alternatively, the cards shown could encode voice and video inputs to provide a digital output connected to a single transmission facility capable of multiplexing both voice and video signals. For example, in one embodiment, it could make use of Integrated Service Digital Network (ISDN) facilities. As another alternative, it could make use of standard Local Area Network (LAN) capabilities such as Ethernet or Token Ring systems, or a combination of these facilities along with the PSTN or wide band private line circuits.

The Voice/Data Modem 2 shown in Fig. 1B is assumed to be similar to the one shown in Fig. 1A. The video portion of the system can be any of a number of standard variations that can be integrated with the voice/data modem capability of the invention by one skilled in the art.

Fig. 2 is a block diagram of the construction of the voice/data embodiment illustrated in Fig. 1A. Shown in Fig. 2 is the computer 1 that contains the plug-in Voice/Data Modem 2. Data generated within or displayed on the computer is passed to or from the plug-in Voice/Data Modem 2. Connected to the Voice/Data Modem through line 5 is a standard telephone set 4. Also connected to the Voice/Data Modem 2 is an output line 6 that in turn is connected to the PSTN termination 3.

Fig. 3 is a block diagram of the preferred embodiment of the Voice/Data Modem 2 which makes use of standard Digital Signal Processor (DSP) technology. Shown are the transmitter (sending) portion of the Voice/Data Modem in the upper portion of the figure and the receiver in the lower portion. A Clock circuit 20 provides a timing reference for both transmitter and receiver blocks of the Voice/Data Modem. The basic timing rate of the system is preferably 8,000 Hz, the international standard sampling rate for digital voice transmission and switching systems. According to the standard, each voice sample is a 12-bit or 13-bit quantity. (The North American Standard is 12 bits for conversion to an 8-bit quantity using $\mu$-log compression standard. In Europe, 13-bit quantization is used for conversion to the A-log 8-bit compression standard of the CCITT. Although either standard can be used, for simplicity, a 12 bit embodiment is assumed.) In this embodiment, the standard 12 bit quantities sampled at 8000 samples per second are used within the Voice/Data Modem for processing of both voice and data signals. Other rates are derived within the Clock 20 by using standard digital techniques. These rates are all derived from the basic system timing rate. An example of the frequencies derived with the Clock Module are summarized in Table 1 given in the Appendix.

In the transmitter portion of the Voice/Data Modem, the voice signal 5 (preferably from a telephone set) is connected over a 2-wire line (or, alternatively, the sender portion of a 4-wire connection) to an analogue to digital converter (A/D Converter) 21. The analogue telephone signal is converted to 12 bits digital samples in accordance with standard telephone practice. The output from the A/D Converter 21 is connected to a digital Low Pass Filter 22 that is preferably implemented as a part of a DSP. Assuming that the data portion of the signal is centered at a frequency of preferably 3000 Hz and that the nominal (Nyquist rate) bandwidth is preferably 300 Hz, the digital filter is implemented as a sharp cut-off filter. Preferably it is implemented with a raised cosine spectral characteristic and has a 3 dB cut-off frequency of 2700 Hz and an attenuation of 20 dB. Alternatively, the filter can be implemented as a multi-pole Butterworth or elliptical pass band characteristic.

The output of the Low Pass Filter 22 is connected through an "AND" gate 23 to a digital Adder circuit 25 that combines the digitally processed data signal, described below, with the digitized voice signal. The Enable signal 24 is a signal controlled by computer 1 of Fig. 2. It is set to an "off" state when the voice capability of a station has been set in the "mute" mode. This function is generally under the direct or indirect control of the Master Station as described below. The 12 bit output from the Adder is connected to a digital to analogue converter (D/A Converter) 21. The output of the D/A Converter is a composite data over voice signal that is connected to a Hybrid Junction 28 that in turn is connected to line 6 and thence to a termination unit of the PSTN. The result of this processing on the voice signal is to produce an output the bandwidth of which is limited to approximately 2700 Hz and a data signal which occupies the bandwidth above the voice signal.

The data transmitter portion of the Voice/Data Modem accepts data from an 8-bit bus 29 that is stored in a Data Buffer 30 with sufficient storage to facilitate implementation of the data protocol described below. For the current embodiment, the amount of storage is preferably 512 bytes (4,096 bits). Data are read into the buffer in 8-bit bytes and are read out serially by bit into the Data Modulator 27. Data are read out of the Data Buffer 30 under the control of the Data Start Line 31 and an output from the Clock Module 20 (not shown explicitly). An enabling signal on the Data Start Line begins the transfer of a block of data stored in the Data Buffer where said enabling signal is generated by timing logic within the Computer 1 and the Clock Module. The Data Modulator 27 is implemented in the DSP using a standard modulation technique, preferably a standard 8 level quadrature amplitude modulation (QAM) algorithm. The preferable encoded bit rate is 600 bits per second. Since the 8 level modulation technique encodes 3 bits in a modulation symbol, the rate at which symbols are sent (the baud rate) is 200 symbols per second, resulting in a data signal bandwidth of roughly three times the Nyquist bandwidth, or 600 Hz.

The output of the Data Modulator 27 is connected to the digital Adder 25 where said output is transferred at the system sampling rate of preferably 8000 Hz. These samples are summed (linearly) by the Adder, the output of which is connected to the D/A Converter 21 as described above. Using this arrangement, both voice and data are transmitted simultaneously through the Hybrid Junction 28 and over the PSTN line 6.

The receiver portion of Fig. 3 implements the inverse functions of the transmitter. The PSTN line 6 is connected through the Hybrid Junction 28 to the A/D Converter 32 where the combined voice and data signal is received from a remote station in analogue form. The output of A/D Converter is a sequence of 12 bit samples of the input wave form sampled at the 8000 Hz rate. Since the input analogue wave form contains both voice signal energy that has been passed through a Low Pass Filter at a distant station and high-frequency data signal energy, this embodiment of the invention includes filtering means that separates the two signals. As shown in Fig. 3, Low Pass Filter 34 and High Pass Filter 35 are provided to separate the voice and data signals. These filters are again implemented as software code within the system DSP. Low Pass Filter 34 eliminates the data signal energy from the voice signal. It has a 3 dB bandwidth equal to that of the Low Pass Filter in the transmitter. The output of the High Pass Filter 34 is connected to the D/A Converter 32 to provide an analogue output signal to the telephone over line 5, that is either a 2-wire line or the receiver pair of a 4-wire connection. Note that the transmitter and receiver filters are in tandem resulting in a 6 dB voice bandwidth of 2700 Hz for the end-to-end system.

A High Pass Filter 35 is designed with a 3 dB bandwidth of approximately 2,700 Hz. Its purpose is to eliminate voice signal energy from the data path. The output of the High Pass Filter is connected to a Data Demodulator 37 that implements within the DSP the inverse process to that implemented in the Data Modulator 27. The output of the Data Demodulator is a serial bit stream that is stored in the Output Data Buffer 39 whose output 40 consists of an 8-bit bus. In addition to the data output, the Data Demodulator produces a Signal Present signal on line 43 within computer 1 of Figs. 1 and 2. The serial data produces an output on the Serial Data line 41 and a clocking signal aligned with the data appears on the Data Clock line 42. These signals are used by the computer for timing and data acquisition purposes.

The DSP is a programmable device that is connected preferably to a 16-bit Data Bus 26. As shown in Fig. 3, this bus is connected to Low Pass Filters 22 and 34, to High Pass Filter 35, to Data Modulator 27, to the Data Demodulator 37 and to the Clock 20. This arrangement allows for changes in the operation of the system to introduce embodiments other than the preferred embodiment. In addition, it allows the Voice/Data Modem to be programmed to operate in a data only mode. In this case, the bandwidth of Low Pass Filter 22 is set to zero so that no voice energy is allowed to enter or leave the system. In this mode, the entire available bandwidth of the voice channel is available for data transmission. Appropriate software is also loaded into the other filters, the modulator and demodulator along with appropriate clock signals.

## The CONSEQUENT RESPONSE PROTOCOL

Characteristic physical configurations of stations are shown in Fig. 4A, 4B and 4C. Shown in Fig. 4A is a multiplicity of stations, each connected to a single point that is the summing junction 45 of a multi-party conference. Fig. 4B shows a group of stations connected in a ring configuration where each station is connected to the same transmission facility in a serial manner. Fig. 4C shows a multidrop configuration where all stations are connected to a common communication facility. These latter configurations are typically used in local area networks and in multi-station radio systems (such as the Aloha system) and other wide area network systems. Although the configurations of Figs. 4B and 4C can be used in the present invention, the conference bridge of Fig. 4A is the preferred embodiment. The Conference Bridge 45 assumed is one conventionally used for voice.

Since the data transmission utilizes only a small bandwidth of the single telephone voice channel, data transmission is restricted, for example to 600 bits per second. It is important that the displays at the locations of the conference participants are updated frequently in order to facilitate the rapid interaction that occurs during a conference. It has been found to be necessary for all participants in a conference to receive data from every member of the conference at least once every second.

Timing delays must be considered when designing a data protocol that provides for this rapid interaction over a conference bridge. In all physical configurations of multiple stations arranged to communicate data with one another, there is a delay between the time that one station transmits information to the time that each station receives information. These delays are generally different between each station and the Conference Bridge and between each station pair. In order to communicate data effectively, each station connected in any of the "multipoint" configurations of Fig. 4A, 4B and 4C, and specifically to a Conference Bridge, must obey a specific set of rules, i.e., a well-defined protocol. A number of protocols exist for allowing multiple stations to communicate on shared communication facilities. The embodiment of the present invention extends past practice by making use of a unique characteristic of a conference bridge, namely, that such a bridge contains a "summing junction" where signals from all active stations are added to one another for transmission to all stations. The uniqueness of the configuration of Fig. 4A is that transmissions from all stations to all other stations pass through a single point. As a result, any station receives signals from all other stations in the same order that they appear at the summing junction of the conference bridge.

The data protocols of this embodiment of the current invention is based on the following assumptions:

1. All conference participants are connected to a conference hub that is a single summing junction.

2. A Conference Bridge is used to implement the summing junction that contains circuitry to select, at any instant, a subset of the total number of conference participants to be connected to the summing junction, the selection being made based upon algorithms that determine the presence of active conversation and/or data.

3. All conference participants are able to hear every other conference participant subject to the restrictions of the Conference Bridge.

4. Echo cancellation in the conference bridge prevents a participant from hearing the reflection of their own transmission.

5. One station is designated to be the Master Station. Its role is to coordinate the transmission from all other stations so that they do not interfere with one another.

There are two modes of data transfer. These are illustrated in Fig. 5. "Basic Data Frames" allow each station in the system to transfer certain elemental data to all other stations once each frame interval. "Information Data Frames" allow a single station to transmit an extended amount of information to either all other stations, or selectively, to a subset of the stations. These two modes of transfer as well as two other modes used for initial station connection and for error control are under the control of the Master Station and of the rules of the protocol. The other two modes are the Acquisition Data and Error Modes that are used to allow new stations to become connected to a conference and to facilitate error recovery when abnormal circumstances occur.

There are two types of data blocks: Command/Response-Request/Response (C/R-R/R) Blocks and Information Data Blocks. C/R-R/R Blocks include the Master Station Command/Response Data Block that occurs at the beginning of every frame and the Slave Station Request/Response Data Blocks. In other words, C/R-R/R Blocks are all data blocks included in the system other than Information Data Blocks used in Information Data Frames. C/R-R/R Blocks can communicate status information as a part of their purpose. Information Data Blocks are meant to transfer larger amounts of information among the stations and are associated with Information Data Frames defined above.

In a network with a Conference Bridge, the fact that the propagation delay can be different on each leg of the bridge has a fundamental impact on how communication between one station and all others can take place. It is necessary for one station to transmit its information so that it is not received at any other station when another station's transmission is being received. One way to assure that collisions do not occur is to allow only one station to transmit at a time within a period equal to twice the propagation delay of each station and the Conference Bridge. The embodiment described here makes use of a broadcast "round robin" protocol, subsequently entitled a Consequent Response Protocol or CRP. In the CRP, each station transmits a data block immediately after receiving a data block from its predecessor.

There are several ways to implement the CRP. One way is, prior to a conference, to assign a Station ID Code to each station to be connected so that its position within the round robin is identified. Unfortunately, this procedure is logistically burdensome and prone to human error. The preferred embodiment is an automatic method of assigning stations as they become connected contains the following sequence of operations:

1. The Master Station is connected to the Conference Bridge.

2. At intervals determined by the mode of the system and the rules implemented, the Master Station transmits a Data Block (called an Acquisition Data Block) with a < new station> or < new_station_with_delay > command. (See the list of Master Station Acquisition Data Block commands in Table 5 in the Appendix.) This command requires that all previously connected stations remain silent for a predetermined period that is nominally 4 times the maximum expected delay between any station and the Conference Bridge, or, more accurately, twice the sum of the maximum possible delays between any station and the Master Station reflected through the Conference Bridge. (When there is no other station connected to the system, the Master Station sends < new_station > commands repeatedly until a Slave Station responds. Thereafter, the Master Station sends < new_station > commands periodically, for example, once each 30 seconds.)

3. Any Slave Station connected to the Conference Bridge listens to the Basic Data Blocks being sent by other connected stations during a Basic Data Frame and determines the Station ID Codes of all connected stations. From the list, it determines replies to the poll with a Slave Station Acquisition Data Block illustrated in Table 5. A newly connected station selects for itself a Temporary Station ID Code that it randomly picks from the range of all possible station ID codes. (When in the Acquisition Mode, no currently assigned stations respond to the Master Station. Therefore, there is no conflict if a newly connected station selects a station ID code which has been assigned to a connected station.)

4. Using its randomly selected Temporary Station ID Code, the said Slave Station sends an Acquisition Data Block that is a Basic Data Block with the assumed Temporary Station ID Code immediately after it has received an Acquisition Data Block from the Master Station.

5. Upon receiving the Acquisition Data Block transmission from the Slave Station, the Master Station sends a polling block to said Slave Station (using the Temporary Station ID Code) where said polling block includes a Station ID Code that the Slave Station is to use as its permanent ID Code, and that it is to use in identifying itself in the polling list. As a part of the Acquisition Mode polling block, the Master Station identifies whether or not said slave station is to respond as the highest number Station ID Code in the roll call, and hence, to send its Slave Station Request/Response Data Block immediately upon receiving the Master Station Command/Response Data Block, or whether it is assigned a Station ID Code within the existing polling list from a station previously, but no longer, connected to the system.

6. The sequence of operations is completed by determining one of the following cases and taking the indicated action:

6A No Slave Station is heard by the Master Station. Return to Step 2.

6B A single Slave Station is heard by the Master Station. Return to Step 2 and initiate a new < new_station > command with the appropriate delay.

6C Multiple Slave Stations respond to the < new_station > command and are heard by the Master Station. Either one of two cases obtain:

6C1 Transmissions from all Slave Stations are received without overlap (collision) from any other station and no two or more stations have selected the same Station ID Code for the acquisition process. Master Station repeats Step 5 for all newly connected stations.

6C2 Transmission from Slave Stations are received where some or all of the stations interfere with one another or have selected the same Station ID Code. The Master Station repeats Step 5 for each station for which interference does not occur and returns to Step 2, but sends a < new_station with_delay > command to the unassigned Slave Stations. This command causes the interfering slave stations to insert a randomly chosen delay in their response in addition to choosing a new random Station ID Code. (In the event that one of the overlapping stations has chosen the same Temporary Station ID Code as a stations who has responded without interference, both stations would reply to the Master Station's subsequent poll of said Temporary Station ID Code. In this case, the Master Station would not issue a complete connection sequence and the two stations would be forced to respond to a < new_station_with_delay > command.

Each station responds in inverse order of its Station ID Code (assumed assigned in order at the time of initial connection). Using a Consequent Response protocol, either fixed or variable frame periods may be used. It is simpler to use variable periods and that approach is assumed in the following.

Each Slave Station begins transmission of its Slave Station Request/Response Data Block immediately after it receives the end of the transmission of the data block from its predecessor station. For example, the Slave Station at the start of the round robin sequence begins transmission after it has received the Master Station Command/Response Data Block. The next in sequence begins transmission after it has received the Slave Station Request/Response Data Block from the previous Slave Station, and so on. The process continues until the Master Station receives the Slave Station Request/Response Data Block from the final Slave Station in the sequence. At that time, the Master Station initiates another Basic Data Frame cycle, or changes the system mode to one of the other modes described. It is possible that one of the stations becomes inoperative and the cycle cannot be completed in its normal manner. This may occur when a conference is abandoned by a participant or a station becomes disconnected. In the preferred embodiment, all stations are able to receive transmissions from all other stations. As a result, the Master Station can monitor the progress of the Basic Data Frame process. If it determines that a station is not responding to its predecessor within a time which is less than twice the maximum delay, the Master Station supplies a surrogate Slave Station Request/Response Data Block for the Slave Station that is not responding to its poll. This operation keeps the cycle going. In a more refined embodiment, the Master Station can measure the normal delay between each successive station, determine when a Slave Station becomes inoperative by determining that said delay exceeds the normal amount, and thereafter send a surrogate Slave Station Request/Response Data Block. After it sends a surrogate Slave Station Request/Response Data Block, it uses as a delay criterion the maximum assumed delay for the system to determine if said data block's successor is still present in the system. In the unlikely event that more than one consecutive station becomes inoperative during a single frame period, the Master Station, after having sent its surrogate Slave Station Request/Response Data Block, waits for the maximum delay period, and not hearing a response from said data block's successor, sends another surrogate Slave Station Request/Response Data Block using as the Station ID Code said successor's Station ID Code. This process continues until a Slave Station that remains responds to a surrogate Slave Station Request/Response Data Block.

After the Master Station has determined that a Slave Station has become inoperative, it sends a command to said Slave Station's successor directing it to send its transmission when it receives a Data Block from said Slave Station's predecessor. The polling list is thus shortened and normal operation with the remaining stations continues.

The total duration of an entire Basic Data Frame depends on the propagation delays from the Conference Bridge to each of the stations and on the duration of the Basic Data Blocks themselves. For example, a distance of 5,000 miles would lead to a delay of about 50 msec. Assuming that the length of the Master Station Command/Response Data Block is $\alpha$ and the length of each Slave Station Request/Response Data Block is $\beta$, the total amount of time to send all blocks from n stations (without overlap) is $(\alpha + (n-1)\beta)$. If $\alpha$ = 48msec, $\beta$ = 24 msec and n = 20, the total time taken for all transmissions is 504 msec. This is the absolute minimum time for a complete frame period T to occur if there were no transport or propagation delays in the system and if collisions are not to occur in the system.

In addition to this minimum time, delays must be added. For the Consequent Response case, the total period required from the time the first Basic Data Block is transmitted from any station and the time that the Master Station Command/Response Data Block has been received at the most distant station is equal to the delay from the nth Station block to the Conference Bridge, plus the round trip delay from every other station to the Conference Bridge plus the delay from the Conference Bridge to the most distant station. If $\delta_i$ is the delay between Station #k and the Conference Bridge, the total delay times involved are

$$\delta_n + 2\sum_{1}^{n-1}\delta_k + \delta_{max}$$

where the summation is made for k = 1, 2........(n-1) and where $\delta_n$ is the delay from the first station 52 to transmit within the frame and $\delta_{max}$ is the delay from the station with the largest delay and the Conference Bridge (Station #2 53 in Fig. 6.). Thus, the total duration of the Basic Data Frame (and therefore the minimum value of T) is

$$\alpha + (n-1)\beta + \delta_n + 2\sum_{1}^{n-1}\delta_k + \delta_{max}$$

For the case illustrated in Fig. 4A, the total length is 1.153 seconds. For the example case, propagation delays are approximately equal to the length of all transmissions.

If the average delay is $\delta_{ave}$ , the expected value of total delay is:

$$\tau_{consequence\ response} = \alpha + (n-1)\beta + 2n\,\delta_{ave}$$

As described above, there are two system modes that determine the types of transmissions being sent, Basic Data Frames or Information Data Frames as shown in Fig. 5. In the Basic Data Frame mode, all stations send their basic data according to the chosen protocol. In the Information Data Frame mode, only one station is transmitting information. It is one of the functions of the Master Station to set the mode of the system and to determine that all stations are in the correct mode.

The preferred embodiment of the system makes use of Digital Signal Processors (DSPs) for generation and detection of data blocks. The transmission system is assumed to be the analogue telephone network. The information being sent is converted from digital to analogue for transmission and back to digital for reception using universally available digital communication components.

The duration of each data frame is seconds. Its default value is set for a given system release, but can be changed after shipment. The maximum number of bits required to represent the value of T is preferably 16 so that the maximum value of granularity units is 65,536. In the example shown in Table 1, the value of the number of timing granularity units per frame NF = 57,600. A granularity unit is determined from the system clock by the granularity unit divisor $N_G$ that determines the minimum time for a particular embodiment of the system for which decisions are made concerning data communicated among the stations. As shown in Table 1, the granularity unit rate for the illustrative system is equal to the system clock rate $f_r$ = 152,000 Hz divided by $N_G$ = that is $f_G$ = 96,000 Hz. All other rates used in the illustrative system are an integer sub-multiple of this $f_G$ rate. The sampling rate $f_S$ is determined by the number of granularity units per sample $N_S$ = 12 and is 8,000 Hz.

The carrier frequency $f_C$ is 3,000 Hz corresponding to 32 granularity units and the corresponding average number of samples per cycle $S_C$ is 2.67. The illustrative baud period $T_B$ is 5 msec corresponding to granularity units per baud period $N_B$ of 480 and a Nyquist bandwidth $B_N$ of 200 Hz. There are $N_R$ = 3 bits per baud period that is determined by $N_D$ granularity units per bit of 160 that results in a bit rate $f_D$ of 600 bits per second. The result of these factors is 40 samples per baud period. The assumed quantization level $N_S$ is 12 bits per sample.

The length of the frame T is assumed to be 57,600 granularity units $N_F$.

The standard sampling rate for digital telephony is 8,000 samples per second. The assumed carrier frequency for the data is 3,000 Hz. As a result, there are 8 samples every 3 cycles or an average of 2.67 samples per cycle. It is preferable that each baud period chosen for the system be an integer number of samples and an integer number of carrier cycles. By enforcing this restriction, each symbol chosen for the system can be a fixed set of sample amplitudes that include both carrier and data information. Data recovery by the receivers in the system is facilitated by this choice. Intersymbol interference is more easily controlled and acquisition of carrier phase at each receiver is simplified. In the current case, the baud period is chosen to be an integer multiple of 3 carrier cycles (samples), that is, a multiple of 1 msec.

Table 2 shows several options conforming to these constraints in addition to the preferred embodiment. The Nyquist bandwidth is the minimum bandwidth required to transmit at the information rate with the number of bits per symbol shown. Practical systems require bandwidths larger than this rate. If the chosen baud period is 5 msec and the number of bits per symbol is 3, the data rate for this combination is 600 bits per second. The Nyquist bandwidth is 200 Hz; a practical bandwidth is of the order of 600 Hz.

The length of any data block transmitted from any station must be an integer number of baud periods. In the present case, each data block is a multiple of 3 bits.

## Data Block Formats

The throughput of the system can be maximized by judicious choices for the structure of data blocks used in the system. The number of bits required in each data frame along with a brief description of each field is given in Tables 3 and 4 in the Appendix.

As shown in the tables, each frame begins with a Space that is preferably a single baud period in length that is meant to allow for acquisition of the data signal by a conference bridge, and allows the demodulators in each station to acquire carrier lock of the signal. (In some embodiments, the time required is more than one baud period; this can have an adverse impact on system performance by increasing overall system delays.)

The Space is preferably a period where a fixed symbol is sent. This allows a conference bridge to detect the presence of a signal at the time a predecessor block ends and to connect a new signal to the summing junction. In performing this action, some conference bridges clip off the first few milliseconds of a new signal in detecting its presence. For example, if the baud period is 5 msec and the detection (clipping) period of the bridge is 4 msec, all but 1 msec of the Space period would not appear at the summing junction and would not be received by any of the stations. (Alternatively, the Space period could be a period where no energy is present, providing a gap between data blocks. However, this approach would not work where the number of conference participants exceeds the maximum simultaneously connected capacity of the conference bridge and where the conference bridge clips off the first part of a signal.)

## Command/Response-Request/Response (C/R-R/R) Blocks

In the preferred embodiment of the invention, there are four modes of operation for frames. All modes are determined by the Master Station and are signaled to the Slave Stations by the Master Station Command/ Response Data Block. When the system is commanded by the Master Station to be in any one of the four modes, the Slave Stations respond with Slave Station Request/Response Data Blocks that correspond to the chosen mode.

## Master Station Command/Response Data Block Formats

The Master Station always sends a Master Station Command/Response Data Block at the beginning of each frame that is identical in length, but whose content depends on the mode of the system. This is true even if the Master Station is to send an Information Data Block. In this case the Information Data Block is preceded by a Master Station Command/Response Data Block. Tables 3A and 3B show an illustrative case of Master Station Command/Response Data Block fields.

Table 3A shows the field state alternatives for a Master Station Command/Response Data Block for all fields except Field 4, the Command/Status Field. It is detailed for the various System Modes (Field 5) in Tables 5 and 6.

As noted above, every data block of the system begins with a Field 1 that is a Space. It is used for system synchronization as described above.

Field 2 is the "window" field that is the Frame Address for use in the error control means described below. Each frame is given a consecutive address of 0, 1, 2, or 3 in an ever recurring cycle as long as there is no error. The error control means causes the system to revert to a previous address state when an error is detected.

Field 3 is the Station Address that is used in conjunction with the Command/Status Field. It is a 5-bit field used to address either individual stations or pre-defined groups of stations. It may designate various subsets of stations that are user-determined either prior to, or during a conference and include, as a minimum, "all stations" which is designated as Station ID Code 0.

Field 4, a 5-bit field, is the Command/Status Field. Taken together with the station address field, status information is sent from one station to other stations. In addition, the Slave Stations send requests to the Master Station for permission to speak (voice) or send a data frame to the addressed station(s). The Master Station sends commands to either individual stations or groups of stations as designated by the address field.

Slave Station Request/Response Data Block Formats

The format of Slave Station Request/Response Data Blocks depends on the mode of the system and the communication protocol being used.

Acquisition Mode Frames

The Master Station either continually, or periodically sends Master Station Command/Response Data Blocks that command the system to be in the Acquisition Mode so that new Slave Stations can become connected to the conference. When the Master Station is connected alone to the Conference Bridge, Acquisition Mode Master Station Command/Response Data Blocks are sent continuously. After one or more Slave Stations are connected, the Master Station signals the Acquisition Mode only periodically.

The system is set into the Acquisition Mode when the Master Station Command/Response Data Block sends a block with Field 5 set to the < acquisition > state, i.e., state 0. Table 4 shows Slave Station Request/Response Data Block fields for this case. The data block consists of only a Space field and a Temporary Station ID field. An additional bit, labeled Request/Response, is required to inform the Master Station whether the Slave Station is requesting connection to the conference, or is responding to a specific poll from the Master Station during the connection sequence. The total block length is 9 bits or 15 msec. This length is purposely shorter than that for the other modes to minimize the probability that transmission from multiple new stations will collide.

Basic Data Mode Frames

Table 5 shows the Slave Station Request/Response Data Block for Basic Data Mode Frames. It is identical to the Master Station Data Block shown in Table 3 with three exceptions. Field 4 is replaced by a Status/Request field which is 5-bits in length. Field 5 becomes a Station ID Code field which designates the address of the sending station, i.e., the Slave Station sending the block. Field 6 is replaced by a Spare field which is nonzero bits in length when the sum of the bits assigned to the other fields is not evenly divisible by the number of bits per baud period. The error control means (described below) does not require an error control field in any block except the Master Station Command/Response Data Block.

Error Mode Frames

When the Master Station changes the system to the Error Mode, Slave Stations do not respond with special data block formats. The Basic Data Mode Blocks are used. Transmissions are repeated as described below in the error correction protocol discussion.

Command/Status and Status/Request Fields

The following discloses the Master Station Command/Status and Slave Station Status/Request Fields used to define operational states of the invention.

Acquisition Mode Frames

Table 6 shows the various Command/Status Field states for the described protocol when the system is set in the Acquisition Mode. The use of these fields has been described under the protocol descriptions presented in connection with a description of Fig. 6 above.

Basic Data Mode Frames

Table 7 lists the set of states that can be signaled by both Master and Slave Stations in the current implementation. Additional states will be added as features are added. Each state listed is either a command, a request or a status indication. States that can be signaled by the Master Station are designated by an "M"; those signaled by a Slave Station by an "S"; and those that can signaled by either by an "MS".

All states signaled are used within the system as "latches". In other word, the states are assumed to be in effect until changed by a succeeding transmission of a countermanding state. All stations either generate a state message for itself or can hear all state messages from all other stations. Software in each station maintains the state signaled by all other stations. In addition, the Master Station periodically sends Information Data Blocks addressed to Slave Stations that contain state information of every connected station. These Information Data Blocks are used by all Slave Stations to synchronize their stored state tables to synchronize them with those recorded by the Master Station. Any discrepancies found by a Slave Station of its state information triggers that station to send appropriate Basic Data Block(s) to correct the error. Although such errors are unlikely to occur, this mechanism assures robustness of the system in the event of pathological conditions.

Error Mode Frames

Whenever the Master Station detects a Cyclic Redundancy Checksum (CRC) error in a frame or when it receives an < error_detected > status indication from any Slave Station, it places the system into Error Mode. The Master Station sends a Reset Command that consists of the appropriate Window address and a Command/Status field set to the 0 state. In response to this command, all stations revert to the state prior to the sending of said Window address frame and resume operation from that point.

INFORMATION DATA BLOCKS

The format for Information Data Blocks is the same whether sent by the Master Station or a Slave Station. Its structure is shown in Table 8. As with all data blocks, it begins with Space, Window and Station Address fields. As usual, the Station Address field designates the station or group of stations to which the message is intended and the Station ID Code is the address of the station sending the message. The Message Type field defines the intended use of the message. Its alternatives are shown in Table 9. The message lengths shown assume that a data compression algorithm (such as ZIP format compression) is used to minimize field lengths. These values are expected values rather than maxima.

The message itself follows and is limited in length by an arbitrary bound set for the system. Whenever the message length exceeds the maximum for a given frame, it extends over multiple Information Data Frames. Once permission to send an Information Data Block is given by the Master Station, that is, the system is put into the Information Data Mode, the Master Station can continue to keep the system in that mode by sending additional Information Data Mode signals, or intersperse the frames with Frames in other modes. Table 9 lists current data block types: this will be extended as features are added.

CONFERENCE BRIDGE CRITICAL PARAMETERS

There is one more important area that must be considered in any embodiment of the invention. The Conference Bridge itself has parameters that affect overall system operation. Most, if not all, conference bridges with more than a small number of ports operate in a way where only a subset of the total number of stations connected to a conference are physically connected to the summing junction of the bridge at the same time. This approach is necessary to reduce noise heard by participants and to assure that too many people are not trying to speak at the same time. There are five critical parameters that affect operation of systems based on embodiments of the invention. These are listed in Table 10 in the Appendix. These characteristics of a conference bridge affect the permissible design of data blocks used. Both the final design and the operation of a system depend on determination of these parameters for specific embodiments.

ERROR CONTROL

Error control is an important aspect of the system. It is critical that each station attached to the system be operating in the same mode and that a mechanism be provided for resetting the entire system in case of pathological error conditions. It is also important that a mechanism be provided for detection of errors that occur and to provide for retransmission of frames contaminated by errors. A unique error control method is described for providing a robust method of error control as a part of one embodiment of the invention that minimizes the amount of bandwidth that must be provided.

Classical methods of providing error control include error control fields within each block of information transmitted by one station to one or more other stations. While these methods are appropriate for some embodiments of the invention, they are not appropriate where bandwidth is limited. To implement a robust error control mechanism would require a large proportion of the limited system bandwidth available.

Simple error control techniques are largely ineffective. For example, an error control technique used for asynchronous low speed transmission is to append a "parity bit" to a block of data. This method of error detection is useful if two conditions obtain: first, if the probability of error for each bit in a block is independent of every other bit in the block, and second, if the probability of error is low. In the system, the second condition is expected to occur in most conferences. However, using the existing telephone network and the proposed signaling method, the first condition is not valid. Noise within the telephone network occurs primarily as noise bursts rather than noise related solely to the bandwidth of the signal channel. Thus, when noise occurs, it is likely to influence more than a single bit time. This is especially true if one data symbol represents more than a single bit. If multiple bits within a block are contaminated, the probability that a parity bit error control technique will detect an error can approach 50%, that is the equivalent of no error control at all. The technique of the current invention overcomes this problem and still conserves system bandwidth in an effective manner. Each station can receive all transmissions from all other stations throughout its connection to a conference. The essence of the proposed technique is for each connected station to compute a standard Cyclic Redundancy Check (CRC) sum on all data transmitted in a frame. (This CRC sum is computed on all blocks sent within both Basic Data and Information Data Frames.) If an error is detected by the Master Station, the Master Station sends a "Reset Command" to all other stations and sets the Window Address to the frame number that contained the error (presumably, the Window Address of the last frame). All affected stations then are programmed to repeat the information sent in addressed frame.

The Master Station sends the CRC sum pattern that it has computed to all other connected stations. These stations each compare this pattern as received from the Master Station with the one that it computed locally. If they match, no action is taken. If they are different, one or more Slave Stations have determined that an error has occurred and in its next available time slot of a Basic Data Frame, each sends an "Error Detected" command along with the Window Address received by the Slave Station from the Master Station in its data block that contained the CRC sum used in the comparison.

The Window Address field must be included since Basic Data and Information Data Frames can be intermixed. The Master Station must be able to reset the system to the Window Address state where the error occurred. As shown previously in the invention description, it is necessary to reset the Window Address to the last Basic Data Frame Window Address if an error occurs in an Information Data Frame. Using a 2-bit Window Address field allows for more than a single Information Data Frame to follow another, an important element in maximizing information flow through the system. It is not always necessary for a Slave Station to send an Error Detected command when an error occurs. For example, if the system is in the Information Data Mode and information is being sent to a subset of the stations, and a Slave Station has determined that it is not an addressee, it should not send an Error Detected command. To do so would only waste available bandwidth and provide no useful function for the system.

## THE SOFTWARE

The system operates by using the window type of operation wherein a mouse is used to move a cursor to within a window whereupon the mouse button is clicked to select that option. The following describes the software at its first release, as implemented on Microsoft Windows (Trade Mark) version 3.1.

## LOGGING ON

When the program is loaded it is in the Out Of Meeting environment and a log on display appears as shown in Figure 6. If a valid user name is entered, the display shown in Figure 7 shows the options available at the top of the screen in bold. The telephone icon at the far left is used to signal to the user: it flashes when a message has arrived. Whenever remote units report changes to other units, a message is sent across the network and this flashing icon is used to alert the user to the message. If the user is not using the program at the time, the flashing icon will still appear. In either case clicking the icon causes the system to display the message which has arrived.

The top row of buttons is used to invoke the different functions of the system. The second row of buttons is used to identify the Groups to which the user belongs: Groups provide a context to the functions selected by the top row of buttons. At the top right of the screen are a clock and date display.

In the Out of Meeting mode, the PCs communicate using electronic mail through a network connector attached to the PC which can be a modem or a Local Area Network adapter.

Each of the functions is now described in turn

HELP

When the Help option is selected, the selection of another option provides 'Help' text for that command. Help can also be used to report a problem to the administrator of the system.

ADMIN

Selecting Admin is only possible for the systems administrator nominated to support the users of the system. Selecting the option gives the display shown in Figure 8. The Faults Outstanding selection allows the systems administrator to monitor and reply to faults reported by users.

Change Directory allows the administrator to modify the contents of a list of users who are connectable using the system, as shown in Figure 9. A user in the list is identified by name and their preferred language (English, French, German, Italian, Japanese for example) can be indicated together with their telephone country code and operating system utilized by their computers. This feature allows the system to organize conferences between users with different systems software.

Add City and Add Country allow the administrator to describe new locations and their time zones, including Daylight Saving Time transitions; this is needed for scheduling meetings across time zones. A typical display is shown in Figure 10.

A systems administrator is also able to change the administrator, i.e. pass the system administration on to another user. This is achieved using the Change Administrator function.

GROUP

A group is a selection from the user Directory of a set of individuals who are working to a common goal. An individual may be a member of up to 6 groups. The Group option allows a user to create a new group, to modify the description of a group which they have previously created, or to review the description of a group of which they are a member. Figure 11 illustrates the display when this option is selected. The display allows input of the name of the group, the goals to be achieved by the group and the list of group members selected from the user Directory. Clicking Confirm Group causes the information about the group to be transmitted to all members. After creating the group, its owner can revise the goals, report when goals are achieved and change the membership of the group. Again, all changes are transmitted to the members of the group. In this way a community of interest is maintained.

CALEND

Clicking this button displays the user's calendar, or diary, as shown in Figure 12. In this example the calendar supplied with Microsoft Windows 3.1 (Trade Mark) is shown. Other generally available calendars can also be used. Time periods can be selected in which the user is prepared to consider meetings being scheduled by the program: these are flagged as "available" These available entries are used by the automatic scheduler - see Set below.

DIR

Clicking this button allows the user to review but not change the contents of the user Directory.

ACTIONS

Clicking this button displays a list of the actions which have been accepted by the user in past meetings. The display is shown in Figure 13. The user can review either all actions, those which they have not yet reported as complete or those which are due after a specified date. They can also report the completion of any action. This causes the minutes of all attendees of the meeting at which the action was agreed to be revised to show the date of completion.

SET

The user clicks Set to schedule a meeting. Using the display in Figure 14, they begin by drafting the timing and attendance for the intended meeting. Their system then messages the systems of each of the proposed participants, searches their calendars for possible time slots, and tentatively reserves them. When up to five possible time slots have been identified, the organizer's system reports back as shown in Figure 15 so that a preferred meeting time can be selected (only one time is shown available in the example display). If the organizer does not select an option within a specified time period, the reserved times are released on the calendars of the participants to prevent "calendar clutter". On selection of the preferred meeting time, the organizer's system then messages each participant, releases the unused times in their calendars and uses their flashing icons to alert them to a possible meeting and to invite them to confirm or refuse attendance: the display is shown in Figure 16. When all participants have responded, the organizer is alerted alerts and invited to finally register or abandon the meeting as shown in Figure 17. This display also invites the organizer to the organizer to contact their local conference call service and enter the conference call dial in numbers and password. The organizer can also specify which participants are to act as chair and secretary for the meeting, by clicking the Roles button. This button can also be used to specify translators for different languages. These are linked into the conference when participants require translations of shared text. On clicking the Register button, full details of the registered meeting are sent to each participant and the meeting is confirmed in their calendars. Also at this stage, the organizer can specify an agenda and its attachments for the meeting and these are also transmitted. Alternatively, roles, agenda and attachments can be changed or defined at a later stage - see Papers below.

PAPERS

This command is used by participants to review the plan for a meeting, the roles of the participants, its agenda and any attachments. It is also used to review the records of past meetings: agendas, minutes and whiteboards. The command can be used before a meeting by its chair to change any aspect of the meeting and to send these changes to all participants.

Clicking Papers and a specific Group button displays a list of all meetings for that group: selecting a specific meeting displays its meeting plan as shown in Figure 18. If the meeting has not yet taken place, an agenda and its attachments can be entered or modified by the chair of the meeting, as shown in Figures 19 and 20.

START

This starts a meeting, normally automatically at the scheduled start time of the meeting, but it is also possible to start a meeting early by clicking this button. The chair is warned of an impending meeting two minutes and the other participants one minute before the scheduled start time. Their initial displays at the start of the meeting will shows the appropriate number of seats for the meeting surrounding a 'whiteboard" on which the conference call number to dial into is displayed. See Figure 21 for a three person meeting. The participant will then dial the conference call number either automatically or manually and enter any password. One of the "seats' contains the icon for the local participant. Initially this is shown grayed, signifying that their machine is connected but that they are not yet necessarily present. When the participant clicks on their icon it converts to black signifying that they are now present in the meeting.

The participant can, using the Help button, specify the amount of information provided about each attendee: the minimum is their first name and the maximum their full name, location and local time. All examples given here show the maximum information.

The first to dial the conference call number will usually be the chairman. When the chairman is connected, the chairman's system will start the Master CRP broadcast as described above. As each new participant successfully connect their modem starts listening for this broadcast, and responds as appropriate. This process continues until all participants report as connected and present. Figure 22 shows the display for an eight person meeting at this point. As each participant detects the presence of another participant their screen will show that participant's icon grayed on the meeting display. At any time during this set-up process, a connected conference participant can report as present by clicking on their own icon. Participants receiving a "present" broadcast from another member convert the icon for that member from gray to solid. Throughout this period there is no control on the telephones and any one can talk. Once either all the conference participants are present or the chairman decides to start the meeting any way, the chairman calls the meeting to order by selecting Order. This causes

1) The Order Window to toggle to Close.

2) The chairman to broadcast Order as data over the telephone line.
3) Order causes each machine but the chairman's to switch off its user's microphone.
4) Order causes all machines to:
- set the Agenda item to 0;
- start the Meeting and first Agenda item timer countdowns as described below;
- enable all in meeting functions, converting buttons from gray to black.

Figure 23 and 24 show meetings which have been called to order for 3 and 5 participants respectively.

SCREEN LAYOUT IN MEETING

Figure 24 illustrates the situation where there are 5 conference participants when a meeting has been called to order. The two rows of buttons at the top of the display indicate the functions available during a meeting: the labeled buttons are described below. The two corner positions around the whiteboard are used to display either time of day, duration of the meeting, time left for the current agenda item or time left for the meeting. In the center of the second line from the top there are options available for a conference participant to indicate their level of comprehension and the level of agreement responses to the current speaker. The level of comprehension is indicated as Good by a check or Poor by a question mark. The level of agreement is indicated by either a smiling face or a sour face. During a conference presentation by a conference participant another conference participant can at any time select to indicate the level of comprehension and their emotional response. Thus by quickly viewing around the screen all participants are able to see who can understand and who is happy with a presentation. An option is also provided to display an aggregate response, for use where anonymity is preferred.

The current speaker is signified by a solid ring around their icon, scanned image or video picture. The participant who is speaking also has control of the whiteboard and is able to input text on to the whiteboard or import text files or applications on to the whiteboard whereupon all conference participants are able to view this. Thus the display indicates who is speaking and for every participant their name, location, local time, whether they are currently present, and their level of understanding and emotional response to the current speaker. Generally, the chairman who is indicated by the symbolic gavel, will not indicate either any emotion or degree of understanding, but will remain neutral.

The meeting can adopt a range speaking protocols and can switch between them during the course of a meeting. The options are selected using the Style command:

1. All speakers can talk at will, clicking on their icons when starting and finishing, or relying on talker detection where this is available.
2. Participants click on their icons to be automatically added to a speaker queue. In this mode, if microphone mute is available, all but the current speaker's microphone are disabled.
3. Participants click on their icons to signal to the chair that they wish to talk. The chair clicks on the requesting participant's icon to add them to the speaker queue. This also disables the microphones of all but the current speaker.

At any time a conference participant who has requested to speak can withdraw their request to speak by clicking on their own icon the second time. When the speaker has stopped speaking, they click on their own icon to indicate this and within approximately one second all systems :

a) display number 1 on the speaker queue as the current speaker and update the speaker queue. If there is no one in the speaker queue, by default the chairman is set as the next speaker.
b) disable the microphone of the previous speaker and enable that of the new speaker.
c) reset all feedback displays to neutral.
d) pass the control of the whiteboard to the new speaker.

The whiteboard displayed at the center of the display operates under the following rules:

a) Only the current speaker can control the whiteboard.
b) At any time any participant can locally scroll the whiteboard at will.
c) The text displayed on the whiteboard is retained for subsequent review (except for the Note option where the sender and receiver can delete a sent and received note).
d) Text documents can be recalled and displayed on the whiteboard.
e) Applications can be loaded and run on the whiteboard.

If any of the conference participants require a simultaneous translation of the text appearing on the whiteboard into another language, then a translator may be provided (see Set above). A translator has a similar system which operates in a different way and must be connected into the telephone conference. Their system receives the text to be translated and this is displayed on the screen. The translator enters the translated text into their system. When a conference participant requests a translation, by clicking on the translator's icon, they receive the translated whiteboard text from the translator. The translator's display is different from that of the conference participants in that the display shows the whiteboard text and simultaneously the translation as it is input by the translator. Conveniently, the left hand side displays the untranslated whiteboard and the right hand side the target language. The translator's machine will of course include an appropriate keyboard for the language.

Figure 25 shows a typical display during a meeting. Mr. Corbishley is the current speaker. Mr. Evans and Ms Harai are queued to speak next. This is indicated by the numbers 1 and 2 which show their position in the queue. Mr. Evans and Ms. Byrne are signifying agreement, and Ms. Harai is signifying disagreement. Ms. Byrne and Ms. Harai are signifying comprehension and Ms. Kenney is signifying lack of comprehension.

The individual functions available to participants are now described.

HELP

This is used to customize the display to the users requirements, to call up Help text and to report problems to the Administrator.

MEETING

This displays information relating to this or any previous meeting, in like manner to the Papers command in Out of Meeting mode.

STYLE

This is selectable only by the chair. It allows for choice of the speaking protocol as described above, and also allows selection of the following options:

1. Maximum requesting speaker queue length.
2. Enable/disable interruption
3. Enable /disable individual feedback
4. Enable/disable composite anonymous feedback.
5. Enable/disable chair feedback.

AGENDA

Any participant can select Agenda to display the meeting agenda for review on their whiteboard. The chair additionally has the ability to revise the agenda: deleting items, changing their positions or timings, or adding items. The chair also uses this command to record the completion of each agenda item. Figure 26 gives an example of an agenda display, as seen by the chair and figure 28 shows the display after an agenda item has been marked as completed.

MINUTES

Only the meeting secretary has the ability to write to the minutes: if no secretary is nominated, the chair carries out this role. There are four types of items recorded in minutes:

1) Agenda topics.
2) Votes.
3) Actions.
4) Records.

Every addition to the minutes is given a sequence number within an agenda topic, starting at 1. When a vote has taken place, the vote result is automatically added to the Minutes.

Figure 27 is an example display of minutes.

VOTE

This option is only available to the chair. When they select the Vote option the display shown in Figure 29 appears. The chair then enters the text indicating the motion and selects a time for the vote. Once this is done, they select Ballot to start the balloting.

The conference participants make the appropriate response by selecting Yes, No or Abstain buttons and the result is transmitted to the chairman. Either secret or public ballots can be taken. Figure 30 shows how the result of the result is displayed.

CLOSE

This option is only available to the chairman. When Close is selected the chairman's machine broadcasts "Close". On receipt, each machine:

a) closes the minutes and writes the actual completion time to the agenda;

b) reviews all actions in the minutes which apply to this participant and adds them to their actions list (see Actions above);

c) stores whiteboard, minutes and agenda in the papers file for this meeting;

d) breaks the phone connection;

e) displays an "end of meeting" message;

f) returns to Out of Meeting mode.

NOTE

This option allows a conference participant to pass a private text message to one or more conference participant. When the Note option is selected, a window overlays the whiteboard and allows entry of the identity of the sender and the receiver, a text message and space allowed for a text reply. After the text is entered the message can be sent by appropriate selection of options. Once the note has arrived at the recipient(s), the sender's icon shows a flashing name box. The recipient(s) can display the note on their whiteboard by clicking on the sender's icon. The recipient(s) can either then reply or indicate that there is no reply. The reply or indication that there is no reply is then re-transmitted to the sender. Figure 31 is an example of a display of Mr. Evans responding to a note from Ms. Kenney.

LEAVE

This is used to by participants when they temporarily leave the meeting and to subsequently rejoin it. A password is requires on leaving and rejoining and speaker and microphone are disabled during absence. An absent participant is indicated on all displays by a grayed icon.

INTERRUPT

During a conference any participant can interrupt a speaker by clicking this button. This causes

a) the current speaker's microphone to be switched off.

b) the interrupting participant to be identified as the speaker on all machines.

c) the interrupted speaker to be pushed back up the speaker queue to number 1 and all other queued participants to be incremented by one.

d) the interrupting participant's microphone to be switched on.

e) whiteboard control to move to the interrupter.

Once the interrupter has finished they clicks on their own icon to reverse these changes.

THEATRE

This command provides the entire width of the display to the whiteboard, compressing the participant information into a single line. Figure 32 is an example. There are also mouse commands to allow the local user to change the font and type size on the whiteboard.

IMPORT

This command is used to import applications onto the whiteboard. Applications can be run either locally or in shared mode. Figure 33 shows the notepad application being run locally on the whiteboard in Theatre mode. Any application can be so run. A limitation of running applications in this way is that they may cause the participants to lose polls from the other machines while the application is loading or in any other state when the system cannot interrupt to report the arrival of communications messages.

When invoked by the current speaker, an imported application is run in shared mode. The machines of all other participants are caused to load the same application and data file and the speakers keystrokes and mouse movements are sent to these so that all applications are run in parallel. Control of the application moves with the speaker. Under the Windows 3.1 system there are a number of restrictions on this feature.

SET

This command is used to set up another meeting during a meeting and operates in a similar manner to the Out of Meeting Set command.

CALENDAR

This operates as the out of Meeting command, displaying the user's Calendar on their whiteboard.

ALTERNATIVE REALIZATIONS

Although in the above examples of the present invention a single conference participant uses a single telephone line and computer, it is possible for a number of users to share the same telephone line and the same computer. If this is the case, the system indicates that there are for example 4 conference participants at the single location. The 4 conference participants appoint a sub-chairman to operate the keyboard and provide a democratic response. All other features remain unchanged. Although the embodiments of the present invention described herein above refer to the use of a computer connected to a data over voice modem provided within a telephone handset, it will be appreciated that the processor could be provided within the telephone handset and programmable via a keypad provided thereon. A small LCD display or a series of LED's would suffice to provide indications of the responses of conference participants to conference presentations or events.

In the embodiment of the present invention described with reference to Figure 2, the microphone of a conference participant can be enabled or disabled. In a further embodiment of the present invention applicable not just to the embodiment shown in Figure 2, an arrangement is provided to detect speech which is detected by the microphone and signal this to the processor by for example the RS232 line. This facility provides a signal every time a conference participant speaks which can be used for instance to identify the speaker.

Although examples of the present invention have been described with reference to telephone conferencing, the present invention is also applicable to conferences wherein the conference participants are at a single location. The provision of a common display or discrete displays together with discrete input means would allow conference participants to view the responses of other conference participants to a presentation by one conference participant. This arrangement also provides the chairman with some degree of control, especially where microphones are used during the conference since the chairman would be able to enable and disable microphones as required and speakers requesting to speak would be indicated on the display. In such a conference, it is also useful to have a display to identify the conference participants and their location within a room or around a table. In general, many different types of conference parameters can be displayed on the display means, thereby greatly enhancing the communication possible during a conference.

## APPENDIX 1

| Parameter | Name | Value | Units | System | Default | Session |
|---|---|---|---|---|---|---|
| Clock rate | $f_r$ | **1,152,000** | Hz | √ | | |
| Granularity unit | $N_\Delta$ | **12** | | √ | | |
| Granularity unit rate | $f_G$ | *96,000* | Hz | √ | | |
| Sampling unit | $N_S$ | **12** | | √ | | |
| Sampling rate | $f_S$ | *8,000* | Hz | √ | | |
| Granularity units per cycle | $N_C$ | **32** | | √ | | |
| Carrier frequency | $f_C$ | *3,000* | Hz | √ | | |
| Samples per carrier cycle | $S_C$ | *2.67* | | √ | | |
| Granularity units per baud | $N_B$ | **480** | 5 | √ | | |
| Granularity units per bit | $N_D$ | **160** | | √ | | |
| Baud period | $T_B$ | *5* | msec | √ | | |
| Nyquist bandwidth | $B_N$ | *200* | Hz | √ | | |
| Bits per baud | $N_B$ | *3* | | √ | | |
| Data bit rate | $f_D$ | *600* | bps | √ | | |
| Cycles per baud period | | *15* | | √ | | |
| Samples per baud period | | *40* | | √ | | |
| Bits per sample | $N_S$ | **12** | | √ | | |
| 3 dB data bandwidth filter from center frequency | $A_O$ | **1.5** | $B_N$ | √ | | |
| Voice filter attenuation at carrier frequency | $A_C$ | **20** | dB | √ | | |
| Granularity units per frame | $N_F$ | **57,600** | 5 | | √ | √ |
| Frame Period | $T$ | *600* | msec | | √ | √ |

TABLE 1 ILLUSTRATIVE VALUES OF SYSTEM PARAMETERS.

Derived system values are in *italics*. Typical fixed system values are in **bold** typeface.

A System value is a factory setting for a particular system model that is set at the factory.

A Default value is a value shipped with a product that can be modified in the field.

A Session value is one that can be set for each conference.

If both the Default and Session columns are checked, the Default value is used if the value is not modified for the current conference. If the Default column is checked and the Session column is not, the Default value can be modified in the field and will be applied to all subsequent conference sessions until it is subsequently modified. If the Session column is checked and the Default column is not, the value can be set for an individual conference.

| Baud period (msec) | Nyquist Bandwidth | Bits per symbol | Data rate (bits / sec) |
|---|---|---|---|
| 2 | 500.0 | 2 | 1,000 |
| | | 3 | 1,500 |
| | | 4 | 2,000 |
| 3 | 333.3 | 2 | 667 |
| | | 3 | 1,000 |
| | | 4 | 1,333 |
| 4 | 250.0 | 2 | 500 |
| | | 3 | 750 |
| | | 4 | 1,000 |
| 5 | 200.0 | 2 | 400 |
| | | 3 | 600 |
| | | 4 | 800 |

TABLE 2. SYSTEM DATA RATES FOR VARIOUS SYSTEM PARAMETERS.

| Field | Field Name | Nbr. Bits | Description |
|---|---|---|---|
| 1 | Space | 3 | Baud period |
| 2 | Window | 2 | Frame address for error control |
| 3 | Station Address | 5 | Station ID Code for individual stations or groups of stations |
| 4 | Command/Status | 5 | Command or status sent to addressed station(s) |
| 5 | System State | 2 | Basic or Information Data Frame plus 2 spares |
| 6 | Error Check CRC | 16 | Check bits covering all data sent during preceding frame |
| | Total | 33 | |

TABLE 3A. MASTER STATION COMMAND/RESPONSE DATA BLOCK FIELDS

| Field | State | State Name | Description |
|---|---|---|---|
| 1 | 0 | < space > | Fixed data pattern used for all data blocks for system synchronization |
| 2 | 0 1 2 3 | < adr0, adr1, adr2, adr3 > | Address of current data frame (repeats cyclically) |
| 3 | 0 ... 31 | < station_address > | Station ID Code to which Field 4 pertains |
| 4 | 0 ... 31 | — | Command/Status field whose state names depend on mode of Field 5. |
| 5 | 0 1 2 3 | < acquisition, basic_data, information_data, error > | System mode being set by Master Station Command/Response Data Block |
| 6 | all | < CRC > | Cyclic Redundancy Check bits used for error control |

TABLE 3B. MASTER STATION COMMAND/RESPONSE DATA BLOCK FIELDS STATES

| Field | Field Name | Nbr. Bits | Description |
|---|---|---|---|
| 1 | Space | 3 | Baud period |
| 2 | Temporary Station ID Code | 5 | Address of sending station |
| 3 | Request/Response | 1 | Indication of whether station is requesting connection to conference, or responding to Master Station poll |
| | Total | 9 | |

TABLE 4. SLAVE STATION DATA BLOCK FIELDS (ACQUISITION MODE CASE)

| Field | Field Name | Nbr. Bits | Description |
|---|---|---|---|
| 1 | Space | 3 | Baud period |
| 2 | Window | 2 | Frame address for error control |
| 3 | Station Address | 5 | Address for individual stations or groups of stations |
| 4 | Status/Request | 5 | Command or status sent to addressed station(s) |
| 5 | Station ID Code | 5 | Address of sending station |
| 6 | Spare | 1 | Unassigned field |
| | Total | 21 | |

TABLE 5. SLAVE STATION DATA BLOCK FIELDS (REQUEST/RESPONSE CASE)

| State | State Name | Description |
|---|---|---|
| 0 | < new_station > | Polling a newly connected Slave Station to respond immediately upon receipt of Master Station Command/Response Data Block ( < station_address > of Field 3 is set to 0). New Slave Station responds with randomly selected Temporary Station ID Code. |
| 1 | < new_station_with_delay > | Polling multiple newly connected Slave Station to respond upon receipt of Master Station Command/Response Data Block (< station_address > of Field 3 is set to 0). New Slave Stations respond with randomly selected Temporary Station ID Code and with randomly selected delays after receipt of Master Station Command/Response Data Block |
| 2 | < select_new_station > | Poll to newly connected Slave Station using its Temporary Station ID Code as the < station_address > in Field 3. This action directs subsequent acquisition mode polls to the selected newly connected Slave Station. This same command is also used to poll an already connected station to re-assign its predecessor address. |
| 3 | < assign_station_address > | Assign new Slave Station ID Code to new selected Slave Station |
| 4 | < assign_predecessor_address > | Assign a Slave Station the Station ID Code address of its predecessor in the poll string |
| 5 | < confirm_station_address > | Poll newly assigned station by its new Station ID Code to confirm process |
| 6 | < confirm_predecessor_address > | Poll newly assigned station that responds with its assigned predecessor address. |
| 7 | < assignment_complete > | Send confirmation that process is complete to new Slave Station |

TABLE 6. MASTER STATION DATA COMMANDS (FIELD 4) FOR ACQUISITION MODE

| State | State Name | M/S | Description |
|---|---|---|---|
| 0 | < present > | MS | Speaker present at conference station |
| 1 | < absent > | MS | Speaker not present at conference station |
| 2 | < request_to_speak > | MS | Speaker requests being placed in queue to speak |
| 3 | < cancel_request_to_speak > | MS | Speaker requests being removed from queue to speak |
| 4 | < permission_to_speak > | M | Speaker granted permission to speak |
| | < yield > | S | Speaker yields to another speaker |
| 5 | < emotional_response_1 > | MS | Speaker signals his degree of "happiness" with proceedings" |
| 6 | < emotional_response_2 > | MS | Speaker signals his degree of "happiness" with proceedings" |
| 7 | < emotional_response_3 > | MS | Speaker signals his degree of "happiness" with proceedings" |
| 8 | < emotional_response_4 > | MS | Speaker signals his degree of "happiness" with proceedings" |
| 9 | < comprehension_response_1 > | MS | Speaker signals full understanding |
| 10 | < comprehension_response_2 > | MS | Speaker signals good but incomplete understanding |
| 11 | < comprehension_response_3 > | MS | Speaker signals limited understanding |
| 12 | < comprehension_response_4 > | MS | Speaker signals lack of understanding |
| 13 | < request_to_send_1 > | S | Station requests to send Size 1 Information Data Block |
| | < permission_to_send_1 > | M | Permission to send Size 1 Information Data Blocks |
| 14 | < request_to_send_2 > | S | Station requests to send Size 2 Information Data Block |
| | < permission_to_send_2 > | M | Permission to send Size 2 Information Data Blocks |
| 15 | < request_to_send_3 > | S | Station requests to send Size 3 Information Data Block |
| | < permission_to_send_3 > | M | Permission to send Size 3 Information Data Blocks |
| 16 | < request_to_send_4 > | S | Station requests to send Size 4 Information Data Block |
| | < permission_to_send_4 > | M | Permission to send Size 4 Information Data Blocks |
| 17 | < vote_1 > | MS | "Yes" vote or choose item 1 from a list of up to 5 items |
| 18 | < vote_2 > | MS | Choose item 2 from a list of up to 5 items |
| 19 | < vote_3 > | MS | Choose item 3 from a list of up to 5 items |
| 20 | < vote_4 > | MS | Choose item 4 from a list of up to 5 items |
| 21 | < vote_5 > | MS | Choose item 5 from a list of up to 5 items |
| 22 | < vote_6 > | MS | Vote "No" or "None of the above" from a list of up to 5 items |
| 23 | < order > | M | Call meeting to order and begin first agenda item |
| 24 | < close > | M | Close meeting |
| 25 | < end_agenda_item > | M | End current agenda item and pass onto next |
| 26 | < edit agenda > | M | Enter "edit agenda" state where conferees suggest changes |
| 27 - 30 | - spare - | MS | Spare commands for future growth |
| 31 | < error_detected > | MS | CRC error detected by station |

TABLE 7. BASIC DATA BLOCK COMMANDS (M=MASTER, S=SLAVE)

| Field Name | Nbr. Bits | Description |
|---|---|---|
| Space | 3 | Baud period |
| Window | 2 | Frame address for error control |
| Station Address | 5 | Address for individual stations or groups of stations |
| Station ID Code | 5 | Address of originating station |
| Message Type | 5 | Type of information being sent |
| Message | ≤301 | Information field (depends on frame length) |
| Total | ≤321 | |

TABLE 8 INFORMATION DATA FRAME FORMAT

| Parameter | Descriptions |
|---|---|
| Conference connectability | The maximum number of stations that can be connected to a conference bridge for a single conference. |
| Summing junction station connectability | The number of stations that the conference bridge will allow to be simultaneously connected to the summing junction of the bridge. For a large number of stations connected to a conference, the number allowed to be connected is a subset of the total number of stations. |
| Attack time | The time that occurs from the presence of a signal at the input of a conference bridge and the time when signal energy is allowed to pass to the summing junction. This parameter determines whether clipping of the first part of a signal from a new source occurs. If it is significant, it could require that a new data block be preceded by one or more baud periods containing no data and could have a serious effect on overall system throughput for Basic Data Frames. |
| Acquisition time | The minimum duration of an input signal required to capture a position on the summing junction. The block time for a Basic Data Block must be longer than this time in order for a system to operate. |
| Dwell time | The amount of time that a conference bridge retains a connection from a station to the summing junction after the station is no longer sending energy. This time, coupled with the number of stations that the bridge will simultaneously connect to the summing junction, can affect system throughput. |

TABLE 10 CONFERENCE BRIDGE CRITICAL PARAMETERS

| State | State Name | Average Length (bits) | M/S | Description |
|---|---|---|---|---|
| 0 | < chair > | – | M | Identification of all speakers (< speaker_ID > )and other Station Status reporting |
| | < speaker_ID > | 24 | S | Identification of current speaker (conferee) at Slave Station |
| 1 | < agenda_item_delete > | 15 | MS | Designate number of agenda item to be deleted |
| 2 | < agenda_item_reorder > | 30 | MS | < old_item_number > < new_item_number > |
| 3 | < agenda_item_revised_topic > | 175 | MS | < agenda_item_number > < new_topic_title > |
| 4 | < agenda_item_new_ID > | 42 | MS | < agenda_item_number > < ID1 \| ID2 > < Speaker_ID > |
| 5 | < agenda_item_new_start_time > | 27 | MS | < agenda_item_number > < start_time > |
| 6 | < agenda_item_new_duration > | 27 | MS | < agenda_item_number > < duration > |
| 7 | < agenda_document_change > | 279 | MS | < agenda_item_number > < document_reference > < delete \| add > < old_document_reference > < document_title > < document_file_name > |
| 8 | < agenda_item_add > | 755 | MS | < agenda_item_number > < topic_title > < speaker_ID1 > < speaker_ID2 > < duration > < start_time > < document_reference1 > < document_reference2 > < document1_title > < document1_file_name > < document2_title > < document2_file_name > |
| 9 | < action > | 363 | MS | < action_text > < actionee_ID1 > < actionee_ID2 > < due_date > |
| 10 | < record > | 402 | MS | < record_text > |
| 11 | < vote_text > | 810 | M | < vote_code > < vote_text > < private \| public > < timer > |
| 12 | < vote_response > | 33 | M | < vote_code > < Station_ID > < Station_ID > < vote_response > < repeated_vote_response > |
| 13 | < ballot_result > | 129 | M | < vote_response > < private \| public > < votes_for > < votes_against > < number_abstentions > < PERSIDs_if_public > < for \| against \| abstentions > |
| 14 | < private_note_out > | 807 | MS | < unique_note_ID > < note_sender_Station_ID_Code > < addressee_Station_ID > < note_text > |
| 15 | < private_note_reply > | 807 | MS | < unique_note_ID > < note_sender_Station_ID > < addressee_Station_ID > < note_text > |
| 16 | < standard_whiteboard_text > | 33 | MS | < whiteboard_text > |
| 17 | < language_1_translation_whiteboard_text > | 33 | MS | < whiteboard_text > |
| 18 | < language_2_translation_whiteboard_text > | 33 | MS | < whiteboard_text > |
| 19 | < language_3_translation_whiteboard_text > | 33 | MS | < whiteboard_text > |
| 20 | < language_4_translation_whiteboard_text > | 33 | MS | < whiteboard_text > |
| 21 | < long_whiteboard_text > | 1,080 | MS | < whiteboard_text > |
| 22 | < translate_on \| off > | 6 | M | < 1 \| 2 \| 3 \| 4 > < on \| off > |
| 23-31 | < spare > | – | – | Spare commands for future growth |

TABLE 9. INFORMATION DATA BLOCKS

## Claims

1. Conferencing apparatus comprising display means visible to at least one conference participant, display driving means adapted to display conference parameters on said display means, and discrete input means operable by respective conference participants to modify variable said conference parameters displayed on said display means, said input means including reaction input means to input a signal which controls a displayed conference parameter which is indicative of a reaction of the respective conference participant to a conference event and/or the displayed conference parameters.

2. Conferencing apparatus as claimed in Claim 1, wherein said display means comprises discrete displays for respective conference participants.

3. Conferencing apparatus wherein at least one conference participant is located remotely and connected to the or each other conference participant by at least one analogue telephone channel, comprising display means including a discrete display for the or each remote conference participant; an associated respective display driver adapted to display conference parameters on a said display, discrete input means operable by respective conference participants to modify variable said conference parameters displayed on each said discrete display; modem means for the or each remote conference participant to provide data over voice modulation for the transmission and reception of data between the or each remote conference participant and other conference participants, said data defining at least modifications of said variable conference parameters.

4. Conferencing apparatus as claimed in Claim 3, wherein said input means includes reaction input means to input a signal which controls a displayed conference parameter which is indicative of a reaction of the respective conference participant to a conference event and/or the displayed conference parameters.

5. Conferencing apparatus as claimed in Claim 1 or Claim 4, wherein said reaction input means includes approval input means operative to input a signal which controls a displayed conference parameter indicative of the level of approval of the respective conference participant to a conference event, and comprehension input means operable to input a signal which controls a displayed conference parameter indicative of the level of understanding of the respective conference participant during a conference.

6. Conferencing apparatus as claimed in any preceding claim, wherein said input means includes identification means to input a signal to identify the respective conference participant for display as a conference parameter.

7. Conferencing apparatus as claimed in any preceding claim, wherein said input means includes speaker identification means to input a signal to control a displayed conference parameter to identify the conference participant speaking.

8. Conferencing apparatus as claimed in any preceding claim including automatic identification means to identify conference participants automatically and control said display driving means to indicate said identities as conference parameters on said display means.

9. Conferencing apparatus as claimed in any preceding claim, wherein said input means includes attendance input means to input a signal which controls a displayed conference parameter to indicate that the respective conference participant is temporarily absent.

10. Conferencing apparatus as claimed in any preceding claim including a respective voice detector for each conference participant, and automatic speaker identification means responsive to said voice detector to identify the conference participant speaking automatically and control said display driving means to identify said conference participant on said display means.

11. Conferencing apparatus as claimed in any preceding claim, wherein said input means includes a request to speak input means to input a signal which controls a displayed conference parameter to identify that the respective conference participant wishes to speak.

12. Conferencing apparatus as claimed in any preceding claim, wherein each discrete input means includes voting input means operative by respective conference participants to input a voting decision; said display driving means being operative in response to said voting input means to display results of the ballot on said display means.

**13.** Conferencing apparatus as claimed in Claim 3, wherein the or each modem means includes band pass filter means operative to filter out a spectral portion of the voice signal to enable data transmission in said spectral portion, and to filter out received data in said spectral portion to enable clear voice reception at a receiving loudspeaker.

**14.** Conferencing apparatus as claimed in Claim 13 wherein said band pass filter means comprises low pass filter means operative to filter out a high frequency band of the voice signal before transmission, the or each said modem means including modulator means to modulate the data for transmission in said high frequency band and adder means to add the low pass filtered voice signal and the modulated data for transmission, to form a data over voice modulation signal for transmission; said band pass filter means further comprising high pass filter means and second low pass filter means operative in combination to separate modulated received data and a voice signal from a received data over voice modulation signal, the or each said modem means further including demodulator means to demodulate received data.

**15.** Conferencing apparatus as claimed in Claim 14 including band pass control means selectively operable to control the low and high pass filter means and said modulator and demodulator means to disable the transmission of speech and allow for the transmission of said data over substantially the whole bandwidth of a said analogue telephone channel.

**16.** Conferencing apparatus as claimed in any one of Claims 3 or 13 to 15 wherein telephone apparatus is provided at a plurality of remote locations, including at each remote location modem control means, one said modem control means operating as conference controller and being operable by a conference participant designated as chairman; said conference controller being operative to assign positions within a poll sequence to modem control means at each remote location, each modem control means being operative to control a respective modem to transmit data in its assigned position in said poll sequence, and to receive data from each of the other modems at other times.

**17.** Conferencing apparatus as claimed in Claim 16 wherein said conference controller is operative to determine if one or more modems are quiescent and have not transmitted data within a predetermined time, and if so said conference controller is operative to control a respective modem to transmit surrogate data during the period in said poll sequence assigned to the or each quiescent modem, and to instruct the modem control means associated with the modem next in said poll sequence to transmit data in the next cycle during the position in said poll sequence assigned to the preceding quiescent modem.

**18.** Conferencing apparatus as claimed in Claim 16 or Claim 17 wherein each said modem control means is assigned an identification code by said conference controller, said conference controller being operative to periodically transmit a new station signal in response to which modem control means already assigned a position in said poll sequence become quiescent for a predetermined period of time, and in response to which modem control means not assigned a position in said poll sequence transmit a randomly selected identification code, said conference controller being operative in response to said randomly selected identification code to transmit an assigned identification code to the unassigned modem control means to assign a position in said poll sequence.

**19.** Conferencing apparatus as claimed in Claim 18 wherein said conference controller is operative if more than one unassigned modem control means transmit different randomly selected identification code at the same time or the same identification code, to ignore the response and transmit a new station with delay signal in response to which each said unassigned modem control means transmit a randomly selected identification code after a randomly selected time delay.

**20.** Conferencing apparatus as claimed in any one of Claims 3 or 13 to 19, including discrete voice circuitry for the or each remote conference participant including a microphone; and dialogue control means operable by a predetermined conference participant designated as a chairman, to selectively disconnect the microphones of the conference participants.

**21.** Conferencing apparatus as claimed in Claim 20, including signaling means for the or each remote conference participant responsive to a conference participant to generate a request to speak signal to be transmitted to said chairman.

22. Conferencing apparatus as claimed in Claim 17, including control circuitry provided at said chairman's location which is operative to generate an acknowledgment signal for transmission to a conference participant from whom said request to speak signal is received, a respective display driver at said chairman's location being operative in response to reception of said request to speak signal to display the identity of the conference participant from whom the request to speak signal originated.

23. Conferencing apparatus as claimed in Claim 22, wherein said control circuitry at each remote location is operative to generate a present signal for transmission in a time slot of a poll sequence, said poll sequence corresponding to the sequence of said identification codes transmitted by said chairman.

24. Conferencing apparatus as claimed in Claim 22 including display means and display driving means at each remote location; said store means at each remote location being adapted to store the identification codes and respective identities of all conference participants; each said control circuitry being operative in response to a received present signal from a conference participant to look-up the identity of said conference participant by comparing the identification code corresponding to the position of the time slot in said poll sequence with the stored identification codes, said display driving means being operative to display said identify on said display means.

25. Conferencing apparatus as claimed in Claim 16 wherein each said discrete input means is operable by a conference participant to generate a request to speak signal for transmission to the or each other conference participant, the conference controller being responsive to said request to speak signal to add the identification of the conference participant requesting to speak automatically to a queue, the or each said discrete display being operative to display the identity of the queued conference participants.

26. Conferencing apparatus as claimed in any one of Claims 3 or 13 to 25, wherein the or each remote conference participant is further connected by a second telephone voice channel for the transmission and reception of video images, said apparatus further including at each remote location video means to provide a video image of at least a speaking conference participant and video modem means to transmit and receive a video image to and from the or each remote conference participant; respective said display drivers being adapted to display said video image on associated said displays.

27. Conferencing apparatus as claimed in any one of Claims 3 or 13 to 26, including clock means associated with said display means such that each discrete display has an associated discrete clock; said clock means being operative to count down from a preset conference time length; and said display driving means being operative to display said count down on said display means.

28. Conferencing apparatus as claimed in Claim 27, including warning means operative in response to said clock means to cause said display driving means to display a warning, when said count reaches a preset value.

29. Conferencing apparatus as claimed in any preceding claim including text generating means operative to generate a text message in response to inputs from said input means, said display driving means being operative to display said text on said display means.

30. Conferencing apparatus as claimed in any one of Claims 2 to 28 including text generating means operative to generate a text message in response to inputs from a respective discrete input means operated by a conference participant, said text message being displayed by a respective display driver on an associated display, and message transmission means operative to transmit said text message to a selected conference participant for display by a respective display driver on an associated display only.

31. Conferencing apparatus for use where at least one conference participant is located remotely and is connected to the or each other conference participant by a single analog telephone voice channel, the apparatus comprising, at each remote conference participant's location, modem means arranged to provide data over voice modulation on said voice channel for transmitting or receiving data to or from other conference participants; a display; input means operative to generate data for display; processing means to control said modem means to transmit said generated data and to receive data for display generated remotely; and a display driver arranged to display said generated data and/or said received data on said display.

**32.** Conferencing apparatus for use where at least one conference participant is located remotely and is connected to the or each other conference participant by a single analogue telephone voice channel, the apparatus comprising, at each remote conference participant's location, modem means arranged to provide data over voice modulation on said voice channel for transmitting or receiving data to or from other conference participants; a display; input means operative to generate data for display; processing means to control said modem means to transmit said generated data and to receive data for display generated remotely; and a display driver arranged to display said generated data and/or said received data on said display.

**33.** Conferencing apparatus as claimed in Claim 32, wherein said processing means is responsive to control data received via said modem means to enable said input means to generate said data for display.

**34.** Conferencing apparatus as claimed in Claim 32, wherein said processing means is responsive to a disabling signal received via said modem means to disable said input means from generating said data for display.

**35.** Conferencing apparatus as claimed in Claim 34, wherein said processing means is operative in response to an access demand signal from said input means to generate and transmit via said modem means a said disabling signal to the or each other conference participant and to enable said input means to generate said data for display.

**36.** Conferencing apparatus as claimed in any one of Claims 32 to 35, wherein said input means is operative to generate data for display as text.

**37.** Conferencing apparatus as claimed in any one of Claims 32 to 36, wherein said processing means and said display driver are operative to continue displaying the most recently displayed data as further said generated data and/or said received data is added to the display.

**38.** Conferencing apparatus as claimed in any one of Claims 32 to 37, including cursor generating means operable by a conference participant to generate and move a cursor to indicate a position in the displayed data to the or each other conference participant; said cursor generating means being further operable to move said cursor in response to control data received via said modem means from one of the other conference participants.

**39.** Conferencing apparatus as claimed in any one of Claims 32 to 38, including at another location, modem means to provide data over voice modulation on said voice channel for transmitting or receiving data to or from the conference participants; a display; input means to input a translation from one language to another of any text in the received data; translator processing means to control said modem means to transmit said translation, and to receive data for display generated remotely; and a display driver arranged to display said received data and its associated input translation on said display; said translator processing means being operative to transmit said translation to selected ones of said conference participants.

**40.** Conferencing apparatus as claimed in Claim 39, wherein said translator processing means is operative to transmit said translation to a conference participant in response to control data received from said modem means at said conference participant's location.

**41.** Conferencing apparatus as claimed in any one of Claims 32 to 40, including data storage means, wherein said discrete input means is operable by a conference participant to generate a save data signal, and said processing means is operative in response to said save data signal to store the data displayed on said display means in said data storage means.

**42.** Conferencing apparatus as claimed in Claim 32 wherein said processing means is operative to run the same application program which provides a display on a respective display, and to synchronise the running of the program at each remote location such that a conference participant can interact with the program at a remote location whereupon said interaction is communicated to each other remote location and the running of the program at each location is synchronised.

**43.** Conferencing apparatus comprising telephone apparatus for use where a plurality of telephone apparatuses are connected to each other by a single analogue telephone voice channel, said telephone apparatus comprising a microphone and remote mute means operable by a conference participant to selectively mute microphones of the other telephone apparatuses being operated by other conference participants.

**44.** Conferencing apparatus as claimed in Claim 43, wherein said remote mute means comprises control circuitry operable by a conference participant designated as controller to generate a disabling signal to be transmitted to at least one of said other conference participants to disable respective microphones.

**45.** Conferencing apparatus as claimed in Claim 43, wherein each conference participant has a unique identification code, said control circuitry being operable to generate a disabling signal which is acted upon by only the telephone apparatus of a conference participant to be muted.

**46.** Conferencing apparatus as claimed in Claim 44 or Claim 45, including input means operable a participant to enable said conference participant to activate said control circuitry and become said controller.

**47.** Conferencing apparatus as claimed in Claim 44, or Claim 45, wherein telephone apparatus is provided at a plurality of remote locations; including input means at each remote location operable by respective conference participants to input respective identification codes; store means at the location of the controller adapted to store the identification codes of all conference participants; and store means at each remote location adapted to store a respective identification code; said control circuitry at the location of said controller being operative to retrieve the identification codes of the conference participants from respective said store means for transmission to the conference participants in a sequence, said control circuitry at each remote location being operative to compare the stored identification code with the received identification codes and, if a match is found, generate a present signal for transmission to the other conference participants to identify that said conference participant is connected to said single telephone voice channel.

**48.** Conferencing apparatus as claimed in Claim 47, wherein said control circuitry at each remote location is operative to generate a present signal for transmission in a time slot of a poll sequence, said poll sequence corresponding to the sequence of said identification codes transmitted by said controller.

**49.** Remote conferencing apparatus as claimed in Claim 48 including display means and display driving means at each remote location; said store means at each remote location being adapted to store the identification codes and respective identities of all conference participants; each said control circuitry being operative in response to a received present signal from a conference participant to look-up the identity of said conference participant by comparing the identification code corresponding to the position of the time slot in said poll sequence with the stored identification codes, said display driving means being operative to display said identify on said display means.

**50.** Conferencing apparatus as claimed in any one of Claims 47 to 49, wherein said input means is operable by a conference participant whom has finished speaking to generate a finished speaking signal for transmission to said controller; the respective control circuitry being operative in response to said finished speaking signal to generate a disabling signal to disable the microphone.

**51.** Conferencing apparatus as claimed in Claim 43, wherein telephone apparatus is provided at a plurality of remote locations; including input means at each remote location, said input means being operable by a respective conference participant to generate a request to speak signal to be transmitted to said controller.

**52.** Conferencing apparatus as claimed in Claim 49, wherein said control circuitry is operative to identify the conference participant from whom the request to speak signal originated; said apparatus including display means and display driving means at each remote location; said display driving means at the location of said controller being operative in response to said request to speak signal to display the identity of the conference participant requesting to speak on said display means; said input means being operative by said controller to generate said acknowledgment signal for transmission to the remote location from which said request to speak signal is received; and said display driving means at the location of the conference participant requesting to speak being operative in response to said acknowledgment signal to display an acknowledgment on said display means.

53. Conferencing apparatus as claimed in Claim 52, wherein said control circuitry includes store means and is operative in response to the generation of said acknowledgment signal to add the identity of the conference participant requesting to speak to a queue in said store means and to modify said acknowledgment signal to include information on the position in said queue; said display driving means at the location of said controller being operative to display the identity of the conference participants in said queue on the respective display means; said display driving means at the location of the conference participant requesting to speak being operative in response to said modified acknowledgment signal to display the position in said queue on the respective display means.

54. Conferencing apparatus as claimed in Claim 51 wherein said control circuitry is operative to identify the conference participant from whom the request to speak signal originated; said apparatus including display means and display driving means at each remote location; said control circuitry including store means and is operative in response to said request to speak signal to add the identity of the conference participant requesting to speak automatically to a queue in said store means, and to transmit a queue signal which identifies the conference participant requesting to speak and the position in the queue, the display means at each remote location being operative in response to said queue signal to display the position in the queue and identity of the conference participants requesting to speak.

55. Conferencing apparatus as claimed in Claim 47, said input means is operative by a conference participant identified in said queue to generate a cancel signal for transmission to said controller after receipt of an acknowledgment signal; wherein said control circuitry is operative to remove the identity of the conference participant from said queue in said store means, and to modify the acknowledgment signal with updated position information for transmission to the conference participant, said input means being further operative by a conference participant to cancel said request to speak signal prior to receipt of said acknowledgment signal.

56. Conferencing apparatus as claimed in any one of Claims 43 to 55, wherein the telephone apparatus is provided within a telephone handset.

57. Remote conferencing apparatus for use during the organizing of a conference between prospective conference participants at remote locations connected together by a telephone channel; said apparatus comprising at each remote location a modem; memory means containing a diary for a prospective conference participant; input means for inputting information into said diary in said memory means and modem control means responsive to said input means; modem control means at a location being operative in response to a respective input means operable by a conference organizer to dial each prospective conference participant in turn to access respective diaries to determine a common date and time available for each prospective conference participant, and to make an entry temporarily in respective diaries if a common date and time is available; said input means at a prospective conference participant's location being operative by a prospective conference participant to generate an acceptance signal for transmission to the conference organizer; said modem control means at the location of the conference organizer being operative to make a permanent entry in respective diaries if an acceptance signal is received from all said prospective conference participants.

58. Remote conferencing apparatus as claimed in Claim 57, wherein the modem control means at the conference organizer's location is operative in response to respective input means to transmit an agenda for the proposed conference to each prospective conference participant when a temporary entry is made in each diary.

59. Remote conferencing apparatus as claimed in Claim 57 or Claim 58, wherein the input means at the conference organizer's location is operable to generate an abandon signal when a conference is to be abandoned, and the respective modem control means is operative in response to said abandon signal to dial each prospective conference participant in turn to access respective diaries, and to delete the common entries made therein for the abandoned conference.

60. Remote conferencing apparatus as claimed in any one of Claims 57 to 59 including warning means at each remote location operative to warn respective prospective conference participants at a preset time prior to the time of the conference.

61. A method of improving communication between conference participants during a conference where at least one conference participant is at a remote location and is in audio or audio and video communication with the other conference participants using at least one common analogue telephone channel; said method comprising the repeated steps of, for the or each conference participant at a remote location, generating data representing conference parameters, said data being modifiable by a respective conference participant, transmitting said data to the or each other conference participant, using an analogue telephone channel which is also being used for speech transmission and receiving said data from the or each other conference participant, the transmitted and received conference parameters being displayed during transmission and reception.

**62.** A method as claimed in Claim 61, wherein said data represents at least one of a group comprising, reactions of a conference participant to a conference event and displayed conference parameters, the identity of said conference participant, an indication of a request to speak, identification of a conference participant speaking, a voting decision, statistical analysis data on conference parameters, text data, translated text data, and microphone disconnection commands.

**63.** A method as claimed in Claim 61 or Claim 62, wherein each said conference participant transmits said data during an assigned time slot in a poll sequence, and receives data at other times.

**64.** A method as claimed in any one of Claims 61 to 63, wherein said conference participants are in audio communication using a single analogue telephone voice channel and said data is transmitted and received over said single telephone voice channel.

**65.** A method as claimed in Claim 64, wherein a spectral portion of the voice signal is filtered out to enable data transmission in said spectral portion, and during reception the received data in said spectral portion is filtered out to enable clear voice reception at a receiving loudspeaker.

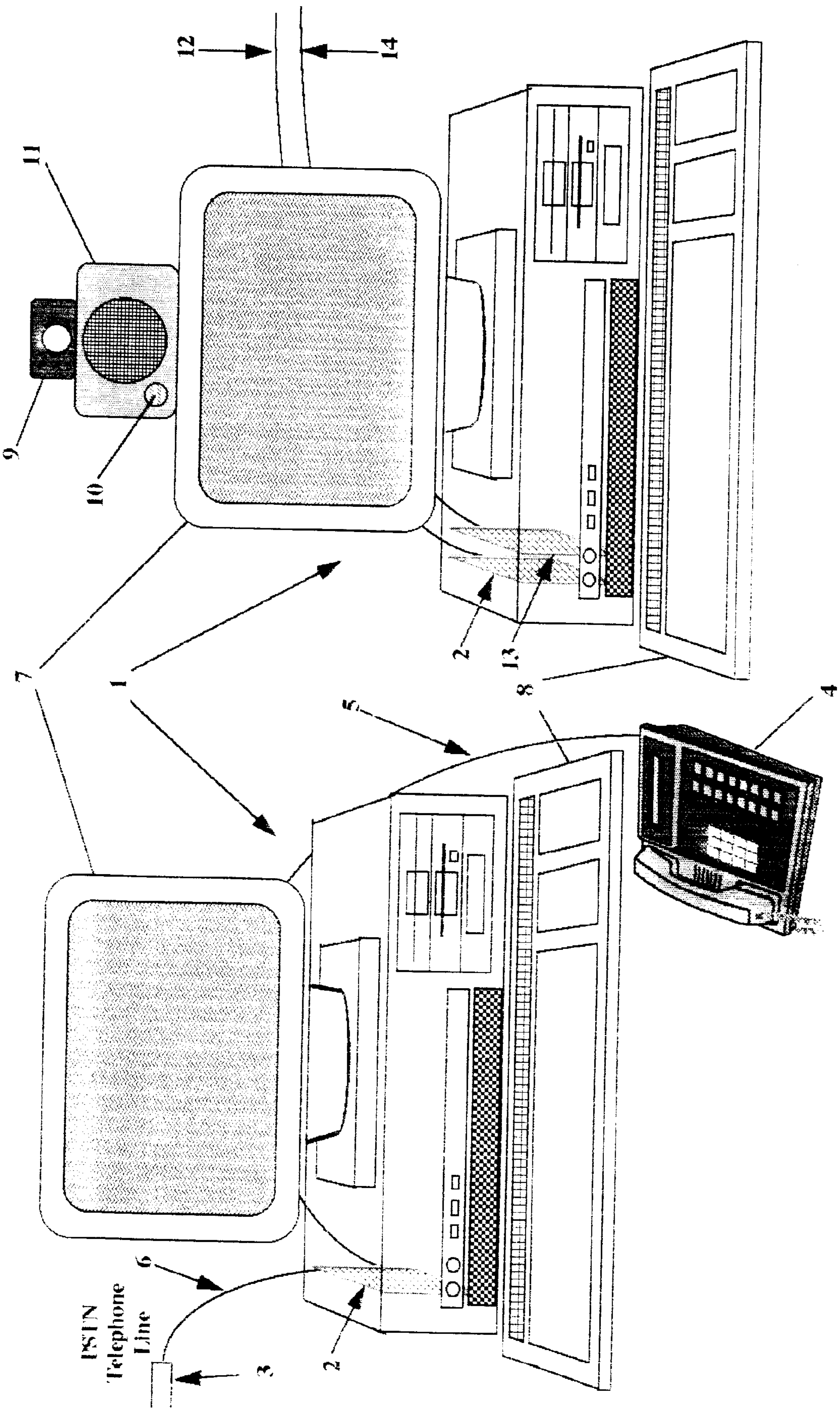


FIG. 1A.

FIG. 1B.

FIG. 2.

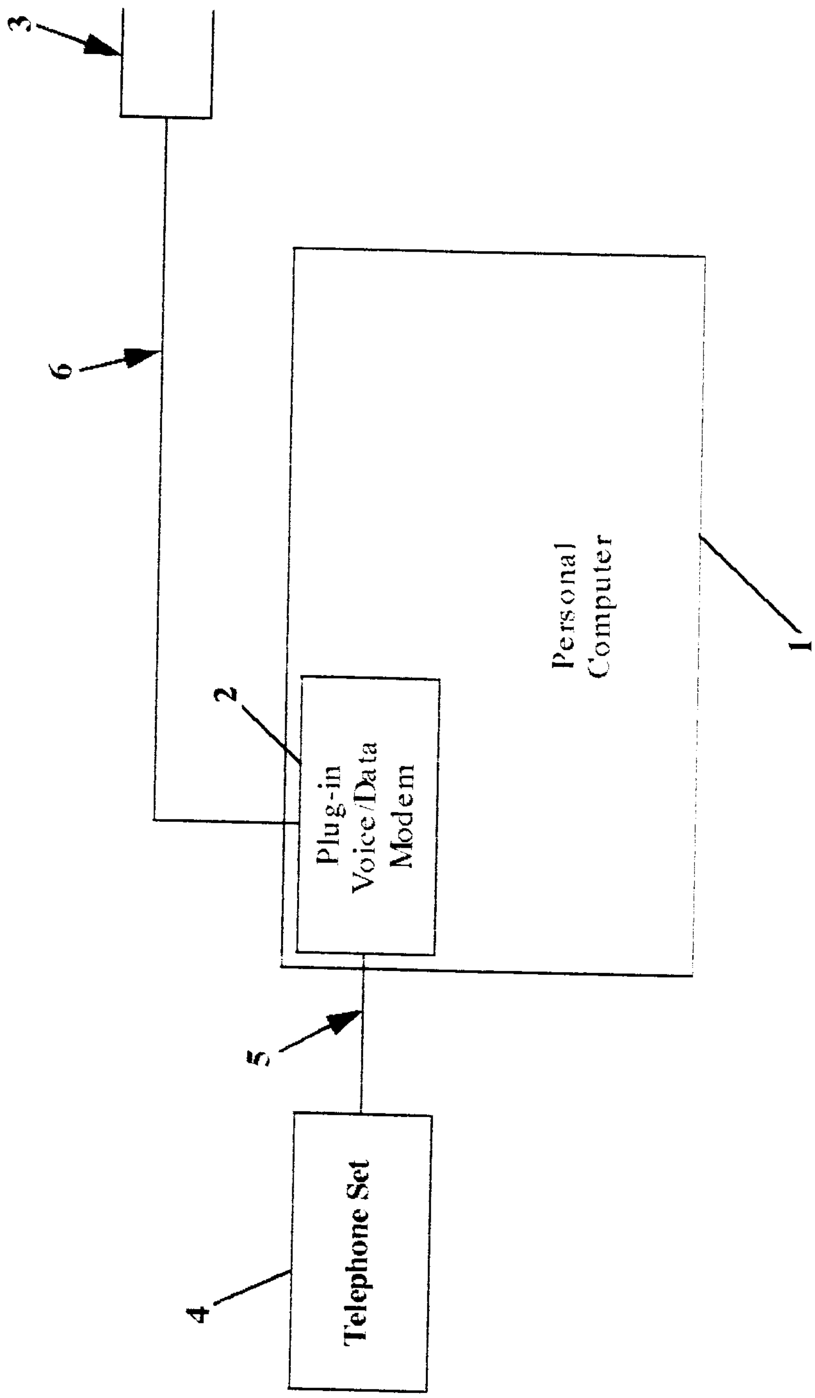
3
6
2
Plug-in
Voice/Data
Modem
Personal
Computer
1
5
4
Telephone Set

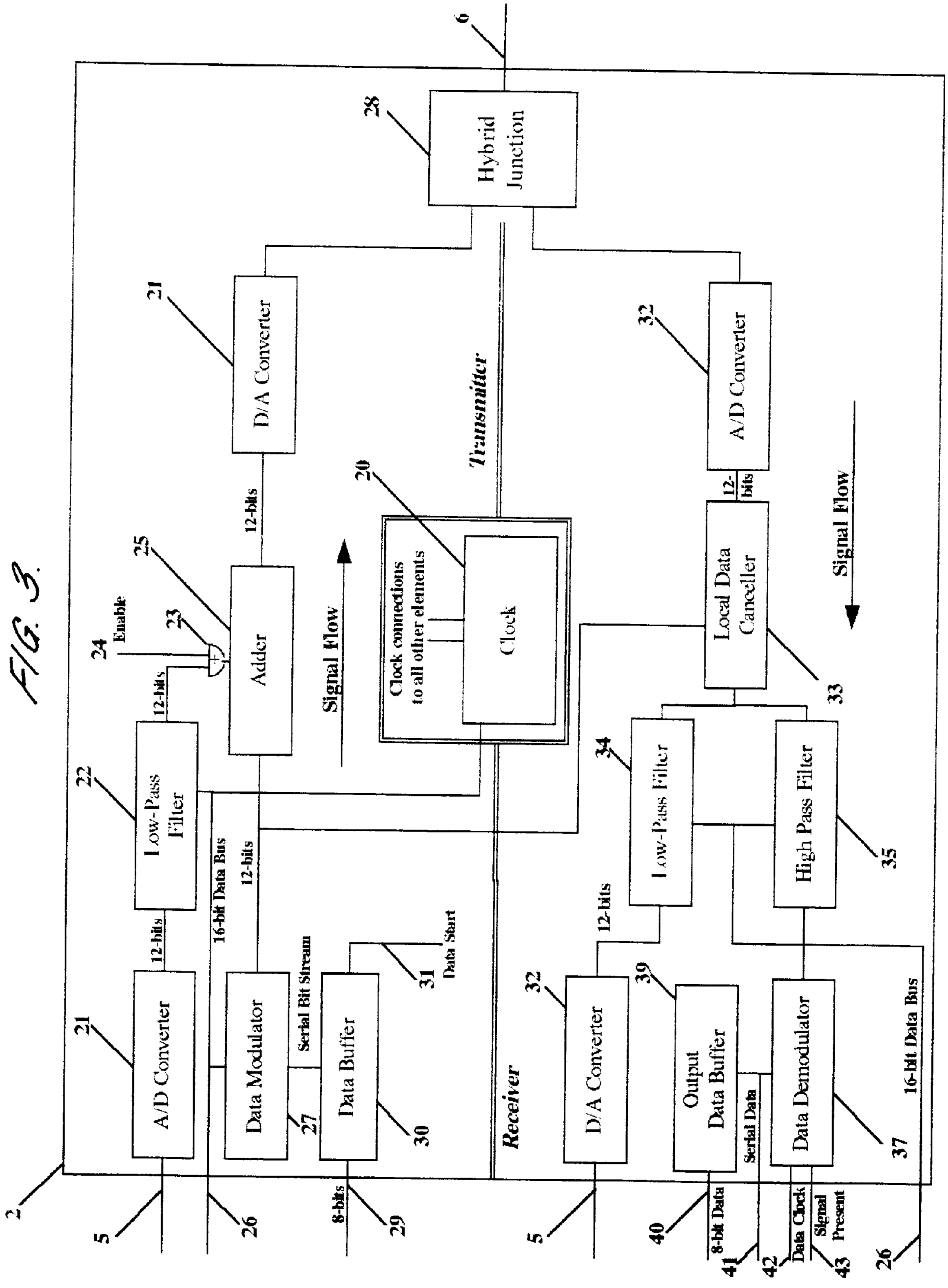
Hybrid Junction
28
6
D/A Converter
21
12-bits
Adder
25
23
24
Enable
12-bits
Low-Pass Filter
22
A/D Converter
21
12-bits
16-bit Data Bus
12-bits
Data Modulator
27
Serial Bit Stream
Data Buffer
30
31
Data Start
Signal Flow
Clock connections to all other elements
Clock
20
Transmitter
Receiver
A/D Converter
32
12-bits
Local Data Canceller
33
Signal Flow
Low-Pass Filter
34
High Pass Filter
35
12-bits
D/A Converter
32
Output Data Buffer
39
Serial Data
Data Demodulator
37
16-bit Data Bus
2
5
26
8-bits
29
5
40
8-bit Data
41
42
Data Clock
Signal Present
43
26
FIG. 3.

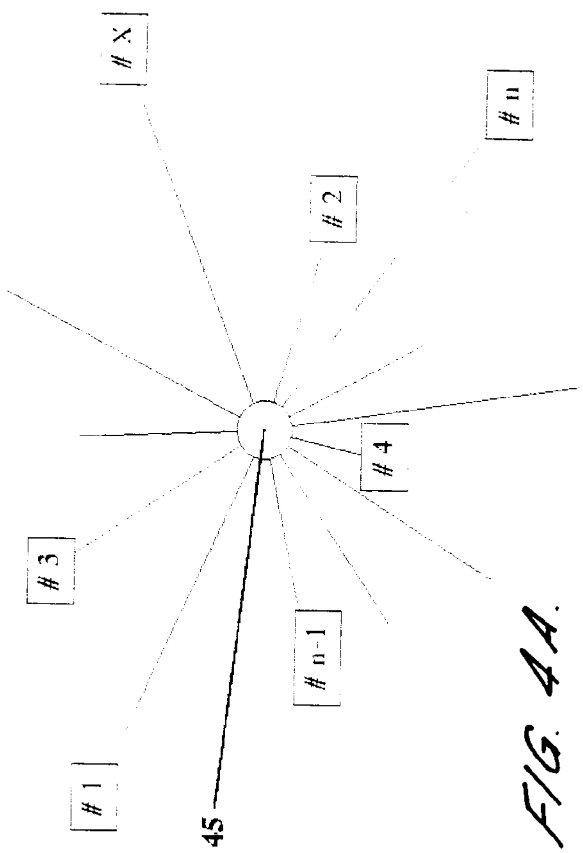


FIG. 4A.

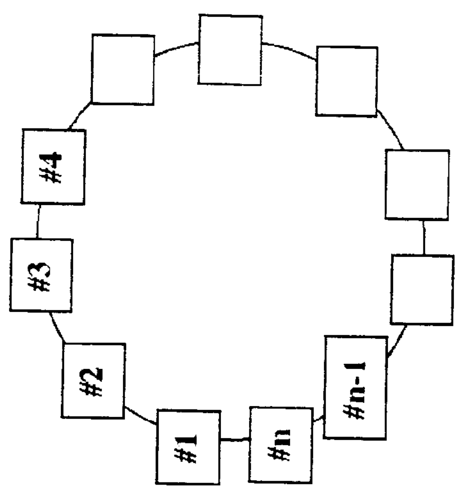


FIG. 4B.

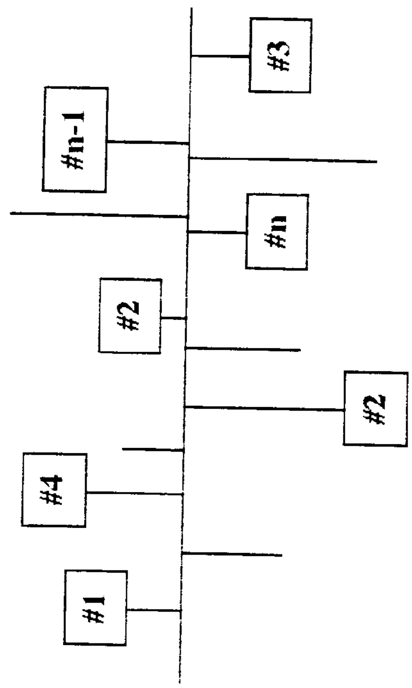


FIG. 4C.

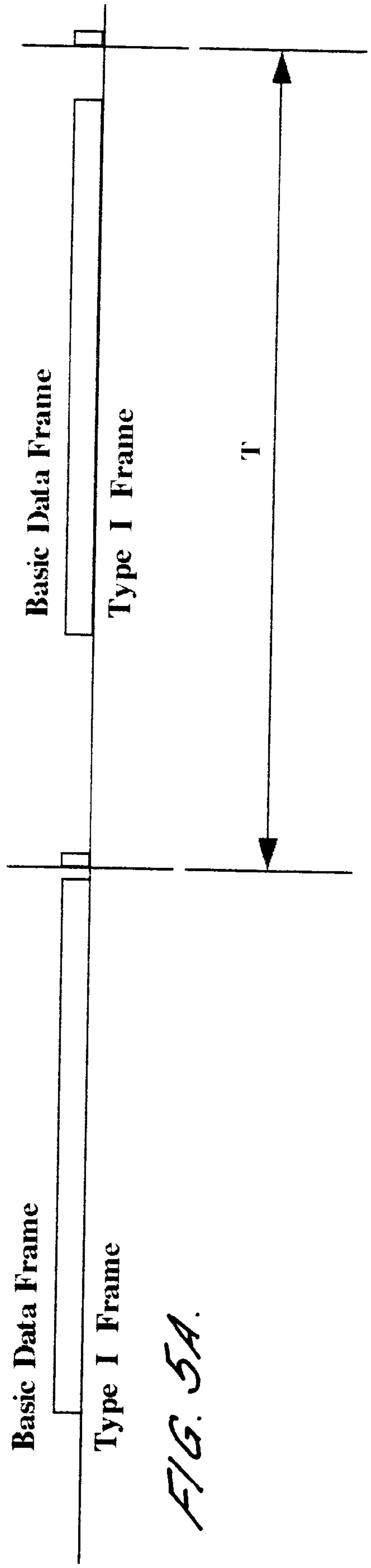

Basic Data Frame
Type I Frame
T
Basic Data Frame
Type I Frame


FIG. 5A.

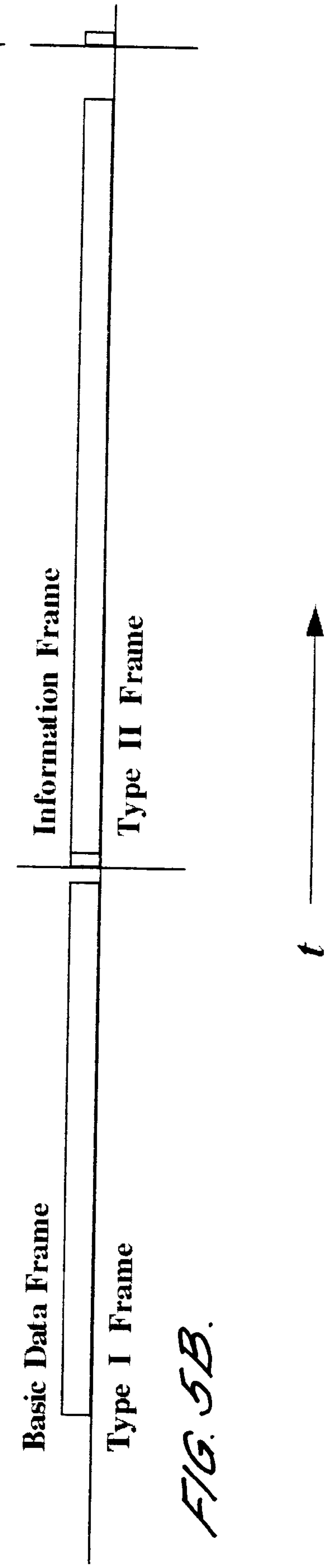

Basic Data Frame
Type I Frame
Information Frame
Type II Frame
t


FIG. 5B.

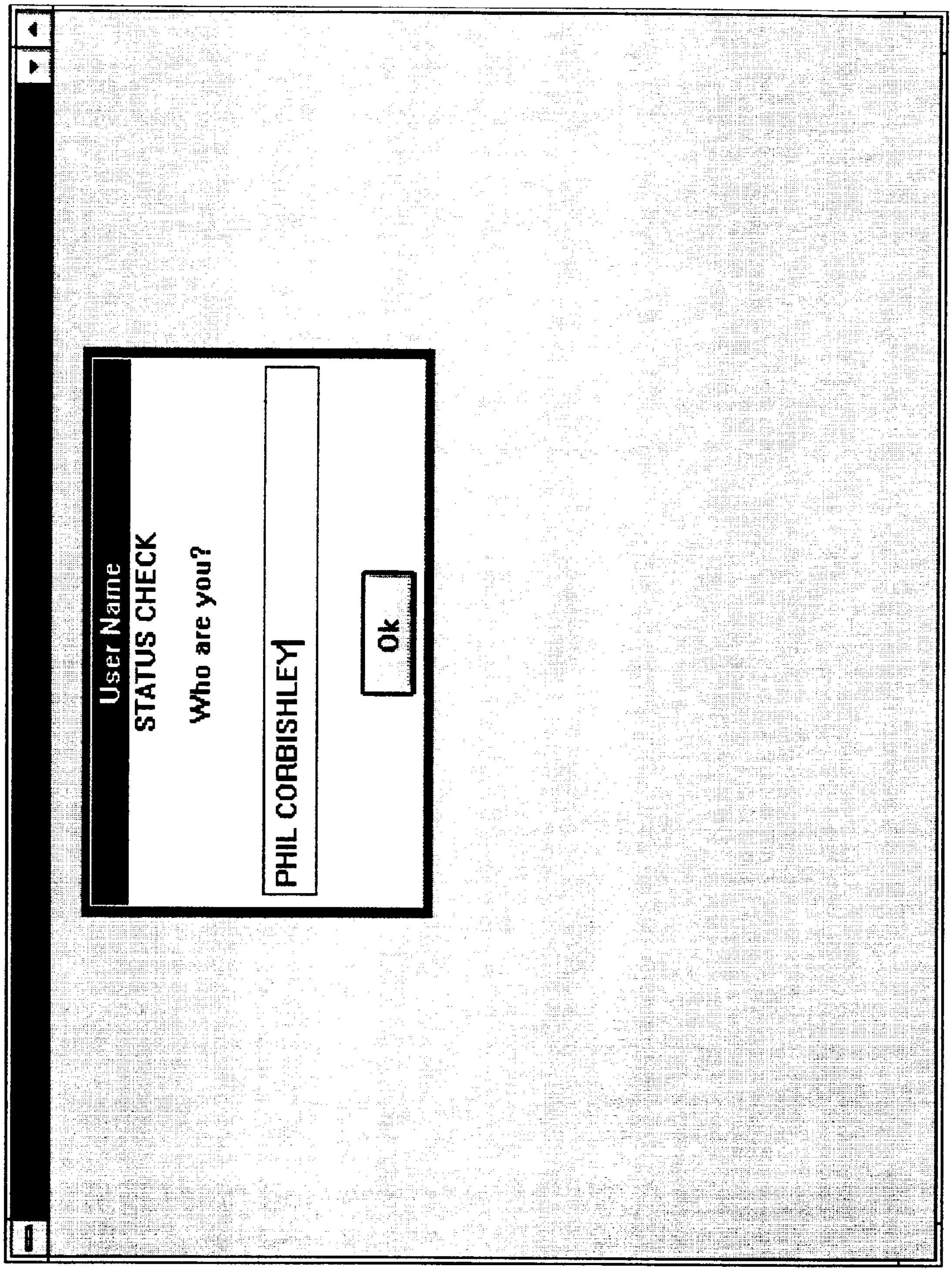


FIG. 6.

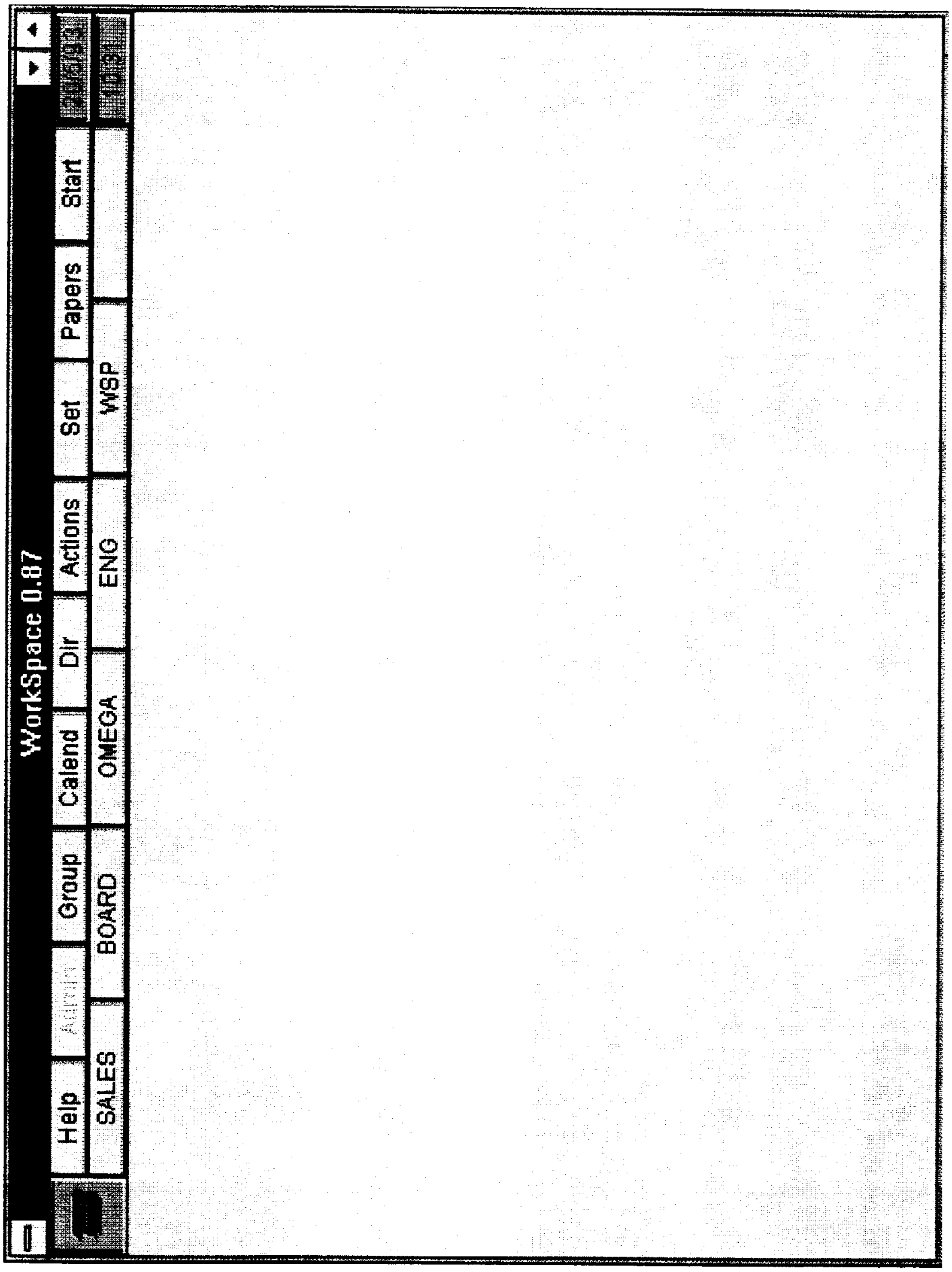
WorkSpace 0.87
Help
Group
Calend
Dir
Actions
Set
Papers
Start
SALES
BOARD
OMEGA
ENG
WSP

FIG. 7.

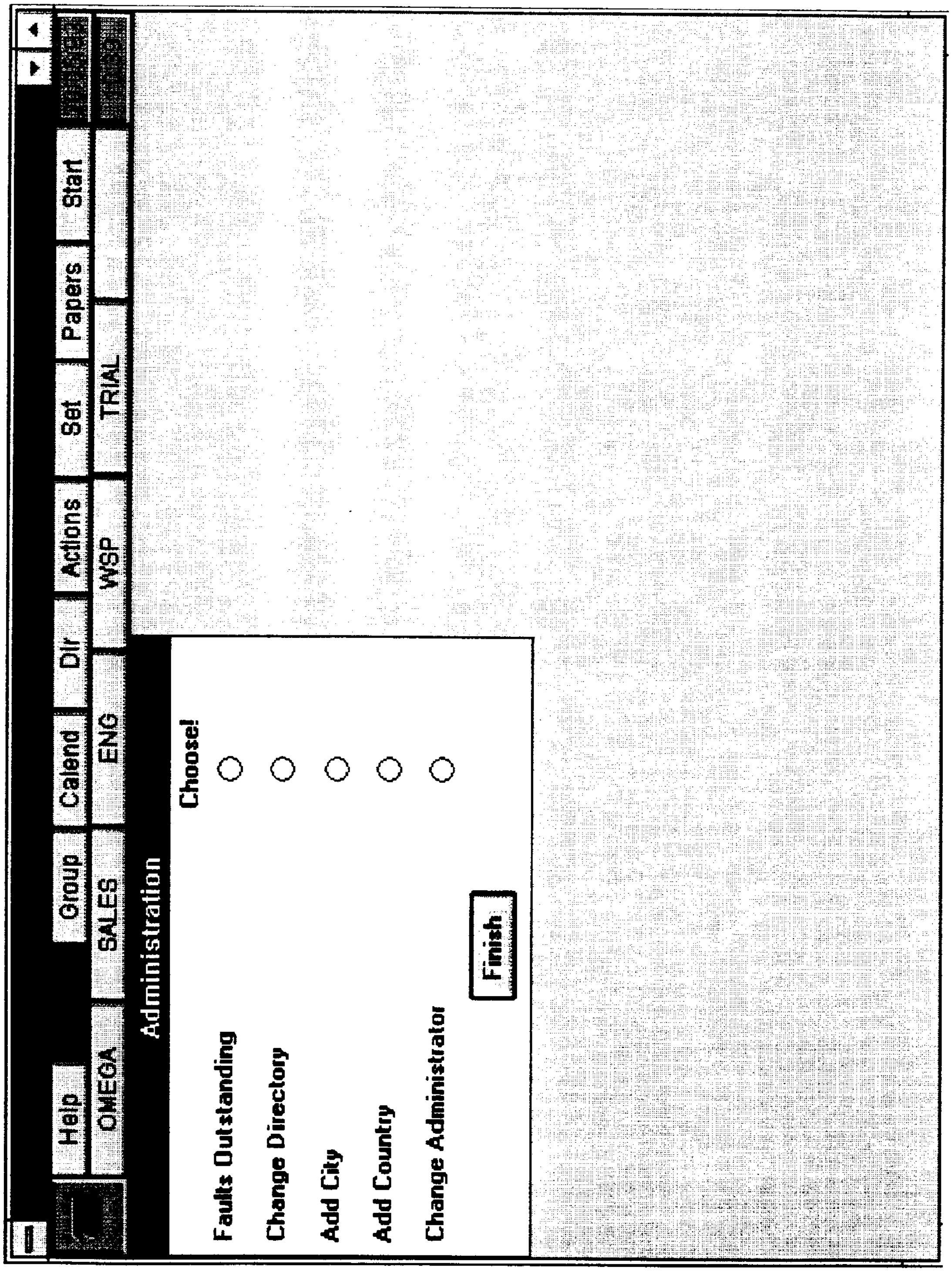
Help
Group
Calend
Dir
Actions
Set
Papers
Start
OMEGA
SALES
ENG
WSP
TRIAL
Administration
Choose!
Faults Outstanding
Change Directory
Add City
Add Country
Change Administrator
Finish

FIG. 8.

FIG. 9.

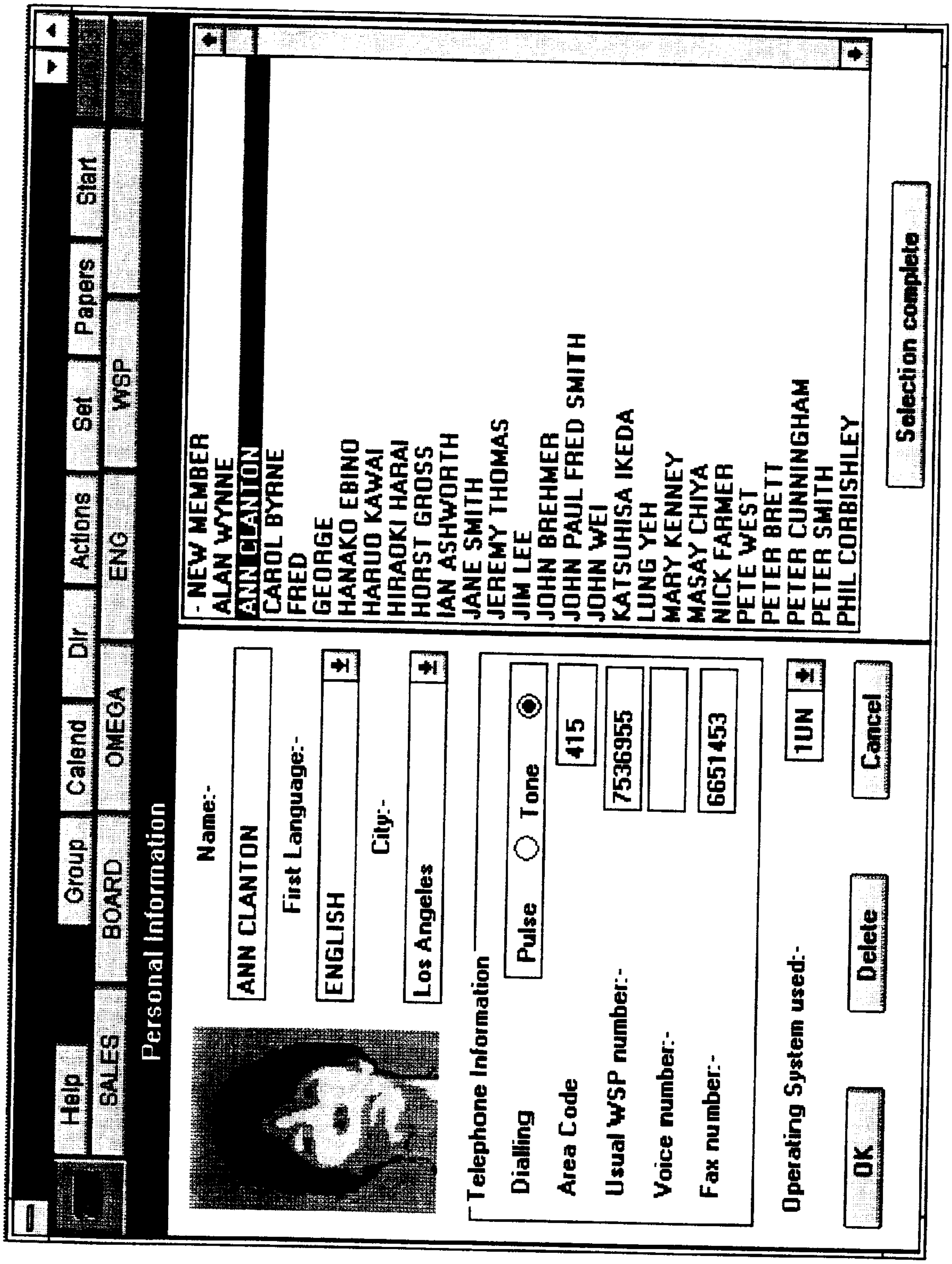
Help
Group
Calend
Dir
Actions
Set
Papers
Start
SALES
BOARD
OMEGA
ENG
WSP
Personal Information
Name:-
ANN CLANTON
First Language:-
ENGLISH
City:-
Los Angeles
Telephone Information
Dialling
Pulse
Tone
Area Code
415
Usual WSP number:-
7536955
Voice number:-
Fax number:-
6651453
Operating System used:-
1UN
OK
Delete
Cancel
- NEW MEMBER
ALAN WYNNE
ANN CLANTON
CAROL BYRNE
FRED
GEORGE
HANAKO EBINO
HARUO KAWAI
HIRAOKI HARAI
HORST GROSS
IAN ASHWORTH
JANE SMITH
JEREMY THOMAS
JIM LEE
JOHN BREHMER
JOHN PAUL FRED SMITH
JOHN WEI
KATSUHISA IKEDA
LUNG YEH
MARY KENNEY
MASAY CHIYA
NICK FARMER
PETE WEST
PETER BRETT
PETER CUNNINGHAM
PETER SMITH
PHIL CORBISHLEY
Selection complete

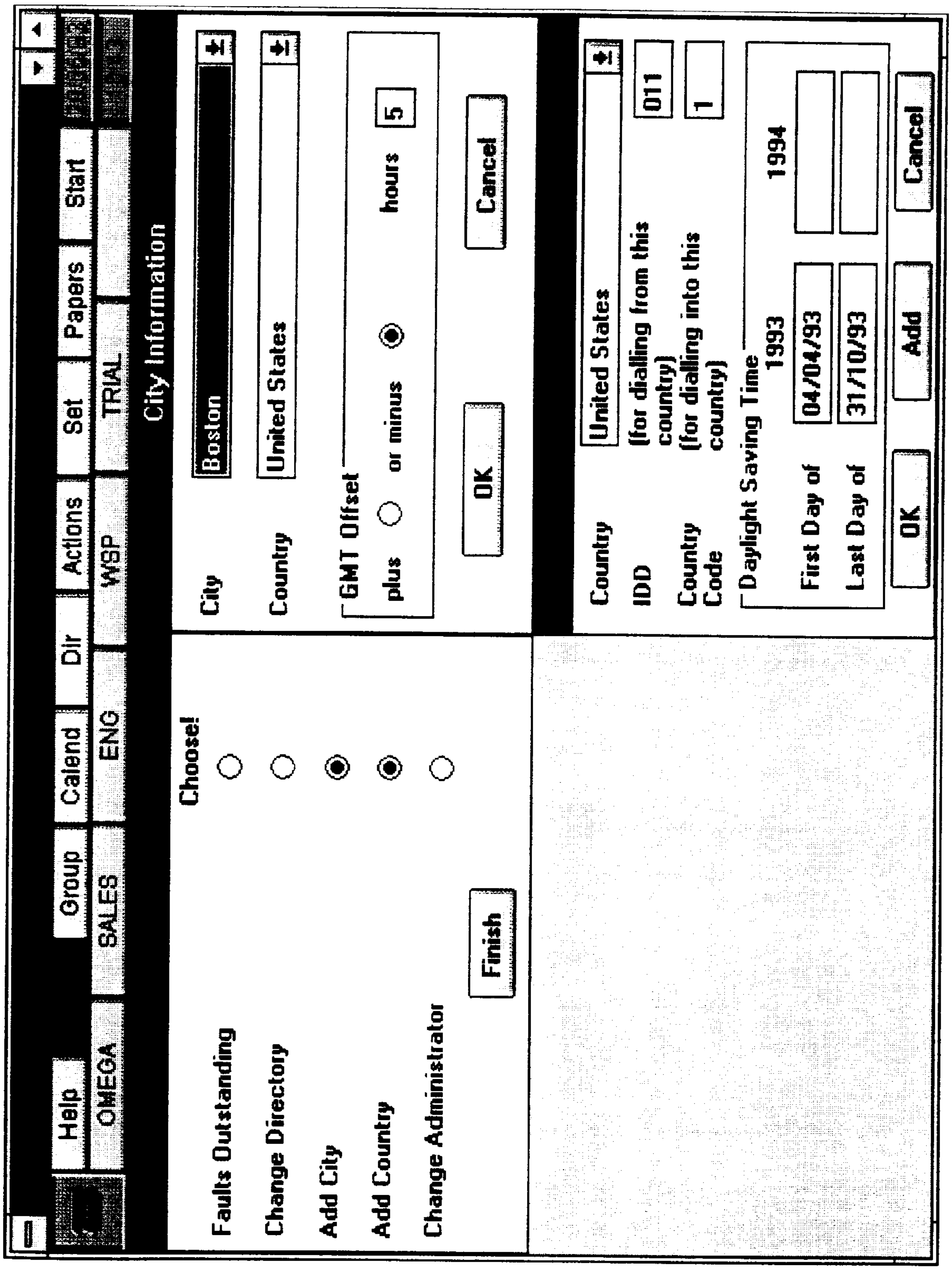
Help
Group
Calend
Dir
Actions
Set
Papers
Start
OMEGA
SALES
ENG
WSP
TRIAL
City Information
Faults Outstanding
Change Directory
Add City
Add Country
Change Administrator
Choose!
Finish
City
Boston
Country
United States
GMT Offset
plus
or minus
hours
5
OK
Cancel
Country
United States
IDD
(for dialling from this country)
011
Country Code
(for dialling into this country)
1
Daylight Saving Time
1993
1994
First Day of
04/04/93
Last Day of
31/10/93
OK
Add
Cancel

FIG. 10.

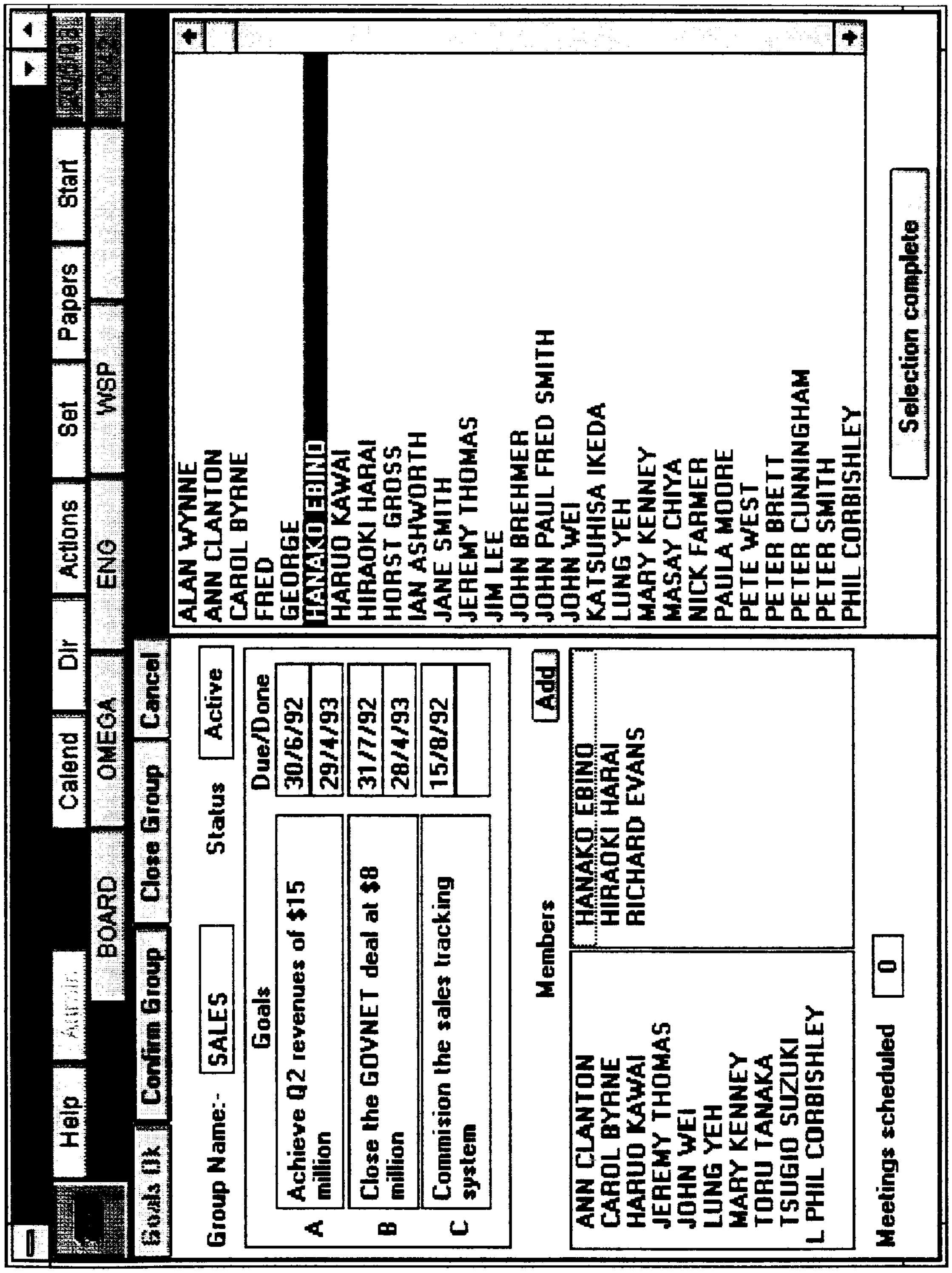
Help
Admin
Calend
Dir
Actions
Set
Papers
Start
BOARD
OMEGA
ENG
WSP
Goals Ok
Confirm Group
Close Group
Cancel
Group Name:-
SALES
Status
Active
Goals
Due/Done
A
Achieve Q2 revenues of $15 million
30/6/92
29/4/93
B
Close the GOVNET deal at $8 million
31/7/92
28/4/93
C
Commision the sales tracking system
15/8/92
Members
Add
ANN CLANTON
CAROL BYRNE
HARUO KAWAI
JEREMY THOMAS
JOHN WEI
LUNG YEH
MARY KENNEY
TORU TANAKA
TSUGIO SUZUKI
L PHIL CORBISHLEY
HANAKO EBINO
HIRAOKI HARAI
RICHARD EVANS
Meetings scheduled
0
ALAN WYNNE
ANN CLANTON
CAROL BYRNE
FRED
GEORGE
HANAKO EBINO
HARUO KAWAI
HIRAOKI HARAI
HORST GROSS
IAN ASHWORTH
JANE SMITH
JEREMY THOMAS
JIM LEE
JOHN BREHMER
JOHN PAUL FRED SMITH
JOHN WEI
KATSUHISA IKEDA
LUNG YEH
MARY KENNEY
MASAY CHIYA
NICK FARMER
PAULA MOORE
PETE WEST
PETER BRETT
PETER CUNNINGHAM
PETER SMITH
PHIL CORBISHLEY
Selection complete

FIG. 11.

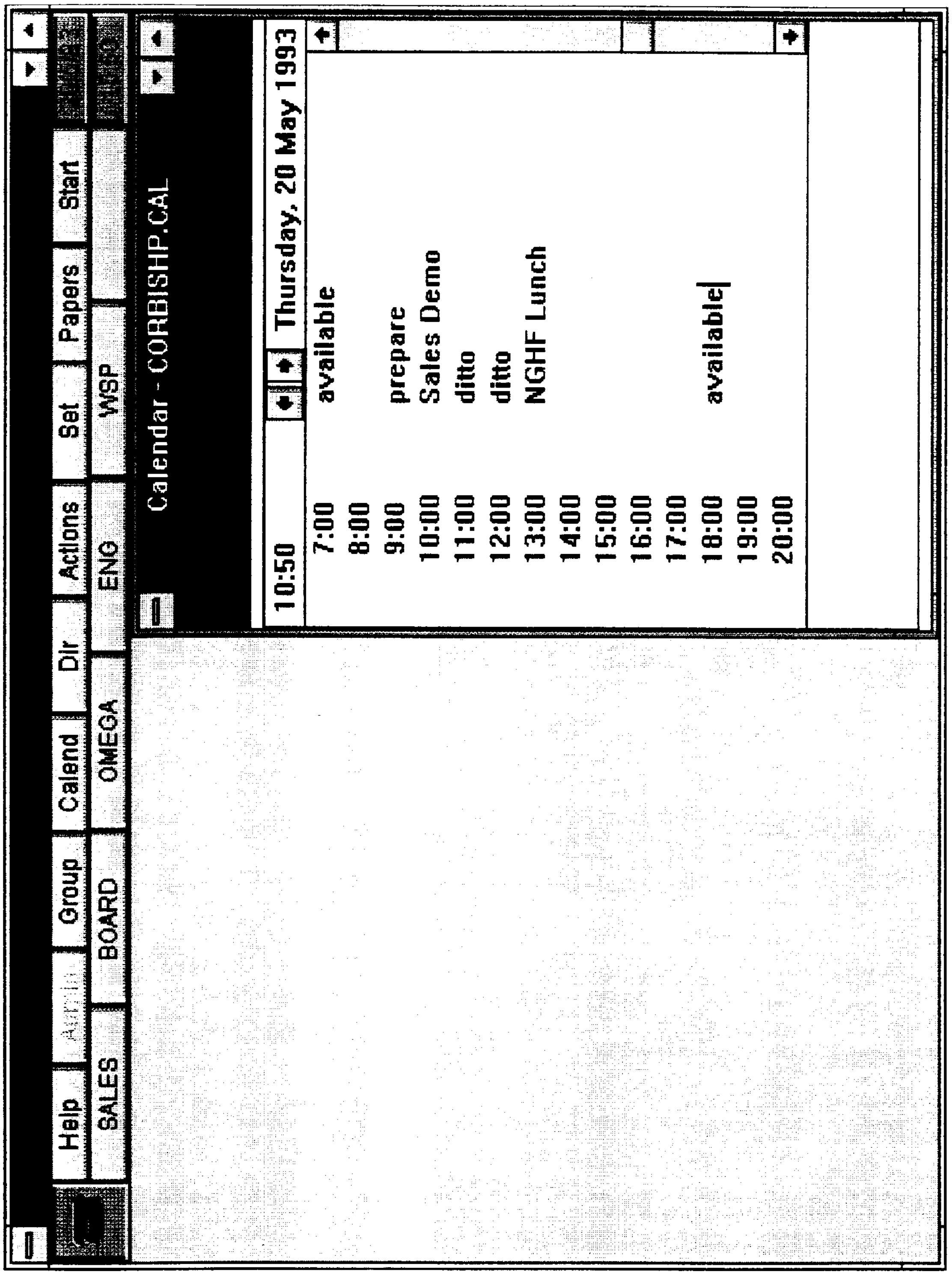
Help
Admin
Group
Calend
Dir
Actions
Set
Papers
Start
SALES
BOARD
OMEGA
ENG
WSP
Calendar - CORBISHP.CAL
10:50
Thursday, 20 May 1993
7:00 available
8:00
9:00 prepare
10:00 Sales Demo
11:00 ditto
12:00 ditto
13:00 NGHF Lunch
14:00
15:00
16:00
17:00
18:00 available
19:00
20:00

FIG. 12.

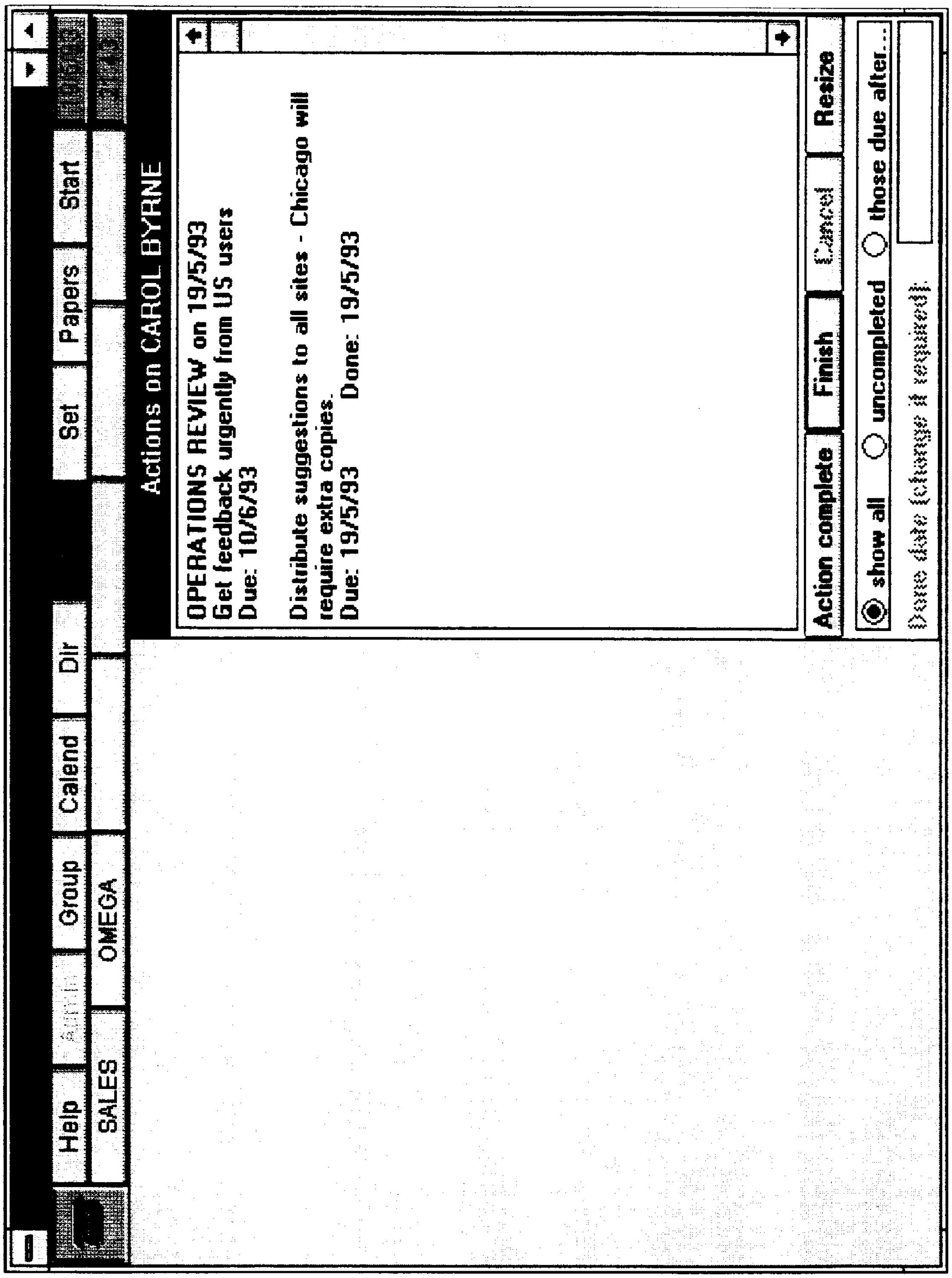
Help
Admin
Group
Calend
Dir
Set
Papers
Start
SALES
OMEGA
Actions on CAROL BYRNE
OPERATIONS REVIEW on 19/5/93
Get feedback urgently from US users
Due: 10/6/93
Distribute suggestions to all sites - Chicago will require extra copies.
Due: 19/5/93 Done: 19/5/93
Action complete
Finish
Cancel
Resize
show all
uncompleted
those due after...
Done date (change if required):

FIG. 13.

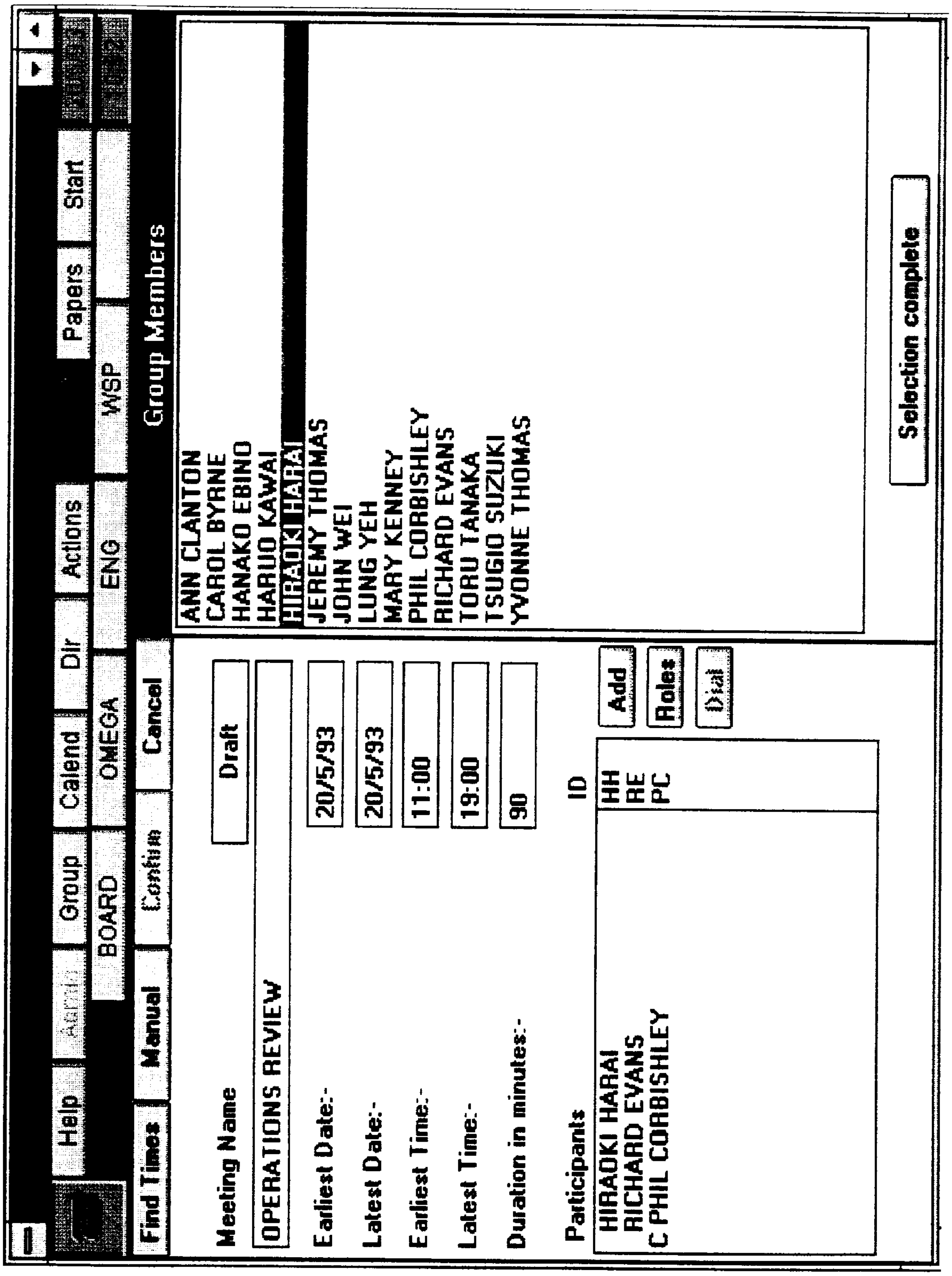
Help
Admin
Group
Calend
Dir
Actions
Papers
Start
BOARD
OMEGA
ENG
WSP
Find Times
Manual
Confirm
Cancel
Group Members
Meeting Name
Draft
OPERATIONS REVIEW
Earliest Date:-
20/5/93
Latest Date:-
20/5/93
Earliest Time:-
11:00
Latest Time:-
19:00
Duration in minutes:-
90
Participants
ID
HIRAOKI HARAI
RICHARD EVANS
C PHIL CORBISHLEY
HH
RE
PC
Add
Roles
Dial
ANN CLANTON
CAROL BYRNE
HANAKO EBINO
HARUO KAWAI
HIRAOKI HARAI
JEREMY THOMAS
JOHN WEI
LUNG YEH
MARY KENNEY
PHIL CORBISHLEY
RICHARD EVANS
TORU TANAKA
TSUGIO SUZUKI
YVONNE THOMAS
Selection complete

FIG. 14.

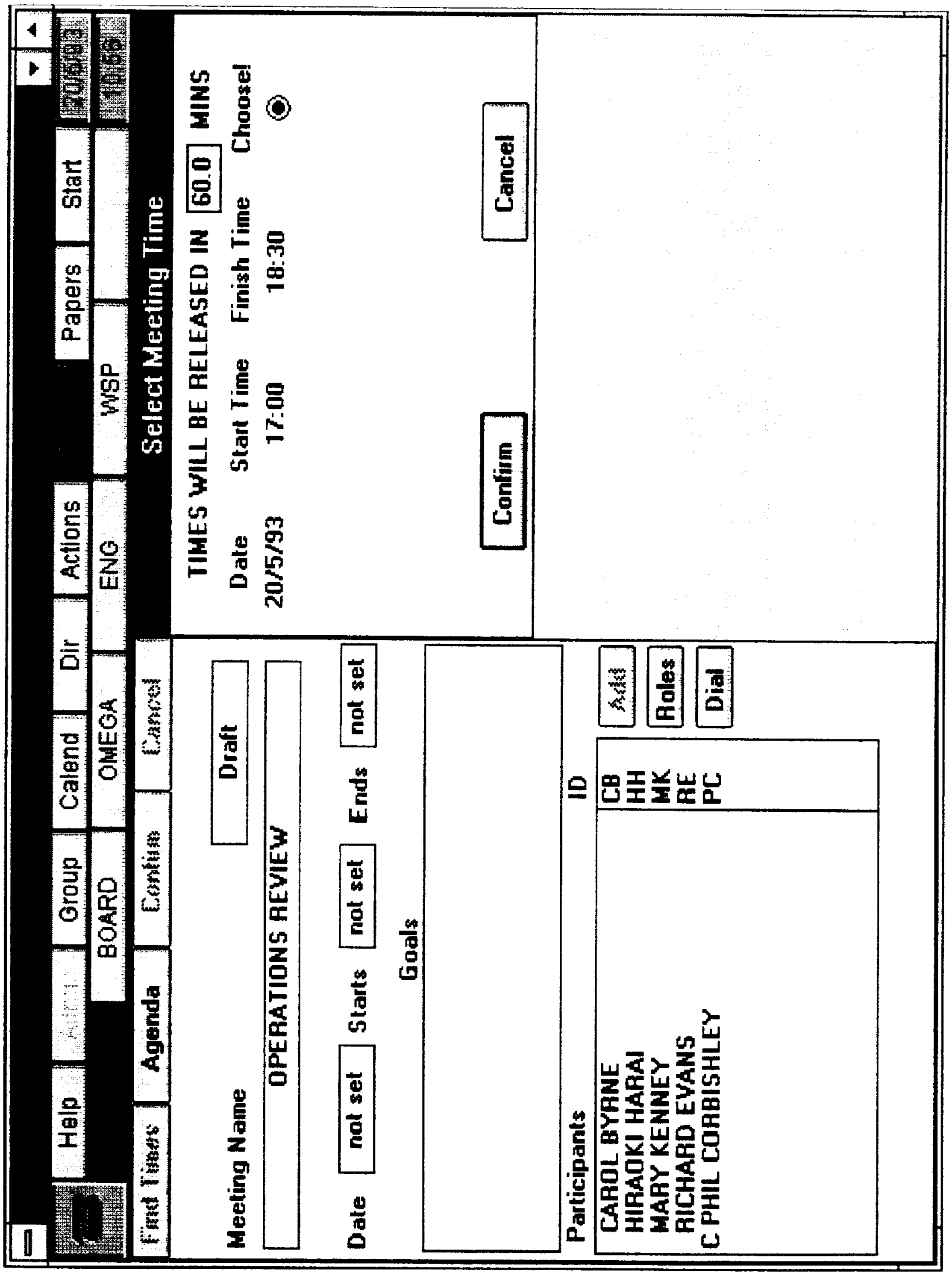

Help
Group
Calend
Dir
Actions
Papers
Start
BOARD
OMEGA
ENG
WSP
Find Times
Agenda
Confirm
Cancel
Select Meeting Time
TIMES WILL BE RELEASED IN 60.0 MINS
Date
Start Time
Finish Time
Choose!
20/5/93
17:00
18:30
Confirm
Cancel
Meeting Name
Draft
OPERATIONS REVIEW
Date
not set
Starts
not set
Ends
not set
Goals
Participants
ID
CAROL BYRNE
HIRAOKI HARAI
MARY KENNEY
RICHARD EVANS
C PHIL CORBISHLEY
CB
HH
MK
RE
PC
Add
Roles
Dial


FIG. 15.

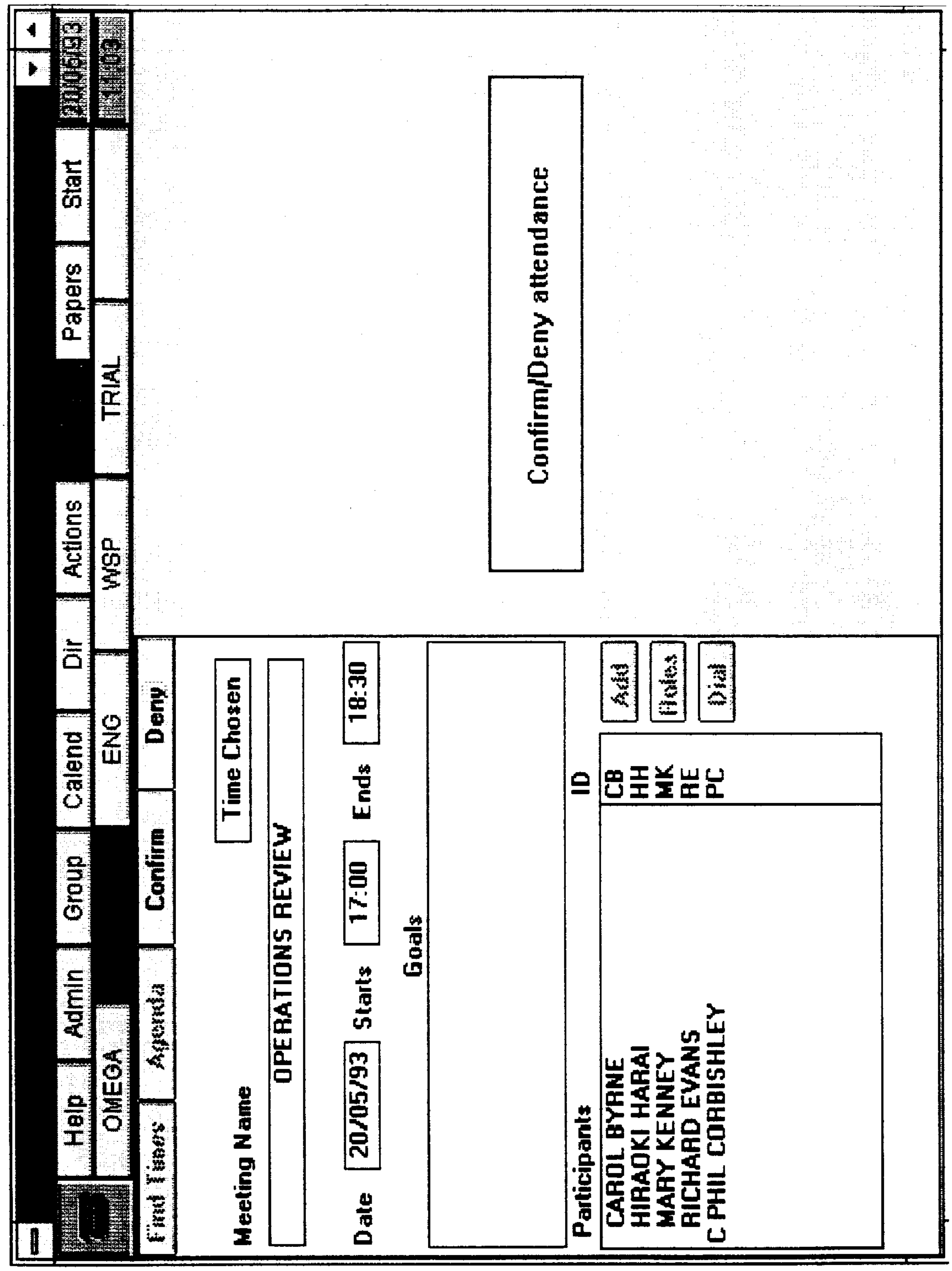

Help
Admin
Group
Calend
Dir
Actions
Papers
Start
OMEGA
ENG
WSP
TRIAL
Find Times
Agenda
Confirm
Deny
Meeting Name
Time Chosen
OPERATIONS REVIEW
Date
20/05/93
Starts
17:00
Ends
18:30
Goals
Participants
ID
CAROL BYRNE
HIRAOKI HARAI
MARY KENNEY
RICHARD EVANS
C PHIL CORBISHLEY
CB
HH
MK
RE
PC
Add
Delete
Dial
Confirm/Deny attendance


FIG. 16.

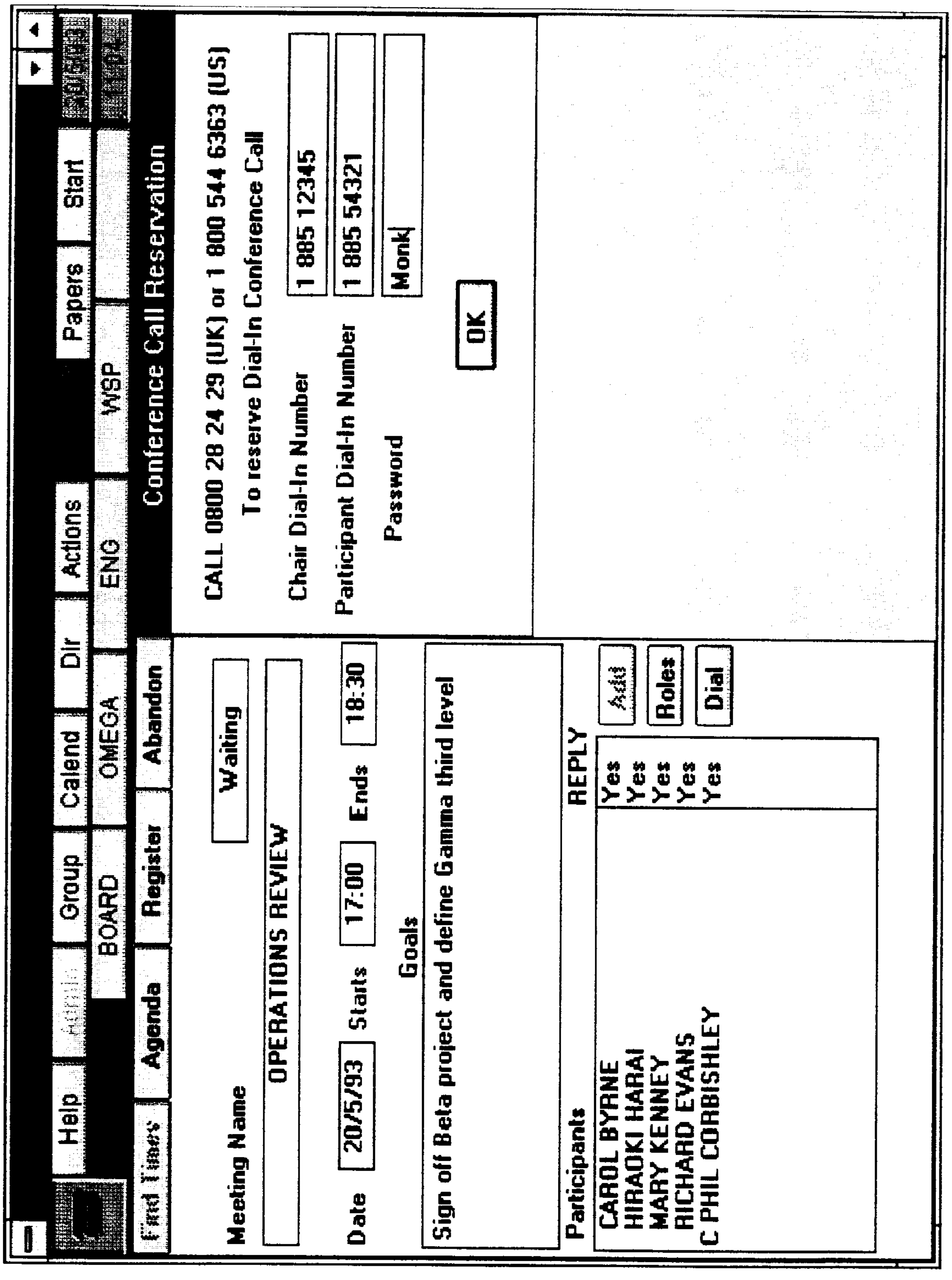

Help
Admin
Group
Calend
Dir
Actions
Papers
Start
BOARD
OMEGA
ENG
WSP
Find Times
Agenda
Register
Abandon
Meeting Name
Waiting
OPERATIONS REVIEW
Date
20/5/93
Starts
17:00
Ends
18:30
Goals
Sign off Beta project and define Gamma third level
Participants
REPLY
CAROL BYRNE
HIRAOKI HARAI
MARY KENNEY
RICHARD EVANS
C PHIL CORBISHLEY
Yes
Yes
Yes
Yes
Yes
Add
Roles
Dial
Conference Call Reservation
CALL 0800 28 24 29 (UK) or 1 800 544 6363 (US)
To reserve Dial-In Conference Call
Chair Dial-In Number
1 885 12345
Participant Dial-In Number
1 885 54321
Password
Monk
OK


FIG. 17.

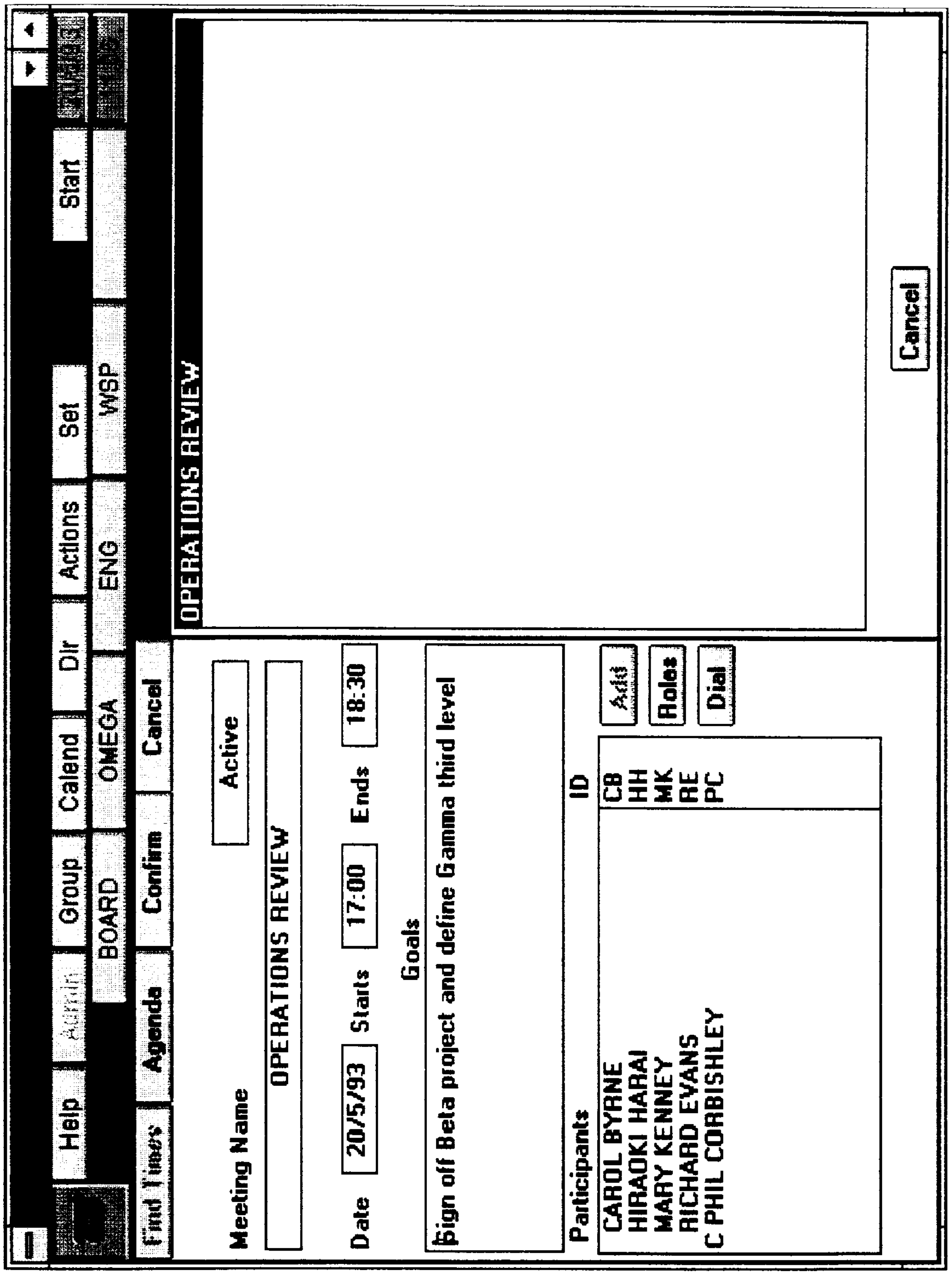
Help
Admin
Group
Calend
Dir
Actions
Set
Start
BOARD
OMEGA
ENG
WSP
Find Times
Agenda
Confirm
Cancel
Meeting Name
Active
OPERATIONS REVIEW
Date
20/5/93
Starts
17:00
Ends
18:30
Goals
Sign off Beta project and define Gamma third level
Participants
ID
CAROL BYRNE
HIRAOKI HARAI
MARY KENNEY
RICHARD EVANS
C PHIL CORBISHLEY
CB
HH
MK
RE
PC
Add
Roles
Dial
OPERATIONS REVIEW
Cancel

FIG. 18.

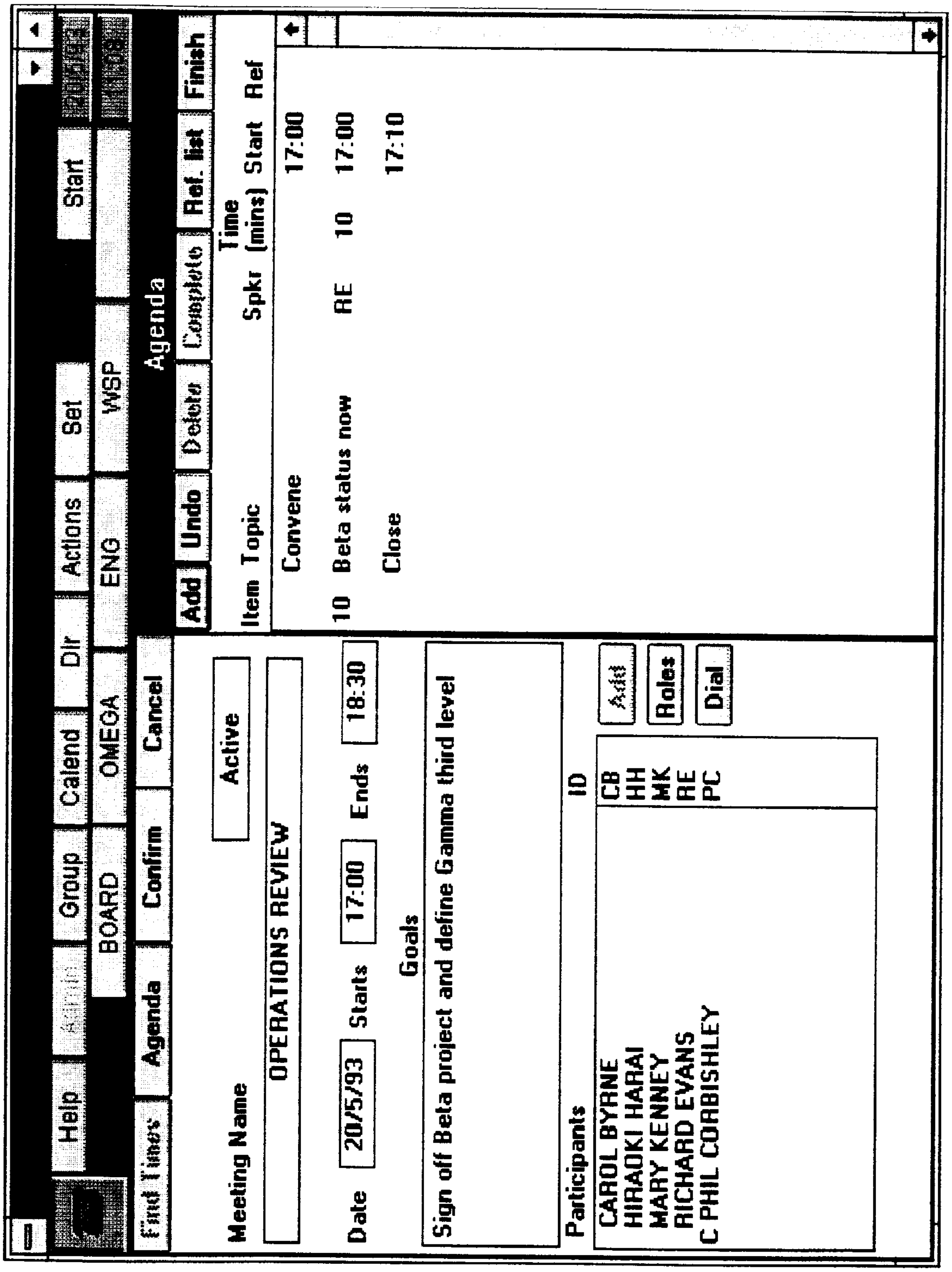
Help
Admin
Group
Calend
Dir
Actions
Set
Start
BOARD
OMEGA
ENG
WSP
Find Times
Agenda
Confirm
Cancel
Meeting Name
Active
OPERATIONS REVIEW
Date
20/5/93
Starts
17:00
Ends
18:30
Goals
Sign off Beta project and define Gamma third level
Participants
ID
CAROL BYRNE
HIRAOKI HARAI
MARY KENNEY
RICHARD EVANS
C PHIL CORBISHLEY
CB
HH
MK
RE
PC
Add
Roles
Dial
Agenda
Add
Undo
Delete
Complete
Ref. list
Finish
Item Topic
Spkr
Time (mins)
Start
Ref
Convene
17:00
10 Beta status now
RE
10
17:00
Close
17:10

FIG.19.

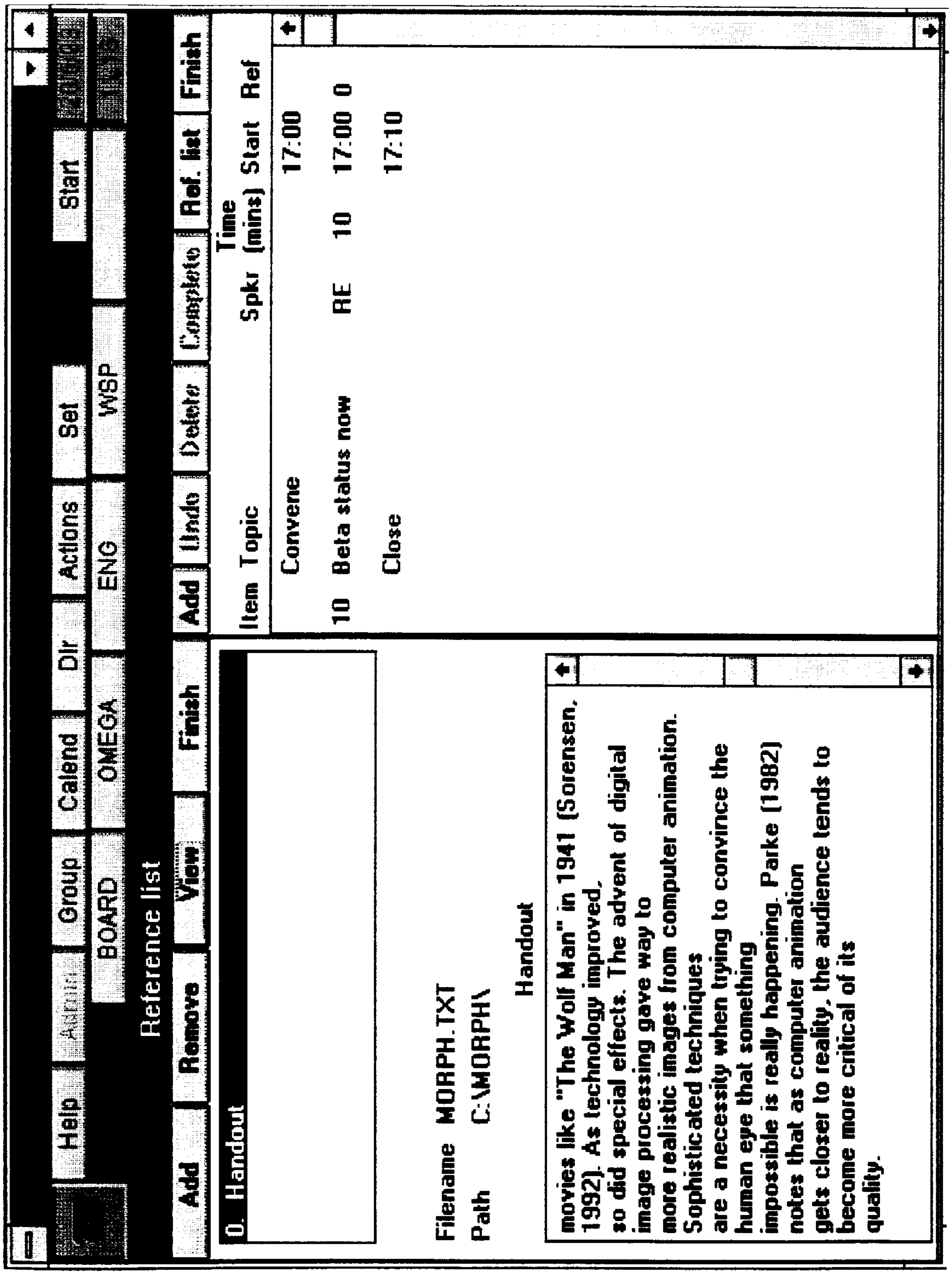
Help
Admin
Group
Calend
Dir
Actions
Set
Start
BOARD
OMEGA
ENG
WSP
Reference list
Add
Remove
View
Finish
0. Handout
Filename MORPH.TXT
Path C:\MORPH\
Handout
movies like "The Wolf Man" in 1941 (Sorensen, 1992). As technology improved, so did special effects. The advent of digital image processing gave way to more realistic images from computer animation. Sophisticated techniques are a necessity when trying to convince the human eye that something impossible is really happening. Parke (1982) notes that as computer animation gets closer to reality, the audience tends to become more critical of its quality.
Add
Undo
Delete
Complete
Ref. list
Finish
Item Topic
Spkr
Time (mins)
Start
Ref
Convene 17:00
10 Beta status now RE 10 17:00 0
Close 17:10

FIG. 20.

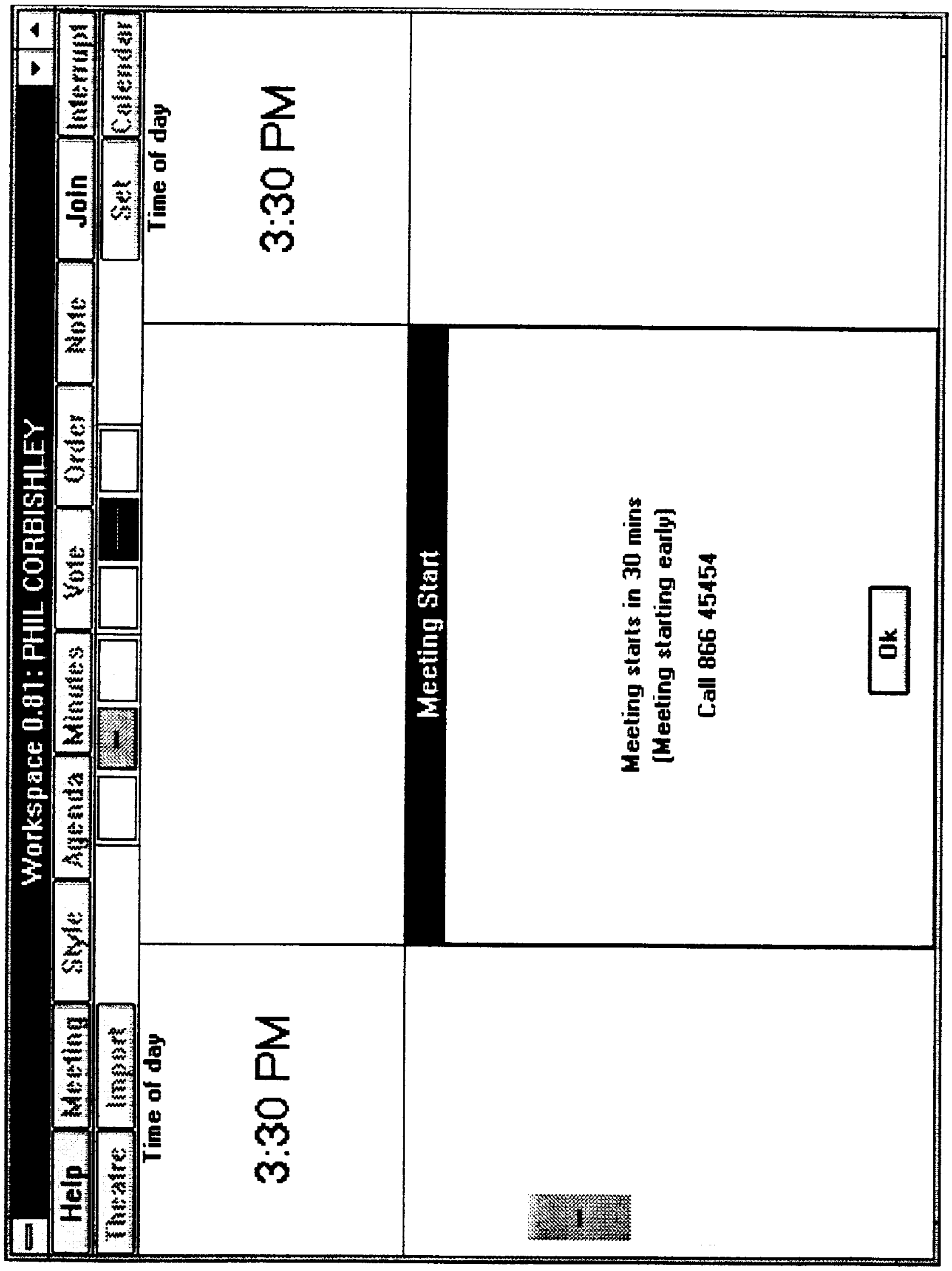
Workspace 0.81: PHIL CORBISHLEY
Help
Meeting
Style
Agenda
Minutes
Vote
Order
Note
Join
Interrupt
Theatre
Import
Set
Calendar
Time of day
3:30 PM
Time of day
3:30 PM
Meeting Start
Meeting starts in 30 mins
(Meeting starting early)
Call 866 45454
Ok

FIG. 21.

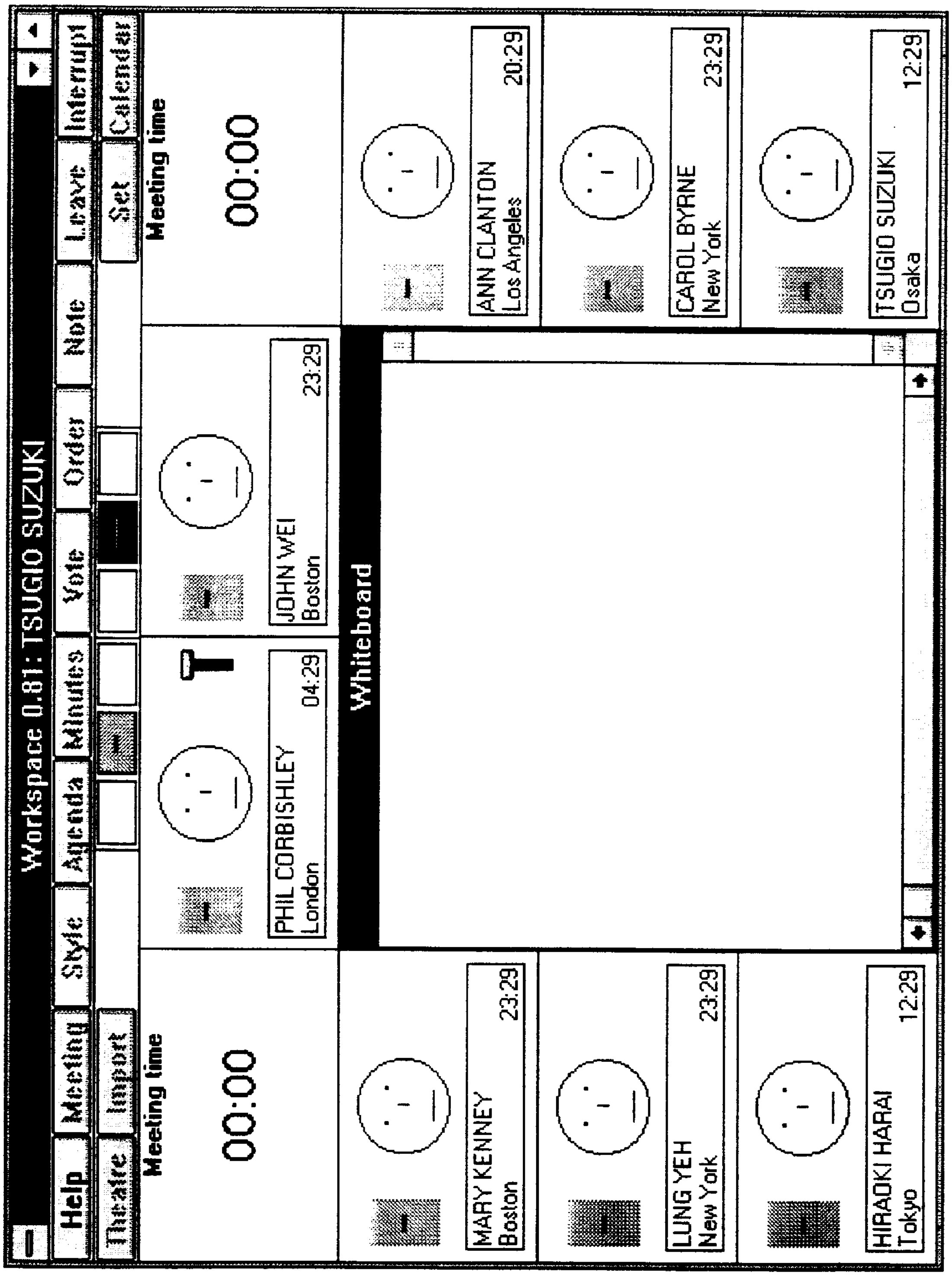

Workspace 0.81: TSUGIO SUZUKI
Help
Meeting
Style
Agenda
Minutes
Vote
Order
Note
Leave
Interrupt
Theatre
Import
Set
Calendar
Meeting time
00:00
Meeting time
00:00
PHIL CORBISHLEY
London
04:29
JOHN WEI
Boston
23:29
MARY KENNEY
Boston
23:29
LUNG YEH
New York
23:29
HIRAOKI HARAI
Tokyo
12:29
ANN CLANTON
Los Angeles
20:29
CAROL BYRNE
New York
23:29
TSUGIO SUZUKI
Osaka
12:29
Whiteboard


FIG. 22.

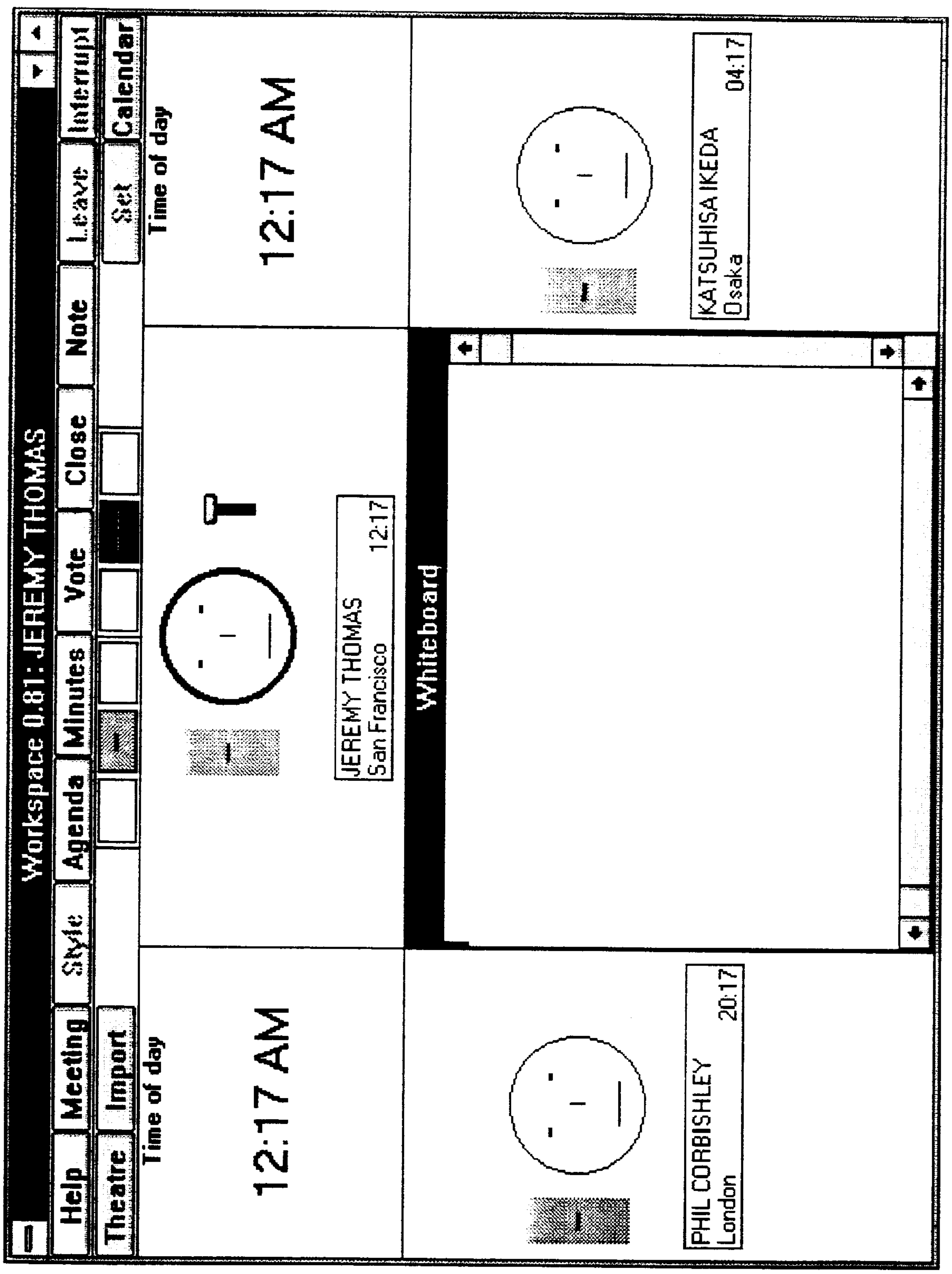

Workspace 0.81: JEREMY THOMAS
Help
Meeting
Style
Agenda
Minutes
Vote
Close
Note
Leave
Interrupt
Theatre
Import
Set
Calendar
Time of day
12:17 AM
Time of day
12:17 AM
JEREMY THOMAS
San Francisco
12:17
Whiteboard
PHIL CORBISHLEY
London
20:17
KATSUHISA IKEDA
Osaka
04:17


FIG. 23.

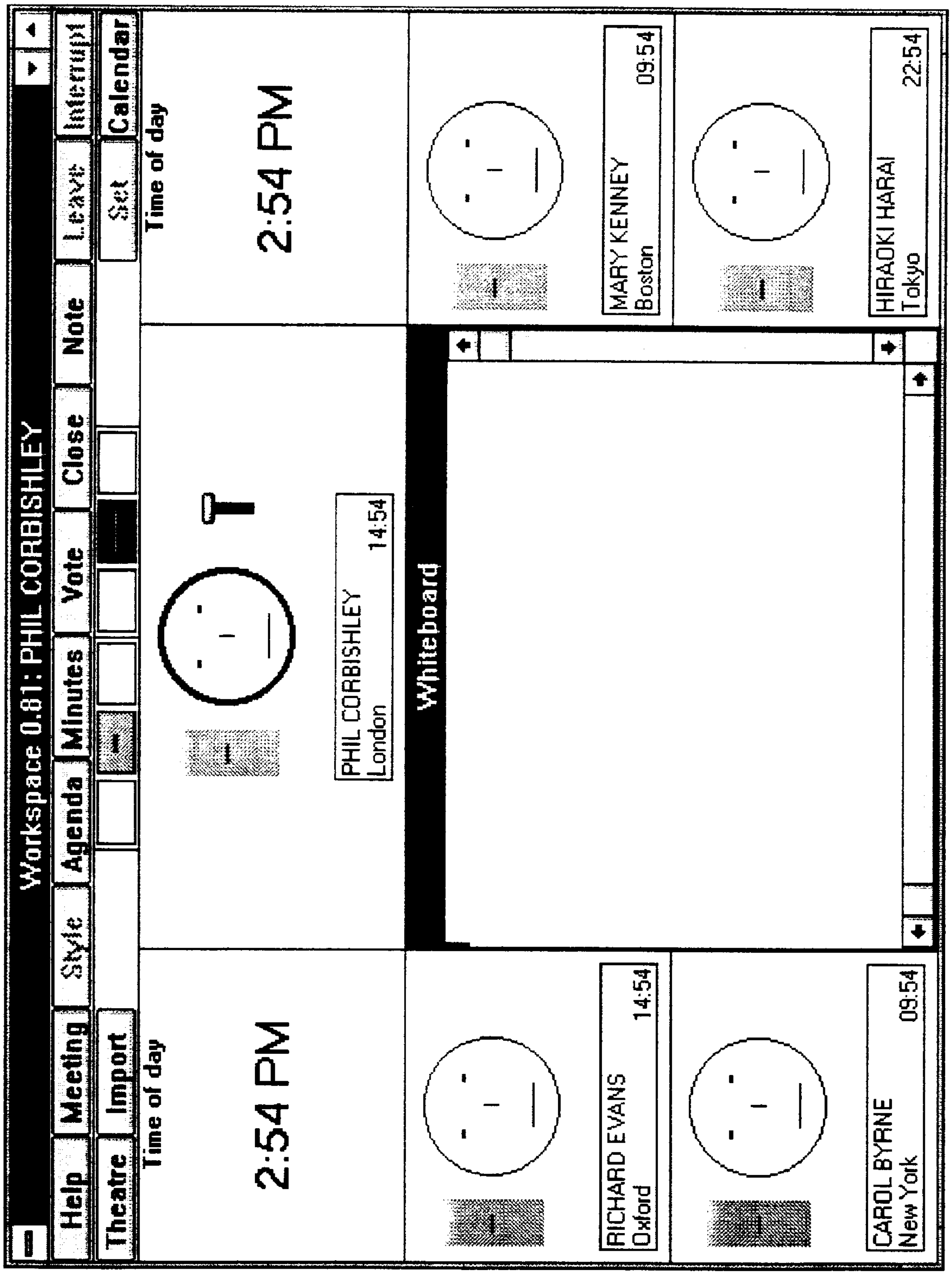
Workspace 0.81: PHIL CORBISHLEY
Help
Meeting
Style
Agenda
Minutes
Vote
Close
Note
Leave
Interrupt
Theatre
Import
Set
Calendar
Time of day
2:54 PM
RICHARD EVANS
Oxford
14:54
CAROL BYRNE
New York
09:54
PHIL CORBISHLEY
London
14:54
Whiteboard
Time of day
2:54 PM
MARY KENNEY
Boston
09:54
HIRAOKI HARAI
Tokyo
22:54

FIG. 24.

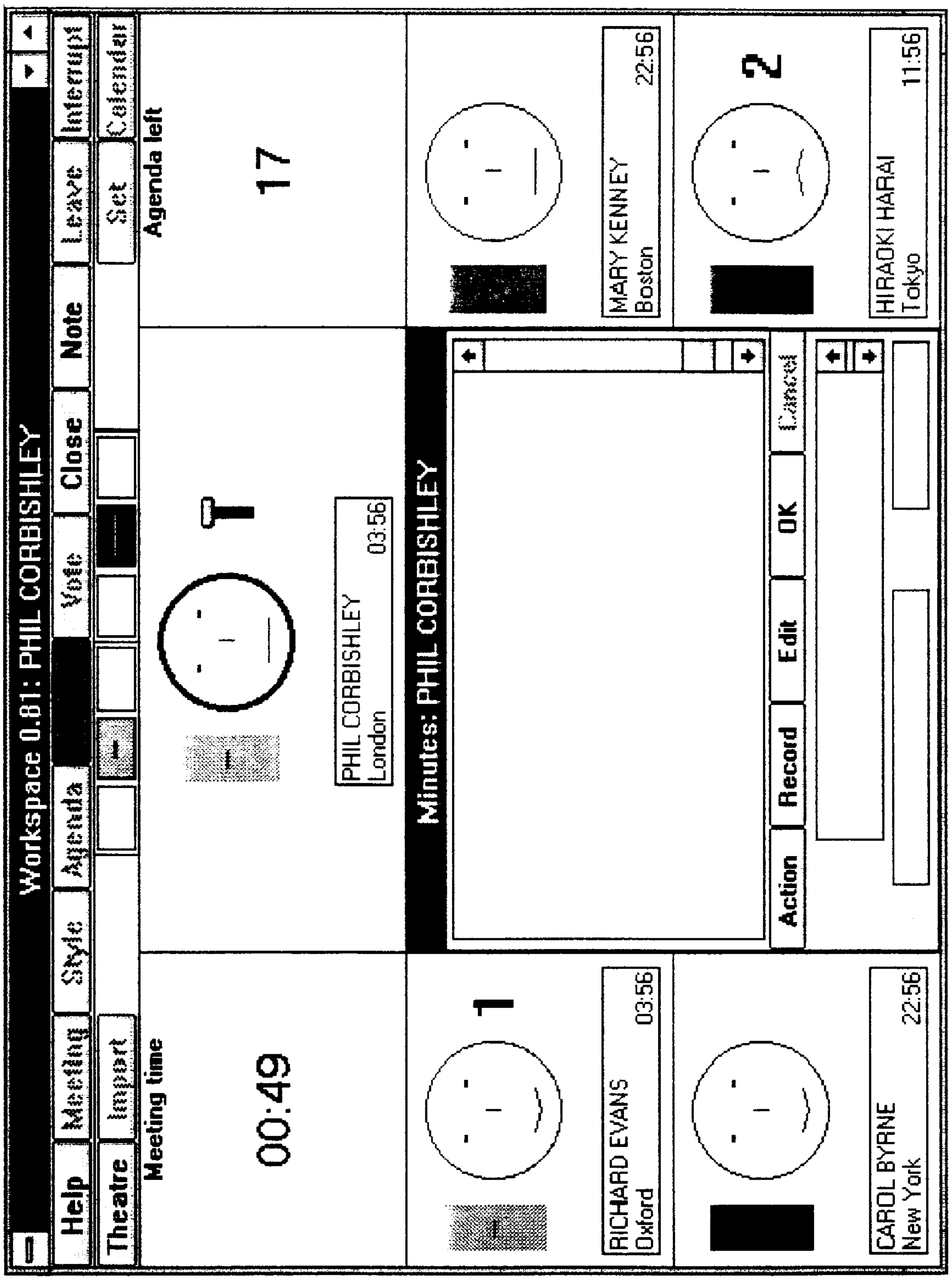
Workspace 0.81: PHIL CORBISHLEY
Help
Meeting
Style
Agenda
Vote
Close
Note
Leave
Interrupt
Theatre
Import
Set
Calendar
Meeting time
00:49
Agenda left
17
PHIL CORBISHLEY
London 03:56
Minutes: PHIL CORBISHLEY
Action
Record
Edit
OK
Cancel
1
RICHARD EVANS
Oxford 03:56
CAROL BYRNE
New York 22:56
MARY KENNEY
Boston 22:56
2
HIRAOKI HARAI
Tokyo 11:56

FIG. 25.

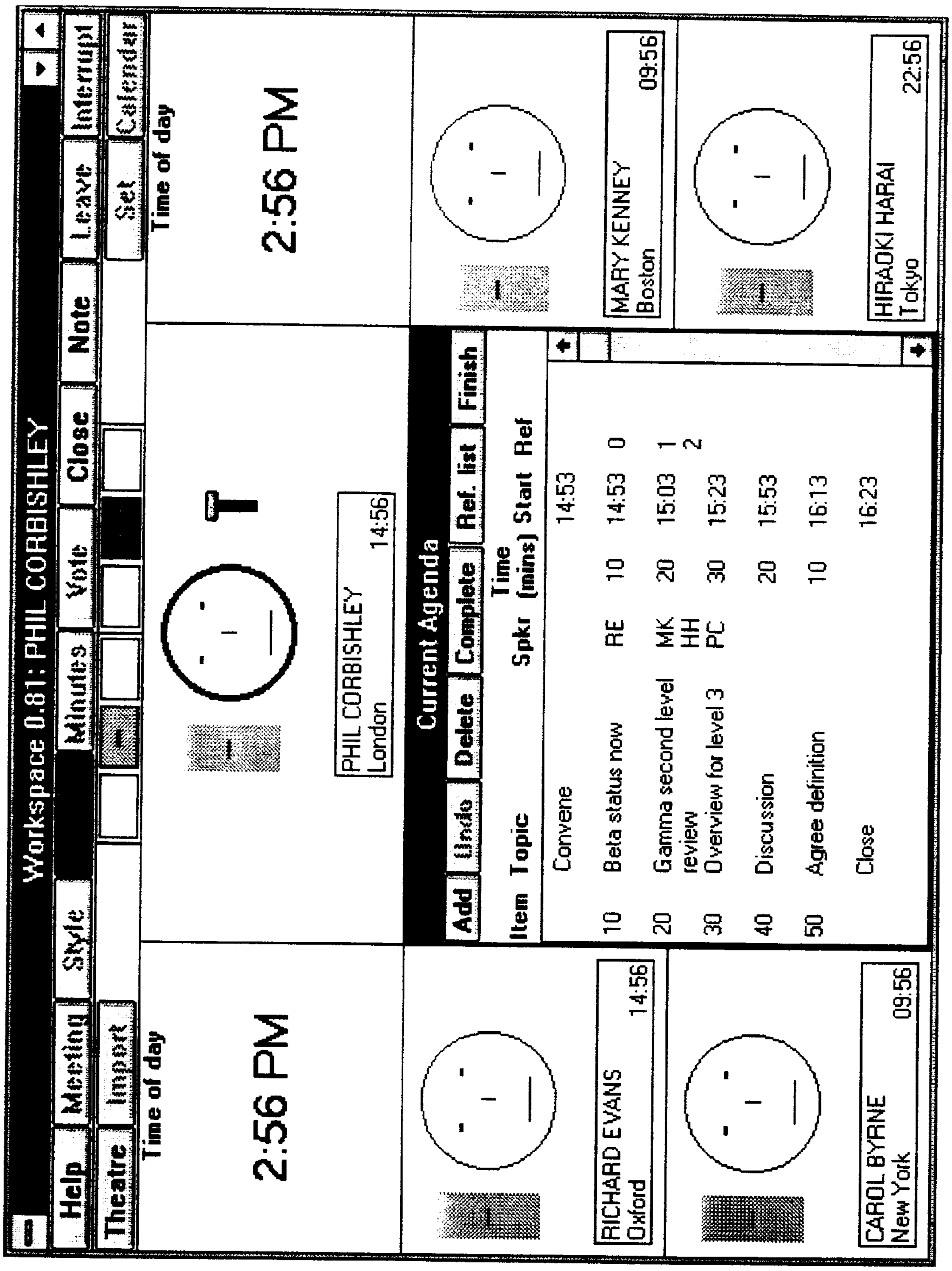
Workspace 0.81: PHIL CORBISHLEY
Help
Meeting
Style
Minutes
Vote
Close
Note
Leave
Interrupt
Theatre
Import
Set
Calendar
Time of day
2:56 PM
Time of day
2:56 PM
PHIL CORBISHLEY
London
14:56
RICHARD EVANS
Oxford
14:56
CAROL BYRNE
New York
09:56
MARY KENNEY
Boston
09:56
HIRAOKI HARAI
Tokyo
22:56
Current Agenda
Add
Undo
Delete
Complete
Ref. list
Finish
Item Topic Spkr Time (mins) Start Ref
Convene 14:53
10 Beta status now RE 10 14:53 0
20 Gamma second level review MK HH 20 15:03 1 2
30 Overview for level 3 PC 30 15:23
40 Discussion 20 15:53
50 Agree definition 10 16:13
Close 16:23

FIG. 26.

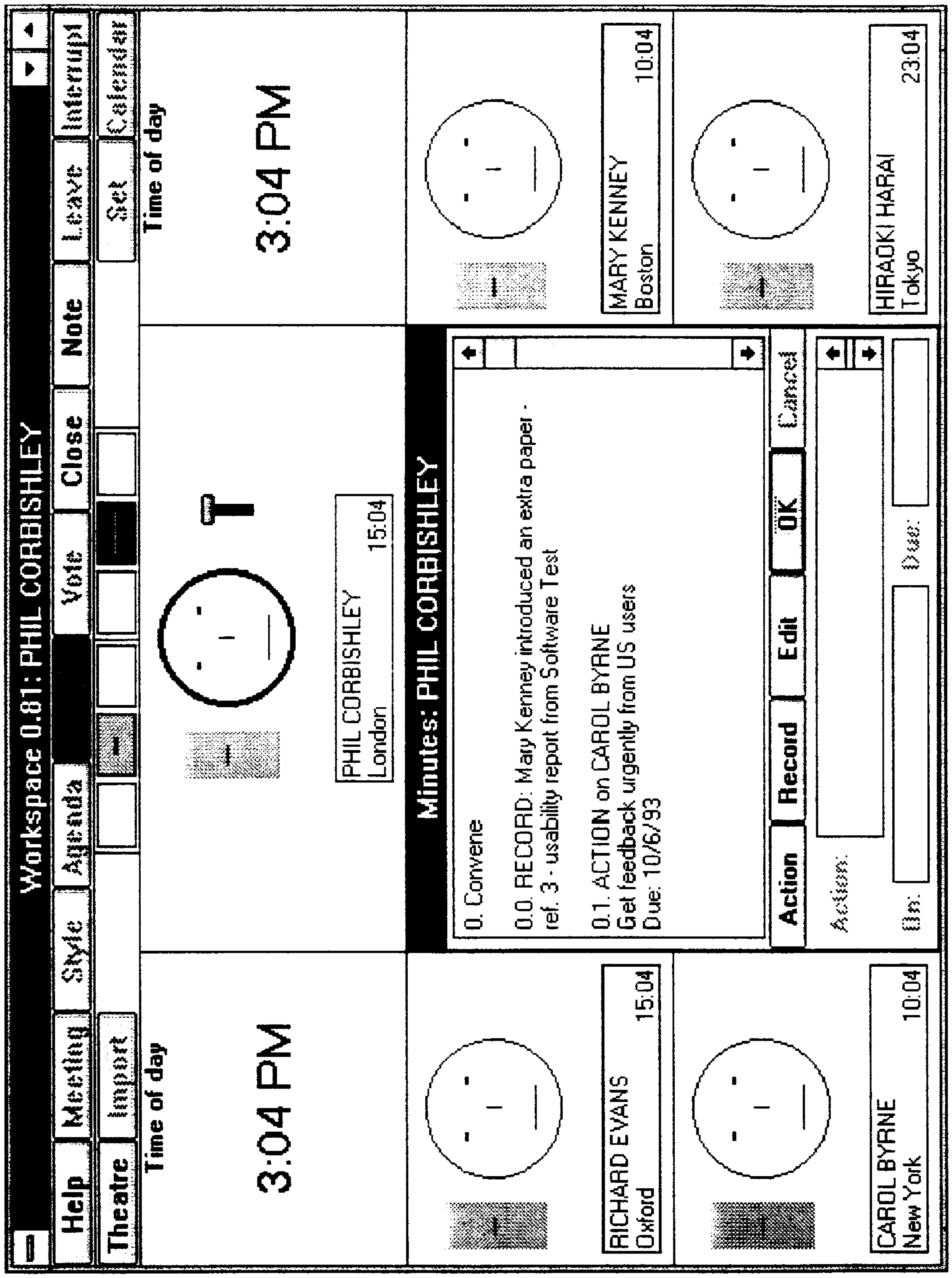

Workspace 0.81: PHIL CORBISHLEY
Help
Meeting
Style
Agenda
Vote
Close
Note
Leave
Interrupt
Theatre
Import
Set
Calendar
Time of day
3:04 PM
Time of day
3:04 PM
PHIL CORBISHLEY
London
15:04
RICHARD EVANS
Oxford
15:04
MARY KENNEY
Boston
10:04
CAROL BYRNE
New York
10:04
HIRAOKI HARAI
Tokyo
23:04
Minutes: PHIL CORBISHLEY
0. Convene
0.0. RECORD: Mary Kenney introduced an extra paper - ref. 3 - usability report from Software Test
0.1. ACTION on CAROL BYRNE
Get feedback urgently from US users
Due: 10/6/93
Action
Record
Edit
OK
Cancel
Action:
On:
Due:


FIG. 27.

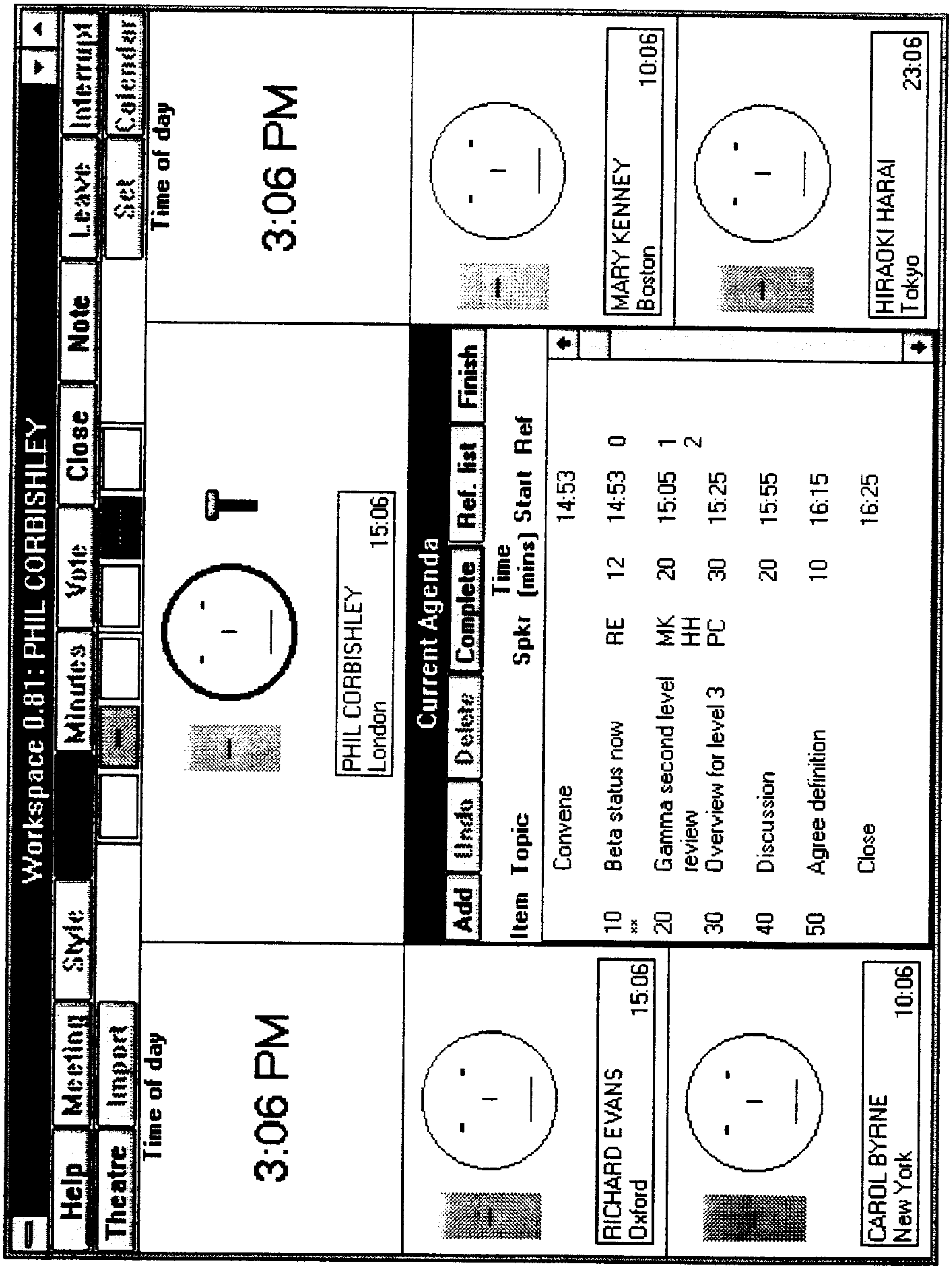

Workspace 0.81: PHIL CORBISHLEY
Help
Meeting
Style
Minutes
Vote
Close
Note
Leave
Interrupt
Theatre
Import
Set
Calendar
Time of day
3:06 PM
Time of day
3:06 PM
PHIL CORBISHLEY
London
15:06
RICHARD EVANS
Oxford
15:06
CAROL BYRNE
New York
10:06
MARY KENNEY
Boston
10:06
HIRAOKI HARAI
Tokyo
23:06
Current Agenda
Add
Undo
Delete
Complete
Ref. list
Finish
Item
Topic
Spkr
Time (mins)
Start
Ref
Convene
14:53
10
Beta status now
RE
12
14:53
0
20
Gamma second level review
MK
HH
20
15:05
1
2
30
Overview for level 3
PC
30
15:25
40
Discussion
20
15:55
50
Agree definition
10
16:15
Close
16:25


FIG. 28.

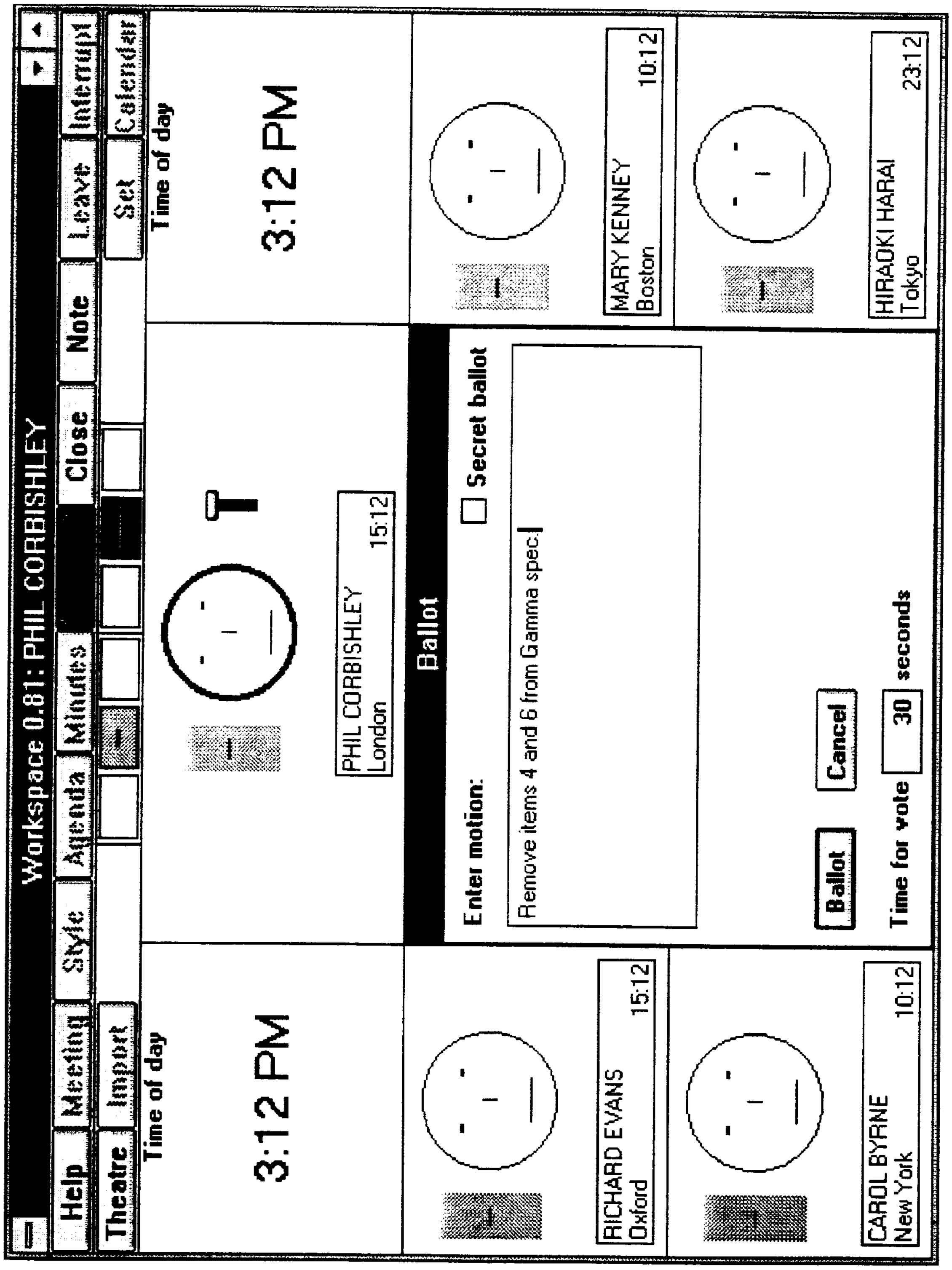
Workspace 0.81: PHIL CORBISHLEY
Help
Meeting
Style
Agenda
Minutes
Close
Note
Leave
Interrupt
Theatre
Import
Set
Calendar
Time of day
3:12 PM
Time of day
3:12 PM
PHIL CORBISHLEY
London 15:12
RICHARD EVANS
Oxford 15:12
CAROL BYRNE
New York 10:12
MARY KENNEY
Boston 10:12
HIRAOKI HARAI
Tokyo 23:12
Ballot
Enter motion:
Secret ballot
Remove items 4 and 6 from Gamma spec.
Ballot
Cancel
Time for vote
30
seconds

FIG. 29.

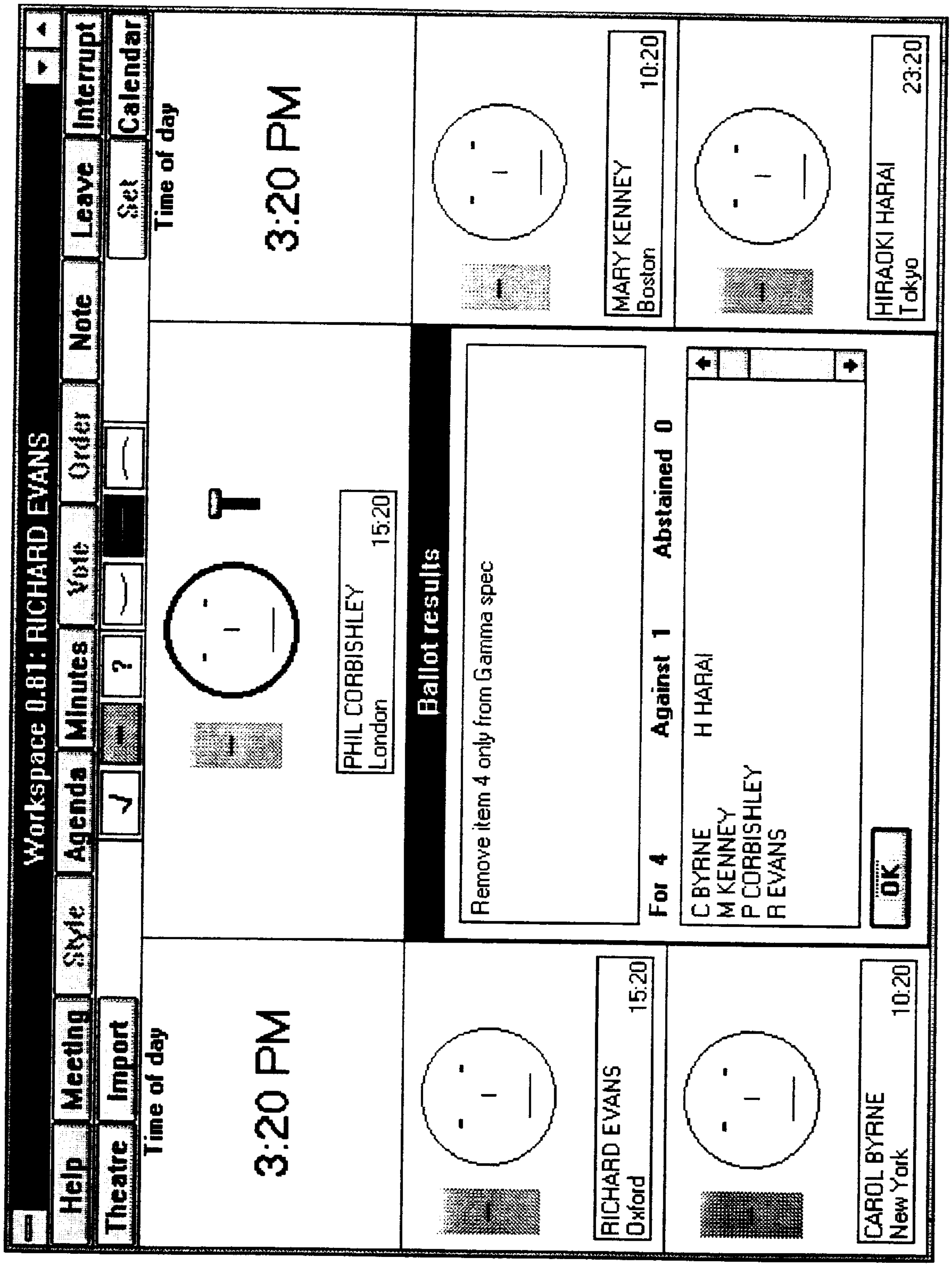

Workspace 0.81: RICHARD EVANS
Help
Meeting
Style
Agenda
Minutes
Vote
Order
Note
Leave
Interrupt
Theatre
Import
?
Set
Calendar
Time of day
3:20 PM
Time of day
3:20 PM
RICHARD EVANS
Oxford
15:20
CAROL BYRNE
New York
10:20
PHIL CORBISHLEY
London
15:20
MARY KENNEY
Boston
10:20
HIRAOKI HARAI
Tokyo
23:20
Ballot results
Remove item 4 only from Gamma spec
For 4
Against 1
Abstained 0
C BYRNE
M KENNEY
P CORBISHLEY
R EVANS
H HARAI
OK


FIG. 30.

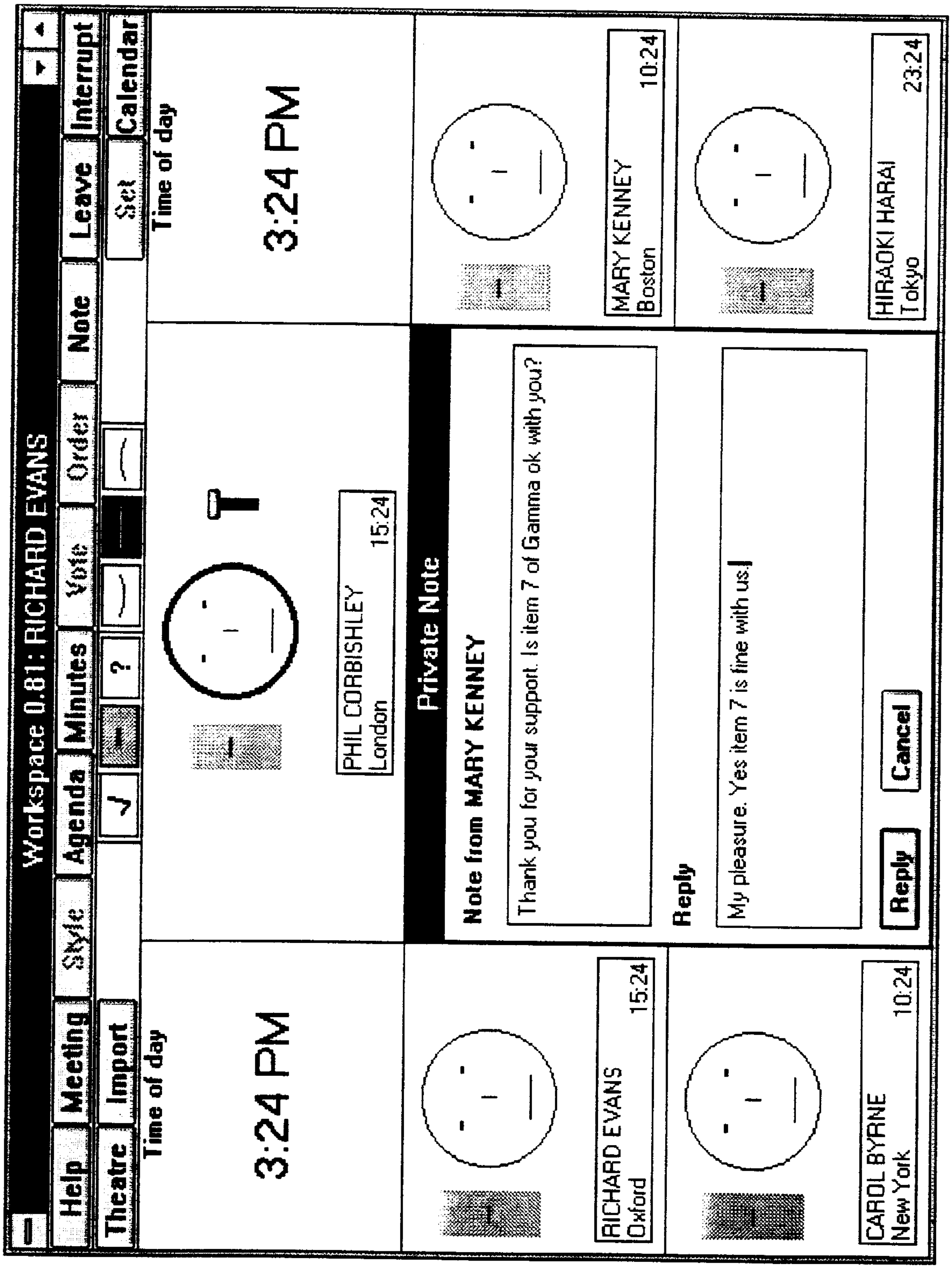
Workspace 0.81: RICHARD EVANS
Help
Meeting
Style
Agenda
Minutes
Vote
Order
Note
Leave
Interrupt
Theatre
Import
?
Set
Calendar
Time of day
3:24 PM
RICHARD EVANS
Oxford
15:24
CAROL BYRNE
New York
10:24
PHIL CORBISHLEY
London
15:24
Private Note
Note from MARY KENNEY
Thank you for your support. Is item 7 of Gamma ok with you?
Reply
My pleasure. Yes item 7 is fine with us.
Reply
Cancel
Time of day
3:24 PM
MARY KENNEY
Boston
10:24
HIRAOKI HARAI
Tokyo
23:24

FIG. 31.

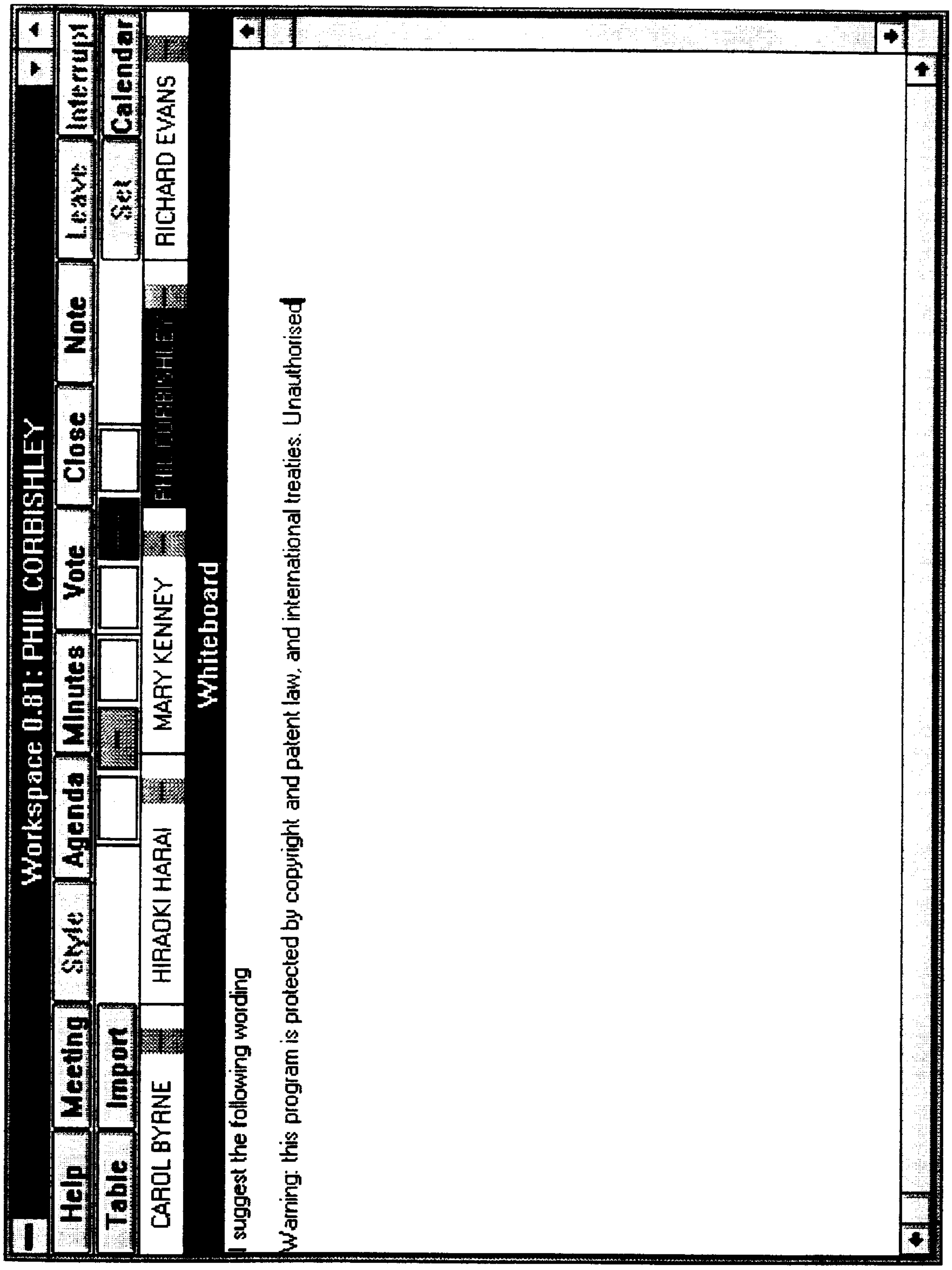
Workspace 0.81 : PHIL CORBISHLEY
Help
Meeting
Style
Agenda
Minutes
Vote
Close
Note
Leave
Interrupt
Table
Import
Set
Calendar
CAROL BYRNE
HIRAOKI HARAI
MARY KENNEY
PHIL CORBISHLEY
RICHARD EVANS
Whiteboard
I suggest the following wording
Warning: this program is protected by copyright and patent law, and international treaties. Unauthorised

FIG. 32.

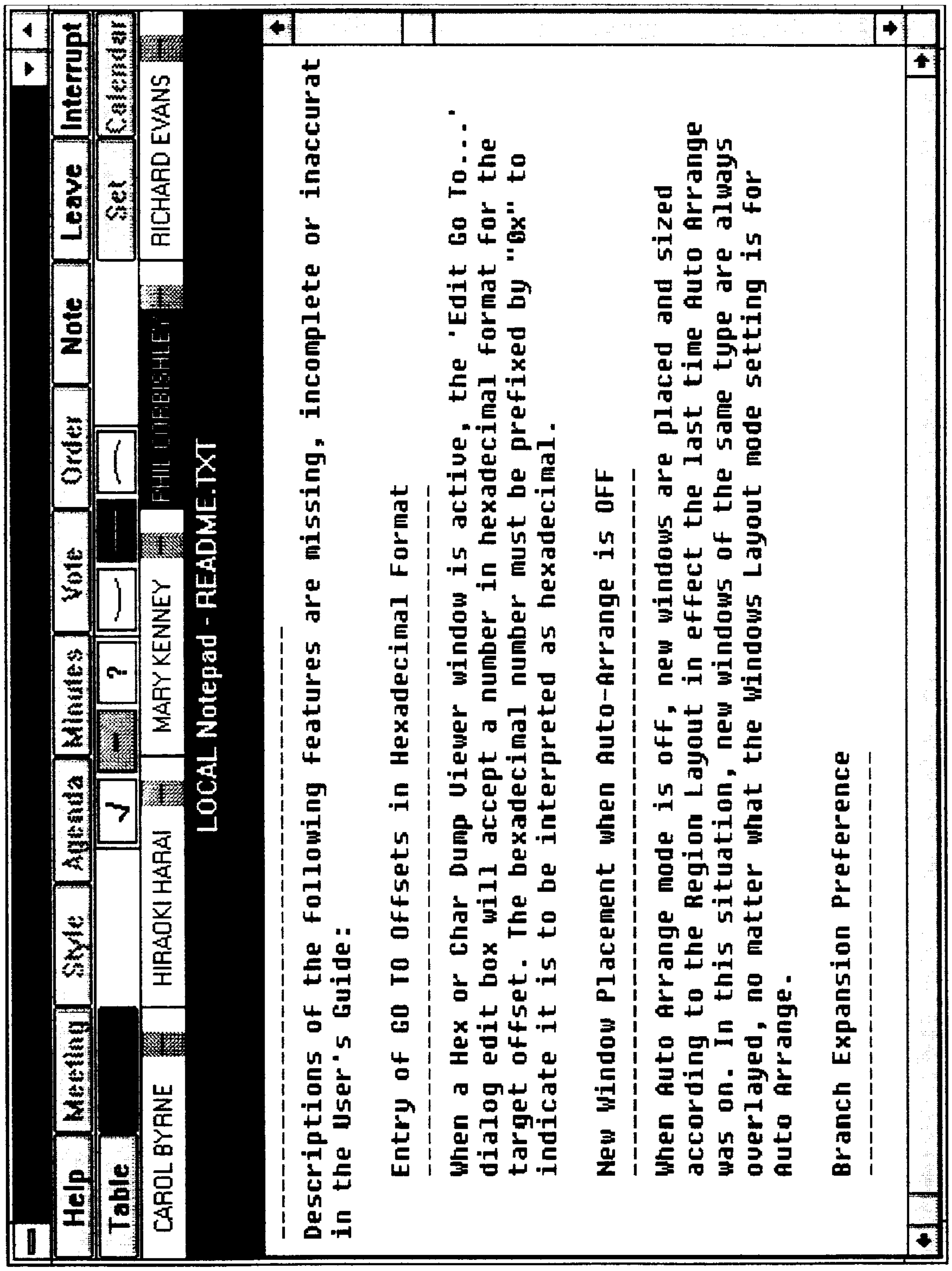
Help
Meeting
Style
Agenda
Minutes
Vote
Order
Note
Leave
Interrupt
Table
?
Set
Calendar
CAROL BYRNE
HIRAOKI HARAI
MARY KENNEY
PHIL CORBISHLEY
RICHARD EVANS
LOCAL Notepad - README.TXT
Descriptions of the following features are missing, incomplete or inaccurat
in the User's Guide:
Entry of GO TO Offsets in Hexadecimal Format
When a Hex or Char Dump Viewer window is active, the 'Edit Go To...'
dialog edit box will accept a number in hexadecimal format for the
target offset. The hexadecimal number must be prefixed by "0x" to
indicate it is to be interpreted as hexadecimal.
New Window Placement when Auto-Arrange is OFF
When Auto Arrange mode is off, new windows are placed and sized
according to the Region Layout in effect the last time Auto Arrange
was on. In this situation, new windows of the same type are always
overlayed, no matter what the Windows Layout mode setting is for
Auto Arrange.
Branch Expansion Preference

FIG. 33.